(19) Europäisches Patentamt
European Patent Office
Office européen des brevets

(11) **EP 3 880 397 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **19801253.6**

(22) Anmeldetag: **05.11.2019**

(51) Internationale Patentklassifikation (IPC):
**B23K 26/06** *(2014.01)*     **B23K 26/082** *(2014.01)*
**B23K 26/34** *(2014.01)*     **B22F 3/105** *(2006.01)*

(52) Gemeinsame Patentklassifikation (CPC):
**B23K 26/082; B22F 10/28; B22F 10/36; B22F 12/44; B22F 12/45; B23K 26/0608; B23K 26/0626; B23K 26/34; B33Y 30/00; B33Y 50/02;** B22F 10/366; B22F 12/13; B22F 12/226; B22F 12/41; B22F 12/49;     (Forts.)

(86) Internationale Anmeldenummer:
**PCT/EP2019/080184**

(87) Internationale Veröffentlichungsnummer:
**WO 2020/099173 (22.05.2020 Gazette 2020/21)**

(54) **VERFAHREN UND VORRICHTUNG ZUM BESTRAHLEN EINES MATERIALS MIT EINEM ENERGIESTRAHL**

METHOD AND APPARATUS FOR IRRADIATING A MATERIAL WITH AN ENERGY BEAM

PROCÉDÉ ET DISPOSITIF D'IRRADIATION D'UN MATÉRIAU AVEC UN FAISCEAU D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2018 DE 102018128266**

(43) Veröffentlichungstag der Anmeldung:
**22.09.2021 Patentblatt 2021/38**

(73) Patentinhaber: **EOS GmbH Electro Optical Systems**
**82152 Krailling (DE)**

(72) Erfinder:
• **WITTE, Armin**
  **81369 München (DE)**
• **HOLFELDER, Peter**
  **85375 Neufahrn bei Freising (DE)**

(74) Vertreter: **Beckord & Niedlich Patentanwälte PartG mbB**
**Marktplatz 17**
**83607 Holzkirchen (DE)**

(56) Entgegenhaltungen:
DE-A1- 102004 050 819     JP-A- S6 252 981
US-A1- 2004 129 685     US-A1- 2018 154 482

(52) Gemeinsame Patentklassifikation (CPC): (Forts.)
    B22F 12/90; Y02P 10/25

**Beschreibung**

Die Erfindung betrifft ein Verfahren zum Bestrahlen eines Materials, insbesondere in einem additiven Fertigungsprozess, mit zumindest einem Energiestrahl, wobei eine Auftrefffläche des Energiestrahls auf dem Material bewegt wird, sowie ein Verfahren zur additiven Fertigung eines Fertigungsprodukts, in dem ein solches Bestrahlungsverfahren genutzt wird. Die Erfindung betrifft weiterhin eine Bestrahlungsvorrichtung zum Bestrahlen eines Materials mit zumindest einem Energiestrahl sowie eine Vorrichtung zur additiven Fertigung von Fertigungsprodukten, welche eine solche Bestrahlungseinrichtung umfasst. Für alle diese Punkte, siehe Ansprüche 1, 2, 9, 10, 14 und 15.

Verfahren zum Bestrahlen eines Materials mit einem Energiestrahl, beispielsweise einem Laserstrahl oder dergleichen, insbesondere zum lokalen Aufschmelzen des Materials, werden in vielen Prozessen benötigt. Ein typisches Beispiel hierfür ist das Schweißen mit einem Energiestrahl bzw. Laserschweißen. Ein weiteres großes Anwendungsgebiet liegt in der additiven Fertigung. Additive Fertigungsprozesse werden bei der Herstellung von Prototypen und individuellen Fertigungsprodukten sowie inzwischen auch in der Serienfertigung immer relevanter. Im Allgemeinen sind unter "additiven Fertigungsprozessen" solche Fertigungsprozesse zu verstehen, bei denen in der Regel auf Basis von digitalen 3D-Konstruktionsdaten durch das Ablagern von Material (dem "Aufbaumaterial") ein Fertigungsprodukt (im Folgenden auch "Bauteil" genannt) aufgebaut wird. Der Aufbau erfolgt dabei meist, aber nicht zwingend, schichtweise. Als ein Synonym für die additive Fertigung wird häufig auch der Begriff "3D-Druck" verwendet, die Herstellung von Modellen, Mustern und Prototypen mit additiven Fertigungsprozessen wird oft als "Rapid Prototyping" und die Herstellung von Werkzeugen als "Rapid Tooling" bezeichnet. Ein Kernpunkt in diesen Prozessen ist die selektive Verfestigung eines Aufbaumaterials, wobei diese Verfestigung bei vielen Fertigungsprozessen mit Hilfe einer Bestrahlung mit Strahlungsenergie, z. B. elektromagnetischer Strahlung, insbesondere Licht- und/oder Wärmestrahlung, aber ggf. auch mit Teilchenstrahlung wie z. B. Elektronenstrahlung erfolgen kann. Beispiele für mit einer Bestrahlung arbeitende Verfahren sind das "selektive Lasersintern" oder "selektive Laserschmelzen". Dabei werden wiederholt dünne Schichten eines meist pulverförmigen Aufbaumaterials übereinander aufgebracht und in jeder Schicht wird das Aufbaumaterial durch räumlich begrenztes Bestrahlen der Stellen, die nach der Fertigung zum herzustellenden Fertigungsprodukt gehören sollen, selektiv verfestigt, indem die Pulverkörner des Aufbaumaterials mit Hilfe der durch die Strahlung an dieser Stelle lokal eingebrachten Energie teilweise oder vollständig aufgeschmolzen werden. Nach einer Abkühlung sind diese Pulverkörner dann miteinander in einem Festkörper verbunden.

Die selektive Bestrahlung, insbesondere die Bewegung einer Auftrefffläche eines Energiestrahls auf dem Baufeld, erfolgt, vorzugsweise auch im Rahmen der vorliegenden Erfindung, meist gemäß einer geeigneten Bestrahlungsstrategie. Dabei kann das Bewegen ein Ablenken des zuvor erzeugten Energiestrahls bzw. Energiestrahlbündels wie beim üblichen "Scannen", z. B. durch Galvanometerspiegel mit einem Laserstrahl, oder durch elektromagnetische Ablenkung bei einem Elektronen- oder Ionenstrahl sein. Gegebenenfalls kann auch eine Bewegung (zumindest teilweise) durch ein Verfahren der Strahlenabgabeeinheit bzw. Bestrahlungsvorrichtung, insbesondere einer Energiestrahlquelle, selbst erfolgen, z. B. in Form einer verfahrbaren Diodenbank, insbesondere Laserdiodenbank.

In der Regel sind während eines Verfestigungsprozesses größere zweidimensionale Bereiche, d. h. größere Flächen auf dem Baufeld, zu bestrahlen. Unabhängig davon, wie der Energiestrahl erzeugt und seine Auftrefffläche auf dem Baufeld genau verfahren wird, hat es sich als vorteilhaft erwiesen, die zu bestrahlenden Bereiche zunächst gemäß einem ausgewählten Muster virtuell "aufzuteilen", beispielsweise in virtuelle "Streifen", ein Rautenmuster, ein Schachbrettmuster oder dergleichen. Die einzelnen Flächen dieses Musters, also beispielsweise die Streifen oder Felder, werden dann meist in Form einer sogenannten "Schraffur" (im Allgemeinen und im Folgenden auch "Hatch" genannt) mit dem Energiestrahl abgefahren. Das Baumaterial wird also beispielsweise bei einem Streifenmuster - makroskopisch betrachtet - entlang paralleler Streifen nach und nach verfestigt und im Detail - mikroskopisch betrachtet - erfolgt dabei die Bewegung der Auftrefffläche des Energiestrahls auf dem Baufeld entlang eng aneinander liegender Schraffurlinien, welche quer zu den jeweiligen Bestrahlungsstreifen in den Grenzen des Bestrahlungsstreifens verlaufen.

In der praktischen Anwendung bzw. in den bisher bekannten Maschinen bzw. Vorrichtungen zur additiven Fertigung werden üblicherweise Energiestrahlen eingesetzt, beispielsweise Laserstrahlen, die im Wesentlichen rotationssymmetrische (d. h. kreissymmetrische) Intensitätsverteilungen aufweisen. Eine solche rotationssymmetrische Intensitätsverteilung ähnelt häufig einem Gaußprofil. Bei einer gaußförmigen Intensitätsverteilung ist die Intensität ist in der Mitte des Energiestrahls am höchsten und schwächt sich in alle Richtungen radial nach außen quer zur Ausbreitungsrichtung bzw. der aktuellen Strahlengangrichtung des Energiestrahls (im Folgenden auch kurz "Strahlrichtung" oder "Strahlachse" genannt) gemäß einer Gauß-Funktion bzw. Gauß-Kurve ab. Diese Intensitätsverteilung ist ohne weitere Maßnahmen aus den bisher verwendeten Energiestrahlquellen, beispielsweise einem üblichen Laser, erhältlich.

Neueste Erkenntnisse bzw. Forschungen zeigen jedoch, dass die genaue Form der Intensitätsverteilung des Energiestrahls, insbesondere Laserstrahls, durchaus einen nicht unerheblichen Einfluss auf den gesamten Fertigungsprozess haben kann, insbesondere z. B. auf den Wirkungsgrad und damit auch auf den spezifischen Energieverbrauch und/oder die Qualität des Fertigungsprodukts, beispielsweise dessen Mikrostruktur. Ein Vergleich zwischen einem Laserstrahl mit einer gaußschen Intensitätsverteilung und einer nicht rotationssymmetrischen Intensitätsverteilung, nämlich einer elliptischen Intensitätsverteilung, wird beispielsweise in Tien T. Röhling et al., "Modulating laser intensity profile ellipticity for microstructural control during metal additive manufacturing" in Acta Materialia, 128 (2017), S. 197-206, beschrieben. Hier wird auch gezeigt, dass nicht nur die Intensitätsverteilung an sich, sondern auch deren Ausrichtung in Bezug auf die aktuelle Bewegungsrichtung des Energiestrahls bzw. dessen Auftrefffläche auf dem Baufeld (im Folgenden ohne Beschränkung der Allgemeinheit auch als "Scanrichtung" bezeichnet) Auswirkungen auf den Fertigungsprozess haben kann.

Beispielsweise wird derzeit in der Praxis beim Lasersintern bzw. Laserschmelzen von Metallen meistens mit einem sogenannten "Tiefschweiß-Prozess" ("keyhole mode welding") gearbeitet. Ein Schweißprozess wird als Tiefschweiß-Prozess definiert, wenn sich eine Dampfkapillare, auch "Keyhole" genannt, bildet. Der auftreffende Energiestrahl, insbesondere Laserstrahl, erzeugt hierbei ein Schmelzbad aus geschmolzenem Material bzw. Metall. Erreicht die Schmelzbadoberfläche des Materials durch weiter andauernde Bestrahlung dessen Siedetemperatur, drückt der entstehende Metalldampf die Schmelze seitlich und nach unten weg und erzeugt so die Dampfkapillare. Der Durchmesser dieses Keyholes ist häufig kleiner als der des Energiestrahls bzw. Laserstrahls. Ein Vorteil dieses Tiefschweiß-Prozesses liegt in der hohen Tiefenwirkung. Das heißt, dass sich im Verhältnis zum Strahldurchmesser ein tieferes Schmelzbad ausbildet, als wenn eine solche Verdampfung nicht stattfinden würde. Ein Schweißprozess bzw. Schmelzprozess ohne Verdampfen wird im Folgenden als "Wärmeleitungsschweißen" (auch "conduction mode welding" oder "conduction laser welding") bezeichnet. Ein Tiefschweißprozess hat gegenüber einem Wärmeleitungsschweißprozess auch eine Vielzahl von Nachteilen, wie etwa einen höheren Energie- und Materialverbrauch. Welcher Schweißprozess geeigneter ist, kann von verschiedenen Prozessbedingungen bzw. Randbedingungen abhängen und sich auch während des Fertigungsprozesses ändern, z. B. in Abhängigkeit vom Ort innerhalb des zu fertigenden Bauteils. Ob der Schweißprozess als Wärmeleitungsschweiß- oder als Tiefschweiß-Prozess abläuft, hängt wiederum von verschiedenen Parametern ab. Ein wesentlicher Parameter kann auch die Form der Intensitätsverteilung sein.

Je nach aktueller Bestrahlungsstrategie ist also eine bestimmte Intensitätsverteilung vorteilhaft, wobei sich dies auch während des Fertigungsprozesses ändern kann, insbesondere in Abhängigkeit vom Ort innerhalb des zu fertigenden Bauteils, mit welcher Bestrahlungsstrategie gearbeitet wird und ob beispielsweise die aktuelle Bestrahlung von Aufbaumaterial benachbart zu einem bereits befestigten Bereich erfolgt oder nicht, und wenn ja, wo der verfestigte Bereich relativ zum aktuell zu verfestigenden Bereich liegt.

Da es während der Bestrahlung auch zu - zum Teil sehr schnellen - Richtungsänderungen kommen kann und in der Regel eine bestimmte Intensitätsverteilung immer in Bezug zur aktuellen Bewegungsrichtung, d. h. Scanrichtung, definiert ist, muss sich häufig die Orientierung bzw. Richtung der idealen Intensitätsverteilung auf dem Baufeld bzw. Material ändern. Dies erfordert eine schnelle Reaktion der Bestrahlungsvorrichtung in Bezug auf Änderungen der Intensitätsverteilung. Ein weiterer Punkt ist, dass - wie später noch erläutert wird - zum Teil innerhalb einer Intensitätsverteilung bei bestimmten Schweißprozessen relativ hohe räumliche Intensitätsunterschiede nach einem genau definierten Muster wünschenswert sind.

Es ist eine Aufgabe der vorliegenden Erfindung, ein geeignetes Verfahren und eine geeignete Vorrichtung zum Bestrahlen eines Materials, insbesondere für einen additiven Fertigungsprozess, sowie ein entsprechendes Verfahren und eine Vorrichtung zur additiven Fertigung von Fertigungsprodukten anzugeben, welche dieses Problem adressieren.

Dies wird zum einen durch ein Verfahren zum Bestrahlen eines Materials (im Folgenden auch "Bestrahlungsverfahren" genannt) gemäß Patentanspruch 1 und Patentanspruch 2 und eine Bestrahlungsvorrichtung gemäß Patentanspruch 10 und Patentanspruch 14 und zum anderen durch ein Verfahren zur additiven Fertigung von Fertigungsprodukten (im Folgenden auch "Fertigungsverfahren" genannt) gemäß Patentanspruch 9 und durch eine Vorrichtung zur additiven Fertigung gemäß Patentanspruch 15 gelöst.

Bei dem erfindungsgemäßen Bestrahlungsverfahren werden zumindest ein erster Energiestrahl und ein zweiter Energiestrahl erzeugt. Dies kann beispielsweise durch zwei getrennte Energiestrahlquellen, beispielsweise zwei Laser, erfolgen. Grundsätzlich wäre es aber auch möglich, dass die Energiestrahlen zunächst von einer Energiestrahlquelle erzeugt werden und dann eine Aufteilung erfolgt, beispielsweise in einem Strahlteiler oder dergleichen.

Der zweite Energiestrahl wird erfindungsgemäß relativ zum ersten Energiestrahl bewegt, und der erste Energiestrahl sowie der sich relativ dazu bewegende zweite Energiestrahl werden so in einem gemeinsamen Strahlengang in eine Energiestrahl-Bewegungseinheit eingekoppelt, dass sie gemeinsam als "Kombinations-Energiestrahl", beispielsweise auf dem Baufeld mit dem Aufbaumaterial in einem additiven Fertigungsprozess, bewegt werden. Hierzu wird also dafür gesorgt, dass die Energiestrahlen ausgehend von einem Ort der Zusammenführung z. B. parallel oder koaxial entlang desselben Strahlengangs verlaufen, wobei sich die jeweils aktuelle relative Position der Intensitätsverteilungen des ersten Energiestrahls und des zweiten Energiestrahls in einer senkrecht zur Strahlachse des Kombinations-Energiestrahls verlaufenden Schnittebene (also somit die - noch später definierten - virtuellen Strahlachsen bzw. ein jeweiliger Strahlengang) auf dem Weg durch die betreffende Energiestrahl-Bewegungseinheit von der Einkoppelstelle in die Energiestrahl-Bewegungseinheit, z. B. bei Verwendung eines Scanners auf dem ersten Scannerspiegel, bis zur Auftrefffläche nicht wesentlich ändert. Wird beispielsweise die Intensitätsverteilung des ersten Energiestrahls bzw. der erste Energiestrahl gespiegelt oder gedreht, wird die Intensitätsverteilung des zweiten Energiestrahls bzw. der zweite Energiestrahl simultan mitgespiegelt oder verdreht usw.

Die relative Position zwischen dem ersten Energiestrahl und dem zweiten Energiestrahl wird somit im Wesentlichen nur durch die vor der Einkopplung in die Energiestrahl-Bewegungseinheit für den Kombinations-Energiestrahl erfolgte Bewegung des zweiten Energiestrahls relativ zum ersten Energiestrahl bestimmt. Die Bewegung des zweiten Energiestrahls "relativ zum ersten Energiestrahl" ist dabei die Bewegung des zweiten Energiestrahls, die ein sich mit dem ersten Energiestrahl mit bewegender Beobachter "sehen" würde. Diese relative Bewegung des zweiten Energiestrahls relativ zum ersten Energiestrahl kann bevorzugt durch eine separate, beispielsweise erste Energiestrahl-Bewegungseinheit, erfolgen, wofür später noch Beispiele gegeben werden. Der Kombinations-Energiestrahl wird dann von einer zweiten Energiestrahl-Bewegungseinheit, beispielsweise einem herkömmlichen Scannerspiegel bei Verwendung von Laserstrahlen, über das Baufeld bewegt. Mit anderen Worten, die relative Positionierung (der Intensitätsverteilung) des zweiten Energiestrahls im Kombinations-Energiestrahl (bzw. innerhalb dessen Intensitätsverteilung) erfolgt nur durch diese erste Energiestrahl-Bewegungseinheit. Die zweite Energiestrahl-Bewegungseinheit bewegt die gemeinsame Auftrefffläche der Energiestrahlen, d. h. die Auftrefffläche des Kombinations-Energiestrahls (den man insoweit auch als "Einheitsstrahl" bezeichnen könnte), wobei der Kombinations-Energiestrahl aufgrund der Bewegung des zweiten Energiestrahls relativ zum ersten Energiestrahl seine Gesamt-Intensitätsverteilung entsprechend ändert.

Insbesondere wird also in solchen Fällen kein "Kombinations-Energiestrahl" bzw. "Einheitsstrahl" im Sinne der obigen Definition erzeugt, in denen der zweite Energiestrahl mittels einer ersten Energiestrahl-Bewegungseinheit so in die zweite Energiestrahl-Bewegungseinheit eingekoppelt wird, dass der erste Energiestrahl und der zweite Energiestrahl entlang des Wegs bzw. ihrer Strahlengänge weg von der zweiten Energiestrahl-Bewegungseinheit hin zur Auftrefffläche - in Abhängigkeit von der Stellung der ersten Energiestrahl-Bewegungseinheit - wieder wesentlich auseinanderlaufen (divergieren) oder zusammenlaufen (konvergieren); Fälle also, in denen sich die jeweils aktuelle relative Position (der Intensitätsverteilungen) des ersten Energiestrahls und des zweiten Energiestrahls zueinander auf dem Weg zur Auftrefffläche bei einer Veränderung der Stellung der zweiten Energiestrahl-Bewegungseinheit zu einem bestimmten Zeitpunkt wesentlich verändert, selbst wenn die erste Energiestrahl-Bewegungseinheit zu diesem Zeitpunkt ruhig steht. Bei diesen Konstruktionen müsste nämlich permanent die erste Energiestrahl-Bewegungseinheit die relative Verschiebung der Strahlen hinter der zweiten Energiestrahl-Bewegungseinheit (je nach deren aktueller Stellung) ausgleichen. Dies ist beispielsweise bei den Konstruktionen der Fall, wie sie für die Laserbohrmaschine gemäß der US 2004/0129685 A1 (offenbarend den Oberbegriff der Ansprüche 1, 2, 10 und 14) oder die Laserprozessmaschine zum Schneiden oder Schweißen etc. gemäß der US 2018/0154482 A1 genutzt werden.

Bei einer bevorzugten Variante wird einfach dafür gesorgt, dass der Strahlengang des ersten Energiestrahls und ein "virtueller Strahlengang" des zweiten Energiestrahls koaxial verlaufen, um koordiniert als überlagerter Kombinations-Energiestrahl über das Material bewegt zu werden. Dieser "virtuelle Strahlengang" (oder auch "virtuelle Strahlachse") des relativ zum ersten Energiestrahl bewegten zweiten Energiestrahls ist so definiert, dass er durch den geometrischen Schwerpunkt einer "virtuellen Schnittebenen-Auftrefffläche" verläuft, die in einer senkrecht zur (virtuellen) Strahlachse stehenden Schnittebene (wie oben definiert) liegt, wobei die "virtuelle Schnittebenen-Auftrefffläche" durch die Fläche in der Schnittebene definiert ist, die der zweite Energiestrahl mit seiner durch seine jeweilige Intensitätsverteilung bestimmten räumlichen Ausdehnung während einer definierten Zeitspanne überstreicht. Dabei ist die definierte Zeitspanne bevorzugt zumindest so lang, dass der zweite Energiestrahl bei einem (bevorzugten) sich wiederholenden Bewegungsmuster einen Bewegungszyklus, besonders bevorzugt mehrere Bewegungszyklen, durchlaufen hat. Dabei beträgt die Zeitspanne besonders bevorzugt genau eine Periode (Dauer eines Bewegungszyklus) oder ein ganzzahliges Vielfaches einer Periode. Bei einem z. B. relativ zum ersten Energiestrahl kreisförmig umlaufenden zweiten Energiestrahl könnte der "virtuelle Strahlengang" des zweiten Energiestrahls also auch als "gemittelter Strahlengang" oder "gemittelte Strahlachse" angesehen werden, die sich ergibt, wenn die Position der realen Strahlachse des zweiten Energiestrahls, die sich relativ zur Strahlachse des ersten Energiestrahls bewegt, über eine bestimmte Integrationszeitspanne integriert wird. Dies wird später noch, insbesondere auch anhand von Ausführungsbeispielen, genauer erläutert.

Die "relative Bewegung" des zweiten Energiestrahls zum ersten Energiestrahl bzw. Position der Strahlachse des zweiten Energiestrahls innerhalb der Gesamt-Intensitätsverteilung des Kombinations-Energiestrahls kann aber prinzipiell alle denkbaren geometrischen Bahnen bzw. Bahnkurven (Verläufe eines Abtastpfades), also jedwede translatorische oder rotatorische Bewegung bzw. Bewegungsmuster umfassen. Besonders bevorzugt verläuft wie erwähnt die relative Bewegung des zweiten Energiestrahls zum ersten Energiestrahl bzw. die Position der zweiten Intensitätsverteilung des zweiten Energiestrahls innerhalb der Gesamt-Intensitätsverteilung auf einer geschlossenen Kurve, d. h. sie können/kann als "periodisch stationär" bezeichnet werden. Zum Beispiel kann der zweite Energiestrahl innerhalb des Kombinations-Energiestrahls, bzw. relativ zum ersten Energiestrahl, eine kreisförmige oder elliptische Bewegung vollziehen oder sich entlang eines geschlossenen Polygonzugs bewegen. Ebenso sind - je nach konkreter Anforderung - wie gesagt auch andere beliebige Kurven möglich, wie z. B. eine beliebige andere Polygonform, eine Zick-Zack-Linie, ein sinusförmiger Wobbel (auch bekannt als Oszillationsschweißen) etc.

Entsprechend kann die Gesamt-Intensitätsverteilung des Kombinations-Energiestrahls auch eine beliebige Gestalt bzw. Form aufweisen.

An dieser Stelle sei darauf hingewiesen, dass allgemein eine "Intensitätsverteilung" eines Energiestrahls im Sinne der vorliegenden Anmeldung die räumliche Form bzw. Ausdehnung des Energiestrahls in einer Schnittebene (Querschnittsfläche) senkrecht zur Strahlrichtung bzw. Strahlachse und auch die räumliche Verteilung der Intensität über der Querschnittsfläche umfasst, also insbesondere die Positionen von Maxima und Minima etc. Die Intensitätsverteilung in der Schnittebene senkrecht zur Strahlrichtung bzw. Einfallsrichtung entspricht übrigens - auch wenn eine Schnittebene an dem Baufeld betrachtet wird, also kurz vor dem Auftreffen auf das Baufeld - in den meisten Situationen nicht genau der Intensitätsverteilung direkt auf der Oberfläche des Baufelds bzw. in der Arbeitsebene, da der Energiestrahl meist schräg auf das Baufeld auftrifft. Dies schließt aber nicht aus, dass es im Laufe des Verfahrens immer wieder dazu kommt, dass die besagte Schnittebene mit der Auftrefffläche übereinstimmt, da der Energiestrahl gerade senkrecht auf der Auftrefffläche steht.

Auf dem Weg des gemeinsamen Strahlengangs, d. h. nach der erfindungsgemäß erfolgten Kombination des ersten und des sich relativ dazu bewegenden zweiten Energiestrahls, durchlaufen die beiden Energiestrahlen als Kombinations-Energiestrahl auf ihrer Strecke jeweils dieselben strahlablenkenden bzw. strahlmodifizierenden Optikkomponenten.

Die erfindungsgemäße Bestrahlungsvorrichtung zum Bestrahlen eines Materials weist dementsprechend ein Energiestrahlquellen-System, beispielsweise bevorzugt ein Lasersystem, zur Erzeugung zumindest eines ersten Energiestrahls und eines zweiten Energiestrahls auf, wobei wie erwähnt dieses Energiestrahlquellen-System unterschiedliche Energiestrahlquellen für die verschiedenen Energiestrahlen aufweisen kann, oder auch Strahlteiler etc.

Weiterhin weist die Bestrahlungsvorrichtung eine erste Energiestrahl-Bewegungseinheit zum Bewegen des zweiten Energiestrahls relativ zum ersten Energiestrahl auf.

Schließlich umfasst die Bestrahlungsvorrichtung eine Energiestrahl-Kombinationsvorrichtung sowie eine zweite Energiestrahl-Bewegungseinheit, welche so ausgebildet und zueinander angeordnet sind, dass der erste Energiestrahl und der sich dazu bewegende zweite Energiestrahl in einem gemeinsamen Strahlengang in die zweite Energiestrahl-Bewegungseinheit so eingekoppelt werden, dass sie gemeinsam als Kombinations-Energiestrahl von der zweiten Energiestrahl-Bewegungseinheit über das Material bzw. Baufeld bewegt werden.

Durch die Verwendung von zwei Energiestrahlen, welche jeweils eine unterschiedliche Intensitätsverteilung und auch unterschiedliche absolute Maximalintensitäten sowie verschieden große und gestaltete Auftreffflächen aufweisen können, sowie durch die Bewegung des zweiten Energiestrahls relativ zum ersten Energiestrahl lassen sich nahezu beliebig geformte und vor allem sehr schnell veränderbare Gesamt-Intensitätsverteilungen im Kombinations-Energiestrahl erreichen, welcher letztlich auf das Material auftrifft und den Aufschmelzprozess bzw. Schweißprozess bestimmt. Aufgrund der erfindungsgemäßen Einkopplung der relativ zueinander bewegten Energiestrahlen bzw. Intensitätsverteilungen in den gemeinsamen Strahlengang durch die zweite Energiestrahl-Bewegungseinheit kann sichergestellt werden, dass die optischen Komponenten der zweiten Energiestrahl-Bewegungseinheit, also beispielsweise des Scanners, sowie gegebenenfalls nachfolgende, die Richtung der Energiestrahlen ggf. beeinflussende Komponenten, wie beispielsweise ein Einkoppelfenster in einen Bauraum (Prozesskammer) einer Fertigungsvorrichtung, nur vernachlässigbaren Einfluss auf die Gesamt-Intensitätsverteilung des Kombinations-Energiestrahls haben.

Insbesondere wäre auch eine Nachrüstung von bereits bestehenden Fertigungsvorrichtungen mit einer erfindungsgemäßen Bestrahlungsvorrichtung möglich, wobei die vorhandenen Energiestrahl-Bewegungseinheiten, d. h. beispielsweise Scanner, als zweite Energiestrahl-Bewegungseinheiten im Rahmen der Erfindung ohne Änderungen weiterbenutzt werden könnten.

Bei einem erfindungsgemäßen Verfahren zur additiven Fertigung eines Fertigungsprodukts wird, wie eingangs erwähnt, Aufbaumaterial selektiv verfestigt, und hierzu erfolgt auf dem Baufeld eine Bestrahlung des Aufbaumaterials mit zumindest einem Energiestrahl. Dabei wird das zuvor beschriebene erfindungsgemäße Bestrahlungsverfahren genutzt.

Eine erfindungsgemäße Vorrichtung zur additiven Fertigung gemäß der eingangs genannten Art weist dann entsprechend zumindest eine solche Bestrahlungsvorrichtung auf, die in erfindungsgemäßer Weise aufgebaut ist bzw. durch Nachrüsten erfindungsgemäß modifiziert wurde. Dabei ist es auch wiederum möglich, bereits vorhandene Fertigungsvorrichtungen mit einer erfindungsgemäßen Bestrahlungsvorrichtung als komplettes Modul nachzurüsten bzw. die vorhandenen Bestrahlungsvorrichtungen entsprechend auszutauschen.

Es sei an dieser Stelle darauf hingewiesen, dass sich die erfindungsgemäßen Energiestrahlmodifikationsvorrichtungen bzw. Bestrahlungsvorrichtungen auch zur Ausstattung von Fertigungsvorrichtungen nutzen lassen, die mit mehreren separaten Energiestrahlen arbeiten, um parallel an mehreren Positionen auf dem Baufeld Material zu verfestigen. Dabei können dann nur einzelne, aber auch mehrere - zum Beispiel alle - Energiestrahlen von erfindungsgemäßen Bestrahlungsvorrichtungen erzeugt werden. D. h. die entsprechenden Fertigungsvorrichtungen werden z. B. mit mehreren separaten erfindungsgemäßen Bestrahlungsvorrichtungen ausgestattet.

Die Vorrichtung zur additiven Fertigung, insbesondere die Bestrahlungsvorrichtung, weist bevorzugt eine Steuereinrichtung auf, um die Komponenten der Energiestrahlmodifikationsvorrichtung in geeigneter Weise koordiniert zu anderen Komponenten der Vorrichtung zur additiven Fertigung anzusteuern. Die Steuereinrichtung kann hierbei insbesondere auch mehrere Teil-Steuereinrichtungen umfassen, die z. B. der Bestrahlungsvorrichtung, insbesondere der ersten und/oder zweiten Energiestrahl-Bewegungseinheit, und/oder anderen Komponenten zugeordnet sind und in geeigneter Weise zusammenarbeiten. Die Steuereinrichtung bzw. die Teil-Steuereinrichtungen können dabei auch ganz oder teilweise in Form von Software realisiert sein.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Ein Kombinations-Energiestrahl wird üblicherweise mit einer vorgegebenen Scangeschwindigkeit, die auch dynamisch veränderbar ist, über das Material bzw. Baufeld bewegt. Besonders bevorzugt erfolgt die gleichzeitige Relativbewegung des zweiten Energiestrahls zum ersten Energiestrahl, bzw. die Bewegung des zweiten Energiestrahls innerhalb des Kombinations-Energiestrahls, mit einer vorgegebenen Relativgeschwindigkeit (welche ebenfalls dynamisch steuerbar ist), deren Betrag viel größer als der Betrag der Scangeschwindigkeit ist.

Entsprechend der Erfindung, siehe Ansprüche 2 und 14, ist der Betrag der Relativgeschwindigkeit zwischen erstem Energiestrahl und zweitem Energiestrahl bzw. des ersten Energiestrahls innerhalb des Kombinations-Energiestrahls mindestens zweimal so groß wie der Betrag der Scangeschwindigkeit, weiter bevorzugt zumindest fünfmal größer, noch weiter bevorzugt zumindest zehnmal größer, besonders bevorzugt fünfzigmal größer und ganz besonders bevorzugt sogar hundertmal größer.

So kann der Betrag der Relativgeschwindigkeit bevorzugt mindestens 5 m/s betragen. Besonders bevorzugt beträgt er mindestens 10 m/s, weiter bevorzugt mindestens 20 m/s und ganz besonders bevorzugt mindestens 50 m/s.

Der Betrag der Scangeschwindigkeit liegt dagegen z. B. beim selektiven Laserschmelzen bzw. selektiven Lasersintern üblicherweise in einem Bereich von 0,01 m/s bis 5 m/s. Beim Elektronenstrahlschmelzen können dagegen auch deutlich höhere Geschwindigkeiten erzielt werden, z. B. 20 m/s oder mehr. In der Regel ist die Scanbewegung erheblich langsamer als die Relativbewegung des zweiten Energiestrahls zum ersten Energiestrahl.

Durch die Bewegung des zweiten Energiestrahls relativ zum ersten Energiestrahl können vorteilhaft über eine bestimmte Zeitspanne jeweils zeitlich integrierte Gesamt-Intensitätsverteilungen des Kombinations-Energiestrahls mit nahezu beliebigen Ausgestaltungen erzeugt werden. Diese Integrations-Zeitspanne sollte vorzugsweise ausreichend lang sein, damit der zweite Energiestrahl seinen Weg, z. B. einen Bewegungszyklus, relativ zum ersten Energiestrahl im Wesentlichen durchlaufen konnte. So könnte die Integrations-Zeitspanne bei einer - oben bereits erwähnten und später noch genauer erläuterten - zyklischen Bewegung mindestens einen Bewegungszyklus umfassen. Bevorzugt beträgt die Integrations-Zeitspanne einen längeren Zeitraum, z. B. ein ganzzahliges Vielfaches eines Bewegungszyklus.

Da sich die Auftrefffläche des Kombinations-Energiestrahls auf dem Material bewegt, kann durch eine relativ schnelle Relativbewegung des zweiten Energiestrahls zum ersten Energiestrahl dafür gesorgt werden, dass während eines Abscannens des Baufelds mit dem Kombinations-Energiestrahl an jedem Ort eine ausreichende "Verweildauer" (bzw. "Bestrahlungszeitspanne") vorliegt, damit zumindest näherungsweise die zuvor genannte Integrations-Zeitspanne erreicht wird. D. h., die Relativgeschwindigkeit sollte bevorzugt hoch genug sein, dass auf das Aufbaumaterial infolge der Trägheit der Temperaturänderung aufgrund der Wärmeeinspeicherung (Wärmekapazität des Materials) die überlagerten Intensitätsverteilungen des ersten und zweiten Energiestrahls in der Zeitspanne des physikalischen Prozesses der Wärmeleitung als "quasi-stationäre" Gesamt-Intensitätsverteilung wirken. Bildlich betrachtet, wird dem Material dabei also über die Integrations-Zeitspanne im Wesentlichen eine Strahlungsenergie entsprechend der Gesamt-Intensitätsverteilung zugeführt, da aufgrund der geringeren Scangeschwindigkeit während der (im Verhältnis zur Relativbewegung langen) Verweildauer des Kombinations-Energiestrahls an einem Ort der zweite Energiestrahl mit seiner Intensitätsverteilung innerhalb der Gesamt-Intensitätsverteilung des Kombinations-Energiestrahls alle Relativpositionen abfährt, vorzugsweise sogar mehrfach abfährt, wenn man die Scanbewegung (für dieses Bild) als nicht existent ansehen würde. Bei einer kontinuierlichen Scanbewegung kommt es natürlich stets zu einem geringen örtlichen Versatz bei jedem Umlauf, der sich aber aufgrund der typischerweise hohen Scangeschwindigkeiten und relativ langsamen thermischen Diffusion nicht signifikant auf die Wärmeverteilung in der Umgebung der realen Auftrefffläche auswirkt, sodass das oben geprägte Bild näherungsweise die Gegebenheiten gut widerspiegelt. Mit anderen Worten wird dafür gesorgt, dass das aufzuschmelzende Material bzw. der Materialbereich zu einem bestimmten Zeitpunkt, wenn der Kombinations-Energiestrahl den jeweiligen Bereich trifft, quasi eine näherungsweise "stationäre" Gesamt-Intensitätsverteilung des Kombinations-Energiestrahls "sieht". Die hierfür erforderliche Mindest-Relativgeschwindigkeit kann also auch maßgeblich von den Materialparametern des verwendeten Aufbaumaterials, insbesondere der spezifischen Wärmekapazität, mit abhängen. So kann beispielsweise dafür gesorgt werden, dass die Fourierzahl Fo = ($a \cdot \Delta t)/d^2$ möglichst klein ist, um die "quasi-stationäre" Gesamt-Intensitätsverteilung möglichst gut zu erzielen, wobei $a$ die Temperaturleitfähigkeit (Materialkonstante) ist, $\Delta t$ eine charakteristische Zeitspanne (z. B. die Periodendauer) und $d$ eine charakteristische Länge (z. B. eine Ausdehnung, wie etwa der Radius, der Gesamt-Intensitätsverteilung). Je kleiner die Fourierzahl ist, umso weniger Wärme wird in der betrachteten Zeitspanne, also der Periodendauer eines Umlaufs des zweiten Energiestrahls, "wegtransportiert".

Ein solches Verfahren zum Bestrahlen eines Materials, bei dem ein erster Energiestrahl und ein zweiter Energiestrahl erzeugt und zumindest teilweise in der beschriebenen Weise überlagert und mit einer vorgegebenen Geschwindigkeit über das Material bewegt werden, wobei der zweite Energiestrahl relativ zum ersten Energiestrahl mit einer vorgegebenen Relativgeschwindigkeit bewegt wird, deren Betrag viel größer als der Betrag der Scangeschwindigkeit ist, kann auch unabhängig von der Einkopplung in den gemeinsamen Strahlengang in eine gemeinsame Energiestrahl-Bewegungseinheit erfolgen, auch wenn durch die Einkopplung in die gemeinsame Energiestrahl-Bewegungseinheit - wie oben bereits erwähnt - eine besonders einfache Koordinierung der Bewegung der beiden Energiestrahlen möglich ist. Grundsätzlich könnte aber auch gegebenenfalls einfach eine koordinierte bzw. synchronisierte Ansteuerung von zwei an sich separaten Energiestrahl-Bewegungseinheiten bzw. Scannern über dem Baufeld ausreichen.

In diesem Fall benötigt die erfindungsgemäße Bestrahlungsvorrichtung, wie oben beschrieben, zwar ein Energiestrahlen-Quellensystem zur Erzeugung zumindest eines ersten Energiestrahls und eines zweiten Energiestrahls. Des Weiteren benötigt die Bestrahlungsvorrichtung dann eine erste Energiestrahl-Bewegungseinheit und eine zweite Energiestrahl-Bewegungseinheit und eine Steuereinrichtung, welche die Bestrahlungsvorrichtung so ansteuert, dass der erste Energiestrahl und der zweite Energiestrahl zumindest teilweise überlagert als Kombinations-Energiestrahl koordiniert mit einer vorgegebenen Scangeschwindigkeit über das Material bzw. Baufeld bewegt werden, wobei der zweite Energiestrahl relativ zum ersten Energiestrahl mit einer vorgegebenen Relativgeschwindigkeit bewegt wird, deren Betrag viel größer als der Betrag der Scangeschwindigkeit ist.

Eine Einkopplung des ersten Energiestrahls und des sich relativ dazu bewegenden zweiten Energiestrahls in den gemeinsamen Strahlengang kann mittels eines Strahlkombinators der Bestrahlungsvorrichtung erfolgen. Dieser Strahlkombinator kann der ersten Energiestrahl-Bewegungseinrichtung nachgeschaltet (also in Strahlrichtung nachgeordnet) und der zweiten Energiestrahl-Bewegungseinheit vorgeschaltet (also in Strahlrichtung vorhergehend angeordnet) sein, um den ersten Energiestrahl und den zweiten Energiestrahl beispielsweise parallel zueinander, z. B. mit Strahlengängen mit geringer Beabstandung in Bezug zum Durchmesser eines der Strahlen, wie dies nachfolgend anhand von Beispielen noch erläutert wird, in die zweite Energiestrahl-Bewegungseinheit, beispielsweise auf den ersten Scannerspiegel eines üblichen Scannersystems, einzukoppeln.

Der Strahlkombinator weist vorzugsweise einen Polarisator, besonders bevorzugt einen Dünnschicht-Polarisator, auf bzw. kann durch diesen gebildet werden.

Bevorzugt wird im Zuge des Bestrahlungsverfahrens der zweite Energiestrahl in Abhängigkeit von seiner relativen Position zum ersten Energiestrahl bzw. in Abhängigkeit von der aktuellen Position im Kombinations-Energiestrahl, also während der Relativbewegung, intensitätsmoduliert. Alternativ oder zusätzlich kann der zweite Energiestrahl auch in Abhängigkeit von einer aktuellen Bewegungsrichtung des Kombinations-Energiestrahls auf dem Material bzw. Baufeld, d. h. der aktuellen Scanrichtung intensitätsmoduliert werden, also in Abhängigkeit von einer Bewegungsrichtung eines entsprechenden Elements der Energiestrahl-Bewegungseinheit, z. B. einem Scannerspiegel.

Grundsätzlich könnte aber auch eine Intensität des ersten Energiestrahls moduliert werden.

Bei dieser Intensitätsmodulation ist es bevorzugt, dass die minimale Intensität zumindest immer größer als 0 ist, d. h. dass der zweite Energiestrahl innerhalb des Kombinations-Energiestrahls immer zu einer Erhöhung der Gesamtintensität an der jeweiligen Stelle in der Gesamt-Intensitätsverteilung des Kombinations-Energiestrahls beiträgt.

Eine Intensitätsmodulation ermöglicht es, Kombinations-Energiestrahlen zu erzeugen, deren Gesamt-Intensitätsverteilung beispielsweise nur an einer einzigen Stelle ein absolutes Maximum und/oder ein absolutes Minimum aufweist und an weiteren Positionen in der Gesamt-Intensitätsverteilung gegebenenfalls lokale Maxima und/oder Minima hinsichtlich der jeweiligen Umgebung bzw. in einer bestimmten Schnittrichtung oder entlang einer bestimmten Intensitätsprofilkurve, d. h. entlang eines definierten Verlaufs innerhalb der Gesamt-Intensitätsverteilung, wie dies später noch erläutert wird.

Vorzugsweise ist dann das Energiestrahlquellen-System der Bestrahlungsvorrichtung so ausgebildet und/oder die Bestrahlungsvorrichtung weist eine Energiestrahl-Modulationseinheit auf, dass der zweite Energiestrahl in der gewünschten Weise intensitätsmoduliert wird. Hierzu kann die Bestrahlungsvorrichtung eine Steuereinrichtung aufweisen, die das Energiestrahlquellen-System, insbesondere die zweite Energiestrahlquelle, sofern diese separat von der ersten Energiestrahlquelle betrieben wird, und/oder die Energiestrahl-Modulationseinheit entsprechend ansteuert.

Grundsätzlich können der erste Energiestrahl und der zweite Energiestrahl beliebige Intensitätsverteilungen aufweisen. Bevorzugt weisen sie qualitativ und/oder quantitativ unterschiedliche Intensitätsverteilungen auf, ganz besonders bevorzugt nicht nur quantitativ, sondern auch qualitativ, d. h. völlig unterschiedliche Formen.

Bei einer besonders bevorzugten Variante weist der erste Energiestrahl eine bezüglich einer Strahlachse im Wesentlichen (d. h. innerhalb der üblichen Toleranzen) rotationssymmetrische Intensitätsverteilung auf.

Der Begriff "rotationssymmetrisch" bezieht sich hierbei auf eine koaxial zu einer Strahlrichtung des Energiestrahls liegende Rotationsachse. Bisher werden, wie ebenfalls oben erwähnt, die Energiestrahlen ohnehin meist so erzeugt, dass sie rotationssymmetrisch sind, nämlich z. B. die genannte gaußförmige Intensitätsverteilung aufweisen. Im Gegensatz dazu sind im Folgenden unter dem Begriff "nicht rotationssymmetrisch" bzw. "im Wesentlichen nicht rotationssymmetrisch" solche Energiestrahlen zu verstehen, deren Intensitätsverteilung bewusst auch in einem signifikanten Maße nicht rotationssymmetrisch erzeugt und/oder durch gezielte Modifikation eines Strahls und/oder durch die erfindungsgemäße Erzeugung eines Kombinations-Energiestrahls mit einer nicht rotationssymmetrischen Gesamt-Intensitätsverteilung entsprechend beeinflusst wurde. Hierzu zählen nicht Energiestrahlen, die an sich eine übliche rotationssymmetrische, beispielsweise gaußförmige, Intensitätsverteilung aufweisen sollen und lediglich unerwünschte Abweichungen von der Rotationssymmetrie aufweisen, z. B. aufgrund unbeabsichtigter Verzerrungen oder sonstiger Imperfektionen des Systems zur Erzeugung und/oder zum Bewegen des Energiestrahls. Würde beispielsweise die Intensitätsverteilung des in der gewünschten Weise erzeugten Ausgangsenergiestrahls mathematisch als Funktion $I(r, \phi)$ des Ortes in Polarkoordinaten $r$ und $\phi$ (in einer Ebene senkrecht zur Strahlrichtung) beschrieben, so könnte die Intensitätsverteilung bevorzugt dann als "nicht rotationssymmetrisch" bezeichnet bzw. definiert werden, wenn kein Ursprungspunkt innerhalb der Intensitätsverteilung gefunden werden kann, der für ein beliebiges $m$, unter der Bedingung $m \geq 2$, und beliebiges r folgende Eigenschaft erfüllt:

$$\left| 1 - \left( \frac{I(r, \phi)}{I(r, \phi + 360°/m)} \right) \right| < \varepsilon$$

wobei $\varepsilon \leq 0{,}01$, vorzugsweise $\varepsilon \leq 0{,}05$, weiter bevorzugt $\varepsilon \leq 0{,}1$, noch weiter bevorzugt $\varepsilon \leq 0{,}2$ gilt. Genauer gesagt, ist eine so definierte Intensitätsverteilung nicht nur nicht rotationssymmetrisch, sondern auch nicht drehsymmetrisch.

Besonders bevorzugt weist der erste Energiestrahl eine sogenannte "Top-Hat-" oder "Flat-Top-Intensitätsverteilung" auf. Eine derartige Intensitätsverteilung zeichnet sich dadurch aus, dass sie eine räumlich relativ homogene Intensitätsverteilung über den Strahlquerschnitt aufweist. Das heißt, die Verteilungsfunktion kann dargestellt werden mit einer relativ glatten, flache Oberfläche und einer relativ scharfen Randkante. Im Querschnitt durch die Strahlachse zeigt eine solche "Top-Hat-" oder "Flat-Top-Intensitätsverteilung" ein Rechteckprofil. Ein derartiges Profil kann durch eine Heaviside-Funktion (Stufen- oder Sprungfunktion) beschrieben werden.

Mit einer Top-Hat-Intensitätsverteilung kann innerhalb des Kombinations-Energiestrahls, also innerhalb der Gesamt-Intensitätsverteilung, eine definierte relativ homogene Basisintensität gewährleistet werden. Zudem stehen für solche Top-Hat-Intensitätsverteilungen schon geeignete Strahlformeinheiten zur Verfügung, beispielsweise diffraktive optische Elemente (DOEs).

Besonders bevorzugt weist auch der zweite Energiestrahl eine bezüglich einer Strahlachse im Wesentlichen, d. h. innerhalb der üblichen Toleranzen, rotationssymmetrische Intensitätsverteilung auf. Dieser zweite Energiestrahl kann beispielsweise besonders bevorzugt eine Gauß-Intensitätsverteilung aufweisen. Eine solche Gauß-Intensitätsverteilung benötigt in der Regel keine Strahlformung, da die meisten Energiestrahlquellen, insbesondere Laser, wie erwähnt bereits einen Strahl mit einer gaußförmigen Intensitätsverteilung erzeugen.

Durch eine Kombination eines ersten Energiestrahls mit einer Top-Hat-Intensitätsverteilung zur Bereitstellung der homogenen Grundintensität im Gesamt-Intensitätsprofil und eines relativ dazu sehr schnell innerhalb der Gesamt-Intensitätsverteilung bewegten zweiten Energiestrahls mit einer Gauß-Intensitätsverteilung lassen sich nahezu beliebige Gesamt-Intensitätsverteilungen innerhalb des Kombinations-Energiestrahls erzeugen.

Vorzugsweise ist dabei der zweite Energiestrahl "kleiner" bzw. "feiner" als der erste Energiestrahl, d. h. der zweite Energiestrahl weist, insbesondere bei der Einkopplung in den gemeinsamen Strahlengang durch die Energiestrahl-Bewegungseinheit (also an der Einkopplungsstelle, z. B. auf dem ersten Scannerspiegel eines üblichen Scannersystems), eine geringere maximale Strahlausdehnung als der erste Energiestrahl auf.

Unter einer Strahlausdehnung ist in diesem Sinne eine beliebige Abmessung bzw. Strecke quer (zur Strahlachse) durch den Strahl zu verstehen, also beispielsweise ein Strahldurchmesser bzw. eine Strahlbreite, wobei unter einer Strahlbreite immer die Ausdehnung senkrecht zur aktuellen Bewegungsrichtung der Auftrefffläche auf dem Baufeld zu verstehen ist. Dabei muss die Strecke nicht zwingend durch die Strahlachse bzw. das Zentrum der (Gesamt-)Intensitätsverteilung verlaufen, insbesondere wenn der Energiestrahl keine rotationssymmetrische Intensitätsverteilung aufweist. Die Strahlausdehnung wird hierbei so definiert, dass sie auf der definierten Strecke von einem Rand zum gegenüberliegenden Rand der Intensitätsverteilung verläuft, wobei der Rand wiederum hier willkürlich so definiert wird, dass 99 % der Strahlungsleistung des Energiestrahls sich innerhalb des Randes (d. h. in der durch den Rand eingeschlossenen Fläche) befinden.

Beispielsweise kann die Strahlausdehnung des ersten Energiestrahls mindestens 500 $\mu$m, bevorzugt mindestens 700 $\mu$m, weiter bevorzugt mindestens 900 $\mu$m, noch weiter bevorzugt mindestens 1000 $\mu$m, noch weiter bevorzugt mindestens 1100 $\mu$m, noch weiter bevorzugt mindestens 1200 $\mu$m, noch weiter bevorzugt mindestens 1500 $\mu$m, besonders bevorzugt mindestens 2 mm betragen. Alternativ oder zusätzlich beträgt die maximale Strahlausdehnung des ersten Energiestrahls maximal 10 mm, bevorzugt maximal 6 mm, weiter bevorzugt maximal 4 mm, besonders bevorzugt maximal 3 mm.

Die Strahlausdehnung des zweiten Energiestrahls, der relativ zu diesem ersten Energiestrahl bewegt wird bzw. vorzugsweise innerhalb der Strahlausdehnung des ersten Energiestrahls bewegt wird, beträgt mindestens 20 $\mu$m, bevorzugt mindestens 50 $\mu$m, besonders bevorzugt mindestens 80 $\mu$m. Höchstens beträgt diese maximale Strahlausdehnung des zweiten Energiestrahls jedoch 300 $\mu$m, bevorzugt höchstens 200 $\mu$m, besonders bevorzugt höchstens 100 $\mu$m.

Eine Verhältnis der Strahlausdehnung des zweiten Energiestrahls zur Strahlausdehnung des kombinierten Energiestrahls und/oder des ersten Energiestrahls beträgt dabei bevorzugt maximal 1:3, weiter bevorzugt maximal 1:5, noch weiter bevorzugt maximal 1:10, noch weiter bevorzugt maximal 1:20.

Bei im Wesentlichen kreisrunder Form des ersten und zweiten sowie des kombinierten Energiestrahls beträgt das Verhältnis des Durchmessers des zweiten Energiestrahls zum Durchmesser des kombinierten Energiestrahls und/oder zum Durchmesser des ersten Energiestrahls bevorzugt zumindest 1:100, besonders bevorzugt zumindest 1:50.

Ganz besonders bevorzugt ist eine Kombination, bei der die Strahlausdehnung, beispielsweise ein Durchmesser, des ersten Energiestrahls und damit auch die Strahlausdehnung bzw. der Durchmesser des Kombinations-Energiestrahls 1000 $\mu$m (mit einer Top-Hat-Intensitätsverteilung) beträgt und der zweite Energiestrahl (mit einer Gauß-Intensitätsverteilung) eine Strahlausdehnung, beispielsweise einen Strahldurchmesser, von 80 $\mu$m aufweist.

Wie eingangs erwähnt, kann die Relativbewegung des zweiten Energiestrahls relativ zum ersten Energiestrahl (bzw. die Bewegung des zweiten Energiestrahls innerhalb des Kombinations-Energiestrahls) auf beliebigen Bahnen und in beliebiger Weise erfolgen. Bevorzugt erfolgt aber die Relativbewegung des zweiten Energiestrahls relativ zum ersten Energiestrahl zyklisch, d. h. es wird immer wiederkehrend vom zweiten Energiestrahl innerhalb des Kombinations-Energiestrahls auf einer geschlossenen Kurve die gleiche Position angefahren. Insbesondere bei einer geraden, rein translatorischen Scanbewegung des Kombinations-Energiestrahls wird besonders bevorzugt bei der Relativbewegung des zweiten Energiestrahls die gleiche Position (relativ zum ersten Energiestrahl) in gleichen Zeitabständen passiert.

Zusätzlich oder alternativ wird auch die Intensität entsprechend zyklisch moduliert. Zum Beispiel kann das Steuersignal zur Intensitätsmodulation des zweiten Energiestrahls, vorzugsweise ein Generatorsignal für eine zweite Energiestrahlquelle, welche den zweiten Energiestrahl erzeugt, als ein sinusförmiges Signal oder Ähnliches ausgebildet sein. Auf diese Weise wird automatisch eine zyklische Intensitätsmodulation erreicht.

Soll beispielsweise, wie dies später noch erläutert wird, die Intensitätsverteilung insoweit geändert werden, dass beispielsweise ein Maximum verschoben wird, kann dies dann z. B. einfach durch eine Phasenverschiebung des Generatorsignals erfolgen.

Die erste Energiestrahlquelle und/oder die erste Energiestrahl-Bewegungseinheit und/oder eine Energiestrahl-Modulationseinheit können so ausgebildet und von einer Steuereinrichtung entsprechend angesteuert werden, um eine solche zyklische Relativbewegung bzw. Intensitätsmodulation zu gewährleisten.

Besonders bevorzugt erfolgen die Relativbewegung und/oder die Intensitätsmodulation des zweiten Energiestrahls gleichmäßig, insbesondere bei einer geraden, rein translatorischen Scanbewegung des Kombinations-Energiestrahls. Bezüglich der Relativbewegung ist hierunter zu verstehen, dass der Betrag der Relativgeschwindigkeit gleich bleibt und sich nicht während der Bewegung ändert, sondern lediglich die Bewegungsrichtung; bezüglich der Intensitätsmodulation ist hierunter zu verstehen, dass die Modulation stufenlos erfolgt.

Ganz besonders bevorzugt bewegt sich der zweite Energiestrahl entlang des Rands der Intensitätsverteilung des ersten Energiestrahls. Vorzugsweise erfolgt dies so, dass sich zumindest ein Maximum der Intensitätsverteilung, bei einem Gaußprofil also das Zentrum, des zweiten Energiestrahls innerhalb einer durch den Rand begrenzten Fläche der ersten Intensitätsverteilung bewegt. Besonders bevorzugt wird dafür gesorgt, dass der Rand der Gesamt-Intensitätsverteilung des Kombinations-Energiestrahls im Wesentlichen mit dem Rand der Intensitätsverteilung des ersten Energiestrahls übereinstimmt oder diese zumindest relativ nah, z. B. < 20 μm, aneinander liegen, so dass der Gesamtdurchmesser des Kombinations-Energiestrahls im Wesentlichen durch den Durchmesser des ersten Energiestrahls definiert wird. Bevorzugt beträgt die Abmessungsdifferenz zwischen dem Rand der Gesamt-Intensitätsverteilung des Kombinations-Energiestrahls und dem Rand der Intensitätsverteilung des ersten Energiestrahls maximal ca. 40%, weiter bevorzugt maximal ca. 25%, besonders bevorzugt maximal ca. 15%, einer Strahlausdehnung des zweiten ("kleineren") Energiestrahls. Bevorzugt liegt dabei mindestens ein Maximum der Intensitätsverteilung des zweiten Energiestrahls innerhalb der Intensitätsverteilung des ersten Energiestrahls.

Diese Vorgehensweise, bei der der zweite Energiestrahl entlang einer Kreisbahn entlang des Rands bzw. innerhalb des Rands der Intensitätsverteilung des ersten Energiestrahls verfahren wird, ist insbesondere dann bevorzugt, wenn der erste Energiestrahl eine rotationssymmetrische bzw. kreisförmige Intensitätsverteilung und ganz besonders bevorzugt eine Top-Hat-Intensitätsverteilung aufweist.

Um eine solche Relativbewegung des zweiten Energiestrahls relativ zum ersten Energiestrahl entlang einer geschlossenen Bahn, insbesondere Kreisbahn, zu erreichen, kann bei einem optischen Energiestrahl, beispielsweise einen Laserstrahl, bevorzugt ein rotierendes optisches Element, beispielsweise ein Strahlversatzelement oder ein Reflektor, insbesondere eine sogenannte Planplatte und/oder ein Spiegel, genutzt werden.

Das heißt, die erste Energiestrahl-Bewegungseinheit umfasst bevorzugt eine Rotationseinheit mit einem rotierbaren optischen Element. Dieses optische Element kann beispielsweise mit einem geeigneten Motor angetrieben werden, wobei die Rotation relativ schnell erfolgen kann, nämlich so, dass betragsmäßig die gewünschte schnelle Rotation bzw. Bewegung des zweiten Energiestrahls relativ zur Scangeschwindigkeit erreicht wird. Beispielsweise könnte die Rotation des optischen Elements bei einem Radius einer Kreisbewegung eines parallel zur virtuellen Strahlachse verlaufenden zweiten Energiestrahls von 2 mm und einer Be-wegungsgeschwindigkeit (also dessen Bahngeschwin-digkeit auf seiner zyklischen Bahn) von 5 m/s mit ca. 400 Umdrehungen pro s, bei einer Bewegungsgeschwindigkeit des zweiten Energiestrahls von 31 m/s mit ca. 2500 Umdrehungen pro s, bei einer Bewegungsgeschwindigkeit des zweiten Energiestrahls von 50 m/s mit ca. 4000 Umdrehungen pro s erfolgen.

Vorzugsweise kann also durch eine derartige Rotationseinheit mit einem rotierbaren optischen Element der Strahlengang des zweiten Energiestrahls so umgelenkt werden, dass er auf einer "virtuellen Zylindermantelfläche" um eine "virtuelle Rotationsachse" rotiert und dabei immer parallel zu dieser virtuellen Rotationsachse verläuft. Diese virtuelle Rotationsachse entspricht dann der oben definierten virtuellen Strahlachse bzw. dem virtuellen Strahlengang des zweiten Energiestrahls.

Zur konkreten Realisierung einer solchen Rotationseinheit gibt es verschiedene Möglichkeiten.

Bei einer bevorzugten Variante weist die erste Energiestrahl-Bewegungseinheit wie erwähnt ein trans-missives Strahlversatzelement, vorzugsweise eine Plan-platte bzw. planparallele Platte, auf. Dieses Strahlversatzelement kann z. B. schräg im Strahlengang des zweiten Energiestrahls um eine Rotationsachse rotierbar angeordnet sein, wobei die Rotationsachse koaxial zum (eingehenden) Strahlengang des eingehenden bzw. ankommenden zweiten Energiestrahls verläuft. Dadurch kann dafür gesorgt werden, dass der ausgehende Strahlengang zu jedem Zeitpunkt um einen definierten Achsabstand parallel zur Rotationsachse verschoben um die Rotationsachse rotiert. Die virtuelle Rotationsachse des zweiten Energiestrahls und die reale Rotationsachse des Strahlversatzelements liegen dabei koaxial zueinander. Der Achsabstand kann z. B. durch eine Dicke der jeweils verwendeten Planplatte eingestellt bzw. variiert werden.

In einer konkreten Realisierung kann beispielsweise das optische Element, insbesondere die Planplatte, in einer rotierenden Hohlwelle mit einem geeigneten Antriebsmotor angeordnet sein, wobei sowohl die tatsächliche Strahlachse bzw. der tatsächliche Strahlengang des eingehenden zweiten Energiestrahls durch die Längsachse der Hohlwelle verläuft, die auch die Rotationsachse der Hohlwelle ist, als auch die virtuelle Strahlachse bzw. der virtuelle Strahlengang des ausgehenden zweiten Energiestrahls.

Bei einer weiteren bevorzugten Variante umfasst die erste Energiestrahl-Bewegungseinheit als rotierbares bzw. im Betrieb rotierendes optisches Element einen Reflektor, wie z. B. einen Spiegel. Der Reflektor bzw. Spiegel kann z. B. ebenfalls schräg im Strahlengang des zweiten Energiestrahls (d. h. die Spiegeloberfläche liegt schräg zum eingehenden Strahl, um diesen abzulenken) und um eine Rotationsachse (wieder mit einem geeigneten ansteuerbaren Antriebsmotor versehen) rotierbar angeordnet sein, sodass die Spiegelebene nicht senkrecht oder parallel zur Rotationsachse orientiert ist. Dadurch wird erreicht, dass der ausgehende Strahlengang des zweiten Energiestrahls entsprechend der Schrägstellung des Spiegels unter einem Winkel von der Rotationsachse des im Betrieb rotierenden optischen Elements weg verläuft.

Vorzugsweise kann der Reflektor bzw. der Spiegel so aufgebaut und angeordnet sein, dass ausgehend von einer Senkrechten zur Rotationsachse die Neigung der Spiegelebene zyklisch zwischen einem Winkel + α und einem Winkel - α variiert. Im Verlauf der Rotation des Spiegels bzw. seiner definierten Bewegung ändert sich damit korrespondierend ein Eingangswinkel des eingehenden zweiten Energiestrahls relativ zur Spiegelebene und daher auch ein Ausgangswinkel des ausgehenden zweiten Energiestrahls. Der rotierende zweite Energiestrahl bewegt sich vorzugsweise auf einem Kegelmantel, wobei die Kegelspitze in der Spiegelebene liegt.

Je nach konkreter Ausgestaltung kann die (gedachte Verlängerung der) Rotationsachse des optischen Elements koaxial zum (eingehenden) Strahlengang des eingehenden zweiten Energiestrahls verlaufen, aber auch ein Aufbau mit einer verkippten Rotationsachse des optischen Elements ist möglich. Beispiele hierfür werden später noch ausgeführt.

Gemäß dieser bevorzugten Ausgestaltung der Erfindung kann dem Reflektor bzw. Spiegel im weiteren Strahlengang des zweiten Energiestrahls ein weiteres optisches Element nachgeschaltet sein, welches den vom Reflektor bzw. Spiegel ausgehenden realen Strahlengang so umlenkt, dass dieser mit einer Rotation des rotierbaren optischen Elements auf der oben bereits erwähnten virtuellen Zylindermantelfläche um eine virtuelle Rotationsachse rotiert.

Mit anderen Worten liegen in dem Abschnitt des Strahlengangs unmittelbar nach Durchqueren des weiteren optischen Elements, d. h. auf der Seite des optischen Elements, die dem rotierbaren Spiegel abgewandt ist und an der der Energiestrahl austritt, alle möglichen Strahlengänge des zweiten Energiestrahls parallel zueinander. Hierzu kann vorzugsweise ein optisches Element verwendet werden, in dessen Fokus sich das Rotationszentrum des rotierenden Spiegels befindet. Mit anderen Worten ist demgemäß der Fokus bzw. Brennpunkt des optischen Elements (auf einer dem Spiegel zugewandten Seite des optischen Elements) möglichst nah an, vorzugsweise exakt auf der Oberfläche des rotierenden Spiegels und möglichst nah bei, vorzugsweise exakt an der Stelle angeordnet, an der die Rotationsachse des Spiegels die Spiegelebene schneidet. Besonders bevorzugt schneidet im Betrieb die reale Strahlachse des auf der Spiegelebene des Spiegels auftreffenden zweiten Energiestrahls die Rotationsachse des rotierenden Spiegels in der Spiegelebene.

Als optisches Element kann beispielsweise eine Linsengruppe und/oder eine Sammellinse verwendet werden, wie etwa eine bikonvexe Linse. Der Fokus bzw. Brennpunkt des optischen Elements auf seiner dem Spiegel abgewandten Seite kann nominell im Unendlichen liegen. Ein Vorteil dieser Ausgestaltungsform liegt darin, dass der ausgehende reale Strahlengang des zweiten Energiestrahls, zu jedem Zeitpunkt, wie oben beschrieben, parallel zur virtuellen Rotationsachse um einen Achsabstand verschoben, um die virtuelle Rotationsachse rotiert.

Bevorzugt kann der parallele Achsabstand des Strahlengangs des zweiten Energiestrahls zu seiner Rotationsachse und somit auch später zum Strahlengang des ersten Energiestrahls eingestellt werden.

Gemäß einer ersten Ausführungsform umfasst die erste Energiestrahl-Bewegungseinheit zu diesem Zweck eine Einrichtung zum Einstellen bzw. Verändern der Schrägstellung des Reflektors bzw. Spiegels relativ zur Rotationsachse des Reflektors bzw. Spiegels. Selbst bei Verwendung eines einfachen optischen Elements mit einem festen Fokuspunkt bzw. Brennpunkt kann damit der Radius der zyklischen Bewegung des zweiten Energiestrahls um seine Rotationsachse, vorzugsweise während des laufenden Betriebs einer erfindungsgemäßen Bestrahlungsvorrichtung, variiert werden. Wenn das im Strahlverlauf dem Spiegel nachgeschaltete optische Element an ein vorgegebenes Spektrum von Einfallswinkeln des zweiten Energiestrahls konstruktiv angepasst ist, sodass es eingangsseitig einen einzigen Brennpunkt aufweist, der auch bei unterschiedlicher Schrägstellung des Spiegels, d. h. bei unterschiedlichen Winkeln des auf das optische Element auftreffenden zweiten Energiestrahls, stets in der Spiegelebene (vorzugsweise im Rotationszentrum des rotierenden Spiegels) liegt, ist eine zusätzliche Einrichtung zum Verstellen einer Distanz zwischen dem Spiegel und der Sammellinse hier nicht zwingend notwendig. Gemäß dieser ersten Ausführungsform kann der Radius der zyklischen Bewegung des zweiten Energiestrahls um seine Rotationsachse zumindest in Stufen, vorzugsweise stufenlos variiert werden.

Gemäß einer zweiten Ausführungsform umfasst die erste Energiestrahl-Bewegungseinheit zu diesem Zweck als optisches Element ein pankratisches System (auch bekannt als "Zoom"), das ein Verändern der Brennweite ermöglicht. Bevorzugt umfasst diese zweite Ausführungsform zusätzlich eine Einrichtung zur Fokusverstellung des optischen Elements (gemeint ist wiederum der Brennpunkt, der auf jener Seite im Strahlengang liegt, die dem rotierbaren Spiegel zugewandt ist), sodass bei einer Brennweitenveränderung der Fokus mitgeführt werden kann und somit mit geringem (positivem oder negativem) zeitlichen Versatz zur Brennweitenveränderung genau in der Spiegelebene angeordnet ist. Besonders bevorzugt ist das pankratische System parfokal ausgebildet, sodass eine Fokussierung auf die Spiegelebene beim Verändern der Brennweite konstant bleibt. Die das optische Element bildende Optikvorrichtung ist, wie erwähnt, vorzugsweise so ausgebildet, dass die ausgehenden Strahlen parallel zueinander ausgerichtet sind, d. h. der Brennpunkt nominell im Unendlichen liegt. Auch gemäß dieser zweiten Ausführungsform kann der Radius der zyklischen Bewegung des zweiten Energiestrahls um seine Rotationsachse zumindest in Stufen, vorzugsweise stufenlos variiert werden.

Gemäß einer dritten Ausführungsform umfasst die erste Energiestrahl-Bewegungseinheit eine Verstelleinrichtung zum Verstellen einer Distanz zwischen dem Spiegel und dem optischen Element entlang der Rotationsachse des zweiten Energiestrahls. Je größer die Distanz gewählt wird, desto weiter (radial) entfernt von seiner Rotationsachse trifft der zweite Energiestrahl auf das optische Element auf und desto größer ist somit der Radius, mit dem sich der ausgehende zweite Energiestrahl nach Durchqueren des optischen Elements um seine Rotationsachse bewegt. Bevorzugt umfasst diese dritte Ausführungsform zusätzlich, wie oben erwähnt, eine Einrichtung zur Fokusverstellung des optischen Elements (gemeint ist wiederum der Brennpunkt, der auf jener Seite im Strahlengang liegt, die dem rotierbaren Spiegel zugewandt ist), sodass bei einer Distanzveränderung der Fokus mitgeführt werden kann und somit mit geringem (positivem oder negativem) zeitlichen Versatz zur Distanzveränderung genau in der Spiegelebene angeordnet ist.

Gemäß einer vierten Ausführungsform umfasst die erste Energiestrahl-Bewegungseinheit als optisches Element zumindest eine Axicon-Linse oder ein wirkungsgleiches System aus einer oder mehreren Linsen bzw. Spiegeln. Die Axicon-Linse besteht in Strahlverlaufsrichtung aus einem kegelförmigen Linsensegment und einem integral damit verbundenen zylindrischen Linsensegment. Sie ist typischerweise rotationssymmetrisch ausgebildet. Die Steigung des Kegelmantels ist dabei derart auf ein vorgegebenes Winkelspektrum des eingehenden zweiten Energiestrahls angepasst, dass die aus dem Axicon ausgehenden Strahlen stets parallel zueinander bzw. auch parallel zur Rotationsachse des zweiten Energiestrahls und gleichzeitig parallel zur optischen Achse des Axicon verlaufen. Dazu muss der zweite Energiestrahl in konstantem Winkel auf die Kegelmanteloberfläche treffen. Die Axicon-Linse bewirkt also, dass ein eingehender Strahlengang in Form eines Kegelmantels (in "quasi-stationärer" Betrachtung) in einen zylindermantelförmigen ausgehenden Strahlengang umgewandelt wird. Mit anderen Worten ist sie auch so ausgebildet, dass sie den durch die Schrägstellung des rotierenden Spiegels zur Strahlachse divergierenden Strahl parallel zur Strahlachse richtet. Bevorzugt ist das Axicon derart relativ zum rotierbaren Spiegel angeordnet, dass die optische Achse des Axicon die Spiegelebene im Rotationszentrum schneidet. Um eine Änderung des Abstands (Radius) des rotierenden zweiten Energiestrahls zu seiner Rotationsachse zu erhalten, kann der Abstand zwischen der Axicon-Linse und dem rotierenden Spiegel entlang der Rotationsachse des zweiten Energiestrahls bzw. der optischen Achse des Axicon geändert werden. Zu diesem Zweck umfasst die erste Energiestrahl-Bewegungseinheit bevorzugt zusätzlich eine Verstelleinrichtung.

Die oben genannten Ausführungsformen lassen sich auch in geeigneter Weise kombinieren.

Bei der Überlagerung des ersten Energiestrahls mit dem zweiten Energiestrahl wird dann dafür gesorgt, dass die virtuelle Rotationsachse bzw. gedachte Verlängerung der Rotationsachse, um welche der Strahlengang des zweiten Energiestrahls rotiert, koaxial zum Strahlengang des ersten Energiestrahls verläuft. Dadurch ist gewährleistet, dass die Intensitätsverteilung des zweiten Energiestrahls auf einer Kreisbahn um das Zentrum der Intensitätsverteilung des ersten Energiestrahls, also um die Strahlachse des ersten Energiestrahls, herum rotiert.

Insbesondere mit den vorgenannten Vorrichtungen und Verfahren lässt sich eine besonders bevorzugte Gesamt-Intensitätsverteilung erzeugen, welche (wie oben erläutert) zeitlich integriert - mit einer Integrations-Zeitspanne von z. B. einem oder einem Vielfachen des Bewegungszyklus der Bewegung des zweiten Energiestrahls relativ zum ersten Energiestrahls - wie folgt parametrisiert ist:
Die Gesamt-Intensitätsverteilung weist in einem mittleren Bereich zumindest ein lokales Minimum entlang zumindest einer Sekante einer Randkurve der Gesamt-Intensitätsverteilung in der senkrecht zur Strahlachse des Kombinations-Energiestrahls verlaufenden Schnittebene auf. Eine "Sekante" im Sinne der vorliegenden Erfindung verläuft von einer Seite zur anderen Seite durch eine Fläche der Intensitätsverteilung, d. h. sie schneidet den Rand der Intensitätsverteilung an genau zwei voneinander beabstandeten Stellen, und kann, muss aber nicht durch die Strahlachse bzw. das Zentrum der Intensitätsverteilung verlaufen (in diesem Fall würde die Sekante einem Durchmesser entsprechen), unabhängig von der genauen Form bzw. dem Verlauf der Randkurve bzw. des Randes. Die Sekante liegt also insbesondere nicht ausschließlich auf der Randkurve. Bevorzugt läuft die Sekante quer, vorzugsweise im Wesentlichen senkrecht, zur Scanrichtung des Energiestrahls auf dem Baufeld. Auch bevorzugt läuft die Sekante durch einen geometrischen Schwerpunkt der Form bzw. Gestalt der Gesamt-Intensitätsverteilung in der Schnittebene.

Unter dem "mittleren Bereich" ist hierbei ein zentraler Bereich der Gesamt-Intensitätsverteilung zu verstehen, d. h. das lokale Minimum befindet sich in dem Bereich der Sekante, die durch diesen mittleren Bereich verläuft. Er wird unterschieden von einem Randbereich der Gesamt-Intensitätsverteilung, welcher entlang des oben definierten Randes der Gesamt-Intensitätsverteilung verläuft und sich vom Rand aus in die Gesamt-Intensitätsverteilung hinein erstreckt und zwar beispielsweise bevorzugt um zumindest eine Strahlausdehnung bzw. Strahlbreite des sich relativ zum ersten Energiestrahl bewegenden zweiten Energiestrahls.

Vorzugsweise bringt der sich relativ zum ersten Energiestrahl bewegende zweite Energiestrahl 99% seiner Energie im Randbereich der Gesamt-Intensitätsverteilung ein.

Zudem weist diese Gesamt-Intensitätsverteilung bevorzugt eine entlang eines Rands der Gesamt-Intensitätsverteilung (im Wesentlichen parallel, also im gleichen Abstand, zum Rand nach innen verschobene, z. B. zum Rand konzentrische) (vollständig) umlaufende Intensitätsprofilkurve auf, die an zumindest einer Stelle einen Maximalwert und in einem dem Maximalwert auf dieser Intensitätsprofilkurve gegenüberliegenden Bereich einen lokalen Minimalwert aufweist. Unter einer "Intensitätsprofilkurve" ist dabei, wie bereits oben erwähnt, ein Intensitätsverlauf der Intensitätsverteilung in Abhängigkeit vom Ort entlang einer definierten, entsprechend gewählten Kurve zu verstehen. Der Begriff "lokaler Minimalwert" ist dabei so zu verstehen, dass es sich um einen Minimalwert bezüglich des Verlaufs der Intensitätswerte auf dieser Intensitätsprofilkurve handelt, d. h. wenn die Intensität entlang dieser Intensitätsprofilkurve gemessen wird und in einem Diagramm aufgetragen wird, so zeigt sich hier ein lokaler Minimalwert.

Unter einem dem Maximalwert "gegenüberliegenden Bereich" auf der Intensitätsprofilkurve ist ein Bereich zu verstehen, der in beiden Richtungen entlang der Intensitätsprofilkurve maximal einen Winkel von 60°, bevorzugt höchstens 50°, weiter bevorzugt höchstens 40°, noch weiter bevorzugt höchstens 30°, besonders bevorzugt höchstens 10° ausgehend von der diametral dem Maximalwert auf der Intensitätsprofilkurve gegenüberliegenden Position einschließt. Ganz besonders bevorzugt liegt der lokale Minimalwert im Wesentlichen (d. h. in den üblichen Toleranzen) diametral dem Maximalwert gegenüberliegend auf der Intensitätsprofilkurve. Der Begriff "diametral" bezieht sich im engeren Sinne insbesondere auf kreisförmig verlaufende Intensitätsprofilkurven. Allgemeiner, also auch bei einer unregelmäßigen Gestalt der Intensitätsprofilkurve, lässt sich aber zum Beispiel ein entsprechender gegenüberliegender Punkt so konstruieren, dass eine Sekante ausgehend von dem Maximalwert durch den Schwerpunkt der vom Rand der Intensitätsverteilung eingeschlossenen Fläche gelegt wird; dort, wo die Sekante die Intensitätsprofilkurve wieder schneidet, ist dann der "diametrale" gegenüberliegende Punkt im Sinne dieser Anmeldung.

Bei dieser bevorzugten Gesamt-Intensitätsverteilung bzw. diesem Kombinations-Energiestrahl ist also dafür gesorgt, dass bewusst in einem peripheren Bereich entlang des Rands zumindest abschnittsweise, vorzugsweise rundumlaufend, eine höhere Intensität als in einem zentralen Bereich erreicht wird. Im Zentrum, d. h. an der Strahlachse und/oder in einem kurzen Abstand dazu, beispielsweise innerhalb eines halben Wegs von Zentrum zum Rand, befindet sich ein lokales Minimum.

Durch die zweite Parametrisierung der Gesamt-Intensitätsverteilung mit einem Maximalwert und einem gegenüberliegenden Minimalwert auf einer entlang des Randes umlaufenden Intensitätsprofilkurve wird zudem dafür gesorgt, dass die Gesamt-Intensitätsverteilung des Kombinations-Energiestrahls, bezogen auf eine koaxial zur Einfallsrichtung des Kombinations-Energiestrahls auf das Material bzw. Baufeld verlaufende Rotationsachse, bewusst nicht rotationssymmetrisch ist.

Wie später noch anhand von Ausführungsbeispielen erläutert wird, kann dabei dafür gesorgt werden, dass die Gesamt-Intensitätsverteilung eine lokale Intensitätserhöhung aufweist, die sich in einem zumindest teilringförmig umlaufenden Randbereich (bzw. in einem Segment des ringförmigen Randbereichs) der Gesamt-Intensitätsverteilung erstreckt. Mit anderen Worten weist die Gesamt-Intensitätsverteilung in zumindest einem Bereich entlang ihrer Kontur in einem kurzen Abstand zum Rand eine im Verhältnis zu einem mittleren Bereich erhöhte Intensität (d. h. einen gegenüber einer Umgebung lokalen Maximalbereich) auf. Als Randbereich ist hierbei wieder der Bereich zwischen dem oben definierten zentralen Bereich und dem Rand zu verstehen. Die umlaufende Intensitätsprofilkurve verläuft zumindest abschnittsweise bevorzugt entlang des teilringförmig umlaufenden Randbereichs.

Durch die lokale Intensitätserhöhung an einer Stelle auf der Intensitätsprofilkurve und das lokale Minimum im Bereich auf der gegenüberliegenden Seite der Intensitätsprofilkurve kann insbesondere eine Gesamt-Intensitätsverteilung mit einer Art sichelförmigen Intensitätserhöhung erzeugt werden.

Bevorzugt wird dafür gesorgt, dass der Maximalwert auf der umlaufenden Intensitätsprofilkurve in einem in einer Scanrichtung vorne liegenden Randbereich der Gesamt-Intensitätsverteilung liegt. Entsprechend würde das lokale Minimum auf der Intensitätsprofilkurve in einem in der Scanrichtung hinten liegenden Randbereich liegen. Dadurch wird nicht ausgeschlossen, dass weitere lokale Maxima und lokale Minima auf der Intensitätsprofilkurve existieren.

Bei dem in Scanrichtung "vorne liegenden Randbereich" kann es sich bevorzugt um eine Strecke über ein Bogenmaß von höchstens ca. 2/3 $\pi \cdot r$ (r ist hier der Umlaufradius, welcher je nach Strahlform äquivalent mit dem Krümmungsradius sein kann. Dabei sei für eine beliebige Strahlform bzw. Form der Intensitätsverteilung definiert, dass der Umfang des Profils der Strahlform als $2 \cdot \pi \cdot r$ definiert ist), weiter bevorzugt von höchstens ca. ½ $\pi \cdot r$, noch weiter bevorzugt von höchstens ca. 1/3 $\pi \cdot r$, besonders bevorzugt von höchstens ca. 1/6 $\pi \cdot r$ handeln, wobei die von dem sich daraus ergebenden jeweilige Winkelbereich erfasste Fläche den in der Scanrichtung zuvorderst liegenden Punkt der Intensitätsverteilung einschließt.

Insbesondere kann es sich bei einer kreisförmigen Intensitätsverteilung also um einen Winkelbereich (bei einer kreisförmigen Intensitätsverteilung um ein Ringsegment) von höchstens ca. 120°, weiter bevorzugt von höchstens ca. 90°, noch weiter bevorzugt von höchstens ca. 60°, besonders bevorzugt von höchstens ca. 30° handeln, wobei die vom jeweilige Winkelbereich erfasste Fläche den in der Scanrichtung zuvorderst liegenden Punkt der Intensitätsverteilung einschließt.

Bevorzugt ist der Minimalwert auf der Intensitätsprofilkurve höher als das lokale Minimum im mittleren Bereich, d. h. im Zentrum bzw. nahe dem Zentrum der Gesamt-Intensitätsverteilung.

Im Bereich des Minimums im mittleren Bereich liegt die Intensität bevorzugt maximal bei 1,5 MW/cm². Vorzugsweise beträgt die Intensität hier mindestens 0,05 MW/cm².

Bevorzugt ist die Intensität auf der am Rand entlanglaufenden Intensitätsprofilkurve an jeder Stelle höher als das lokale Minimum im mittleren Bereich der Gesamt-Intensitätsverteilung. D. h., die Gesamt-Intensitätsverteilung weist im Randbereich eine vollständige ringförmige Intensitätserhöhung auf, wobei jedoch der Betrag der Intensitätserhöhung je nach Lage auf dem Umfang unterschiedlich ist.

Das Verhältnis der Intensität des Maximalwerts auf der umlaufenden Intensitätsprofilkurve, also z. B. in einem Punkt der lokalen, am Rand entlang laufenden Intensitätserhöhung, zur Intensität in einem lokalen Minimum, insbesondere im mittleren Bereich der Gesamt-Intensitätsverteilung, beträgt vorzugsweise maximal 10:1, bevorzugt maximal 9:1, weiter bevorzugt maximal 8:1, besonders bevorzugt 7:1.

Vorzugsweise beträgt das Verhältnis der Intensität des Minimalwerts auf der umlaufenden Intensitätsprofilkurve zur Intensität in einem lokalen Minimum mindestens 1,5:1, bevorzugt mindestens 2:1, weiter bevorzugt mindestens 3:1, besonders bevorzugt mindestens 4:1.

Bevorzugt ist der Maximalwert auf der am Rand entlanglaufenden Intensitätsprofilkurve zumindest eineinhalbmal, weiter bevorzugt zumindest zweimal, noch weiter bevorzugt zumindest dreimal, besonders bevorzugt zumindest viermal höher als der lokale Minimalwert in dem auf der Intensitätsprofilkurve gegenüberliegenden Bereich. Ebenso bevorzugt ist der Maximalwert auf der am Rand entlanglaufenden Intensitätsprofilkurve maximal achtmal, weiter bevorzugt maximal siebenmal, noch weiter bevorzugt maximal sechsmal, besonders bevorzugt maximal fünfmal höher als der lokale Minimalwert in dem auf der Intensitätsprofilkurve gegenüberliegenden Bereich.

Zwischen dem Maximalwert und dem Minimalwert in dem auf der Intensitätsprofilkurve gegenüberliegenden Bereich kann die (ortsabhängige) Funktion der Intensitätswerte entlang der Intensitätsprofilkurve im Prinzip beliebig verlaufen. Besonders bevorzugt verläuft sie gekrümmt. Es handelt sich bevorzugt um eine "glatte" Funktion ohne Sprünge. Bevorzugt ist diese Funktion an jeder Stelle zumindest einmal differenzierbar, weiter bevorzugt mindestens zweimal differenzierbar, besonders bevorzugt beliebig oft differenzierbar.

Vorzugsweise wird die Intensität des zweiten Energiestrahls durch Steuerung der Leistung des zweiten Energiestrahls moduliert, der sich relativ zum ersten Energiestrahl bewegt. Die Modulation erfolgt besonders bevorzugt mit einem glatten und periodischen Steuersignal. Bevorzugt ist die Funktion des Steuersignals entsprechend der o. g. bevorzugten Funktion der Intensitätswerte entlang der Intensitätsprofilkurve an jeder Stelle zumindest einmal differenzierbar, weiter bevorzugt mindestens zweimal differenzierbar, besonders bevorzugt beliebig oft differenzierbar. Ein ideales Sollsteuersignal kann beispielweise durch trigonometrische Funktionen wie ein Sinus- oder Cosinus-Signal oder eine Linearkombination an trigonometrischen Funktionen approximiert oder exakt abgebildet werden. Ebenso könnte man auch ein beliebig anderes Steuerungsprogramm bzw. einen Algorithmus nutzen, das/der eine über einen Umlauf (z. B. von $-\pi$ bis $+\pi$) definierte Funktion periodisch wiederholt. Eine Verschiebung der Maximal- und Minimalwerte der Intensität des zweiten Energiestrahls entlang seiner (relativen) Bewegungsbahn kann durch eine Phasenverschiebung des periodischen Steuersignals erfolgen.

Ein mögliches Generatorsignal, um den zweiten Energiestrahl zu modulieren, könnte beispielsweise mittels folgender Funktion beschrieben werden:

$$u(t) = A \cos\left(\frac{\omega t + \theta(t)}{2}\right)^{2n} + c$$

Dabei ist A die Differenz zwischen dem lokalen Minimalwert und dem lokalen Maximalwert, $\omega$ steht für die Winkelgeschwindigkeit einer Rotation des zweiten Energiestrahls um seine virtuelle Rotationsachse, $t$ bezeichnet die Zeit, $\theta(t)$ bezeichnet die oben genannte (zeitabhängige) Phasenverschiebung für eine Verschiebung der Minima und Maxima auf der Intensitätsprofilkurve, die Zahl $n$ im Exponenten ist eine natürliche Zahl und $c$ stellt eine Konstante dar. Durch Erhöhen des Exponenten $n$ kann die Intensitätsprofilkurve so ausgeführt werden, dass sie vom lokalen Maximalwert zu beiden Richtungen steiler abfällt.

Wie bereits oben erwähnt, ist es einer der Vorzüge der Erfindung, dass die Gesamt-Intensitätsverteilung des Kombinations-Energiestrahls sehr schnell geändert werden kann. Bevorzugt wird dabei die Gesamt-Intensitätsverteilung des Energiestrahls in Abhängigkeit von einem Auftreffflächen-Umgebungsparameter, bezogen auf eine in der Scanrichtung liegenden Symmetrieachse, im Wesentlichen achsensymmetrisch oder im Wesentlichen nicht achsensymmetrisch eingestellt.

Unter einer "achsensymmetrischen" Einstellung ist dabei zu verstehen, dass im Rahmen der üblichen Toleranzen eine Achsensymmetrie vorliegt. Eine "im Wesentlichen nicht achsensymmetrische" Einstellung bedeutet, dass diese Achsensymmetrie bewusst nicht eingehalten wird, d. h. eine Abweichung von der Achsensymmetrie über übliche Toleranzen hinaus gegeben ist.

Unter dem Auftreffflächen-Umgebungsparameter kann insbesondere ein Parameter zu verstehen sein, der angibt, ob die aktuelle Spur (z. B. ein Hatch) neben bereits schon verfestigtem Material verläuft, also ob z. B. eine erste Spur gezogen wird, die nicht seitlich an eine vorherige Spur angrenzt, oder ob es sich um eine weitere Spur handelt.

Da verfestigtes Material andere thermische Eigenschaften als unverfestigtes Material aufweist, kann durch eine bewusste Abweichung von der Achsensymmetrie bezüglich der Scanrichtung eine Kompensation erreicht werden. Hierzu kann beispielsweise dafür gesorgt werden, dass der Maximalwert auf der am Rand entlang laufenden Intensitätsprofilkurve nicht in Scanrichtung exakt vorne, sondern ein Stück weiter von der bereits verfestigten Spur (z. B. dem bereits bearbeiteten Nachbar-Hatch) entfernt oder näher dran liegt. D. h., die gesamte Intensitätsprofilkurve wird bezüglich des Maximums um die Rotationsachse der Intensitätsprofilkurve von der bereits verfestigten Spur weggedreht oder zur ihr hingedreht. Dabei wird gleichzeitig dafür gesorgt, dass der Minimalwert auf der Intensitätsprofilkurve der Gesamt-Intensitätsverteilung in Richtung der bereits verfestigten Spur bzw. von ihr weg gedreht wird. In welche Richtung die Verdrehung erfolgt, kann beispielsweise davon abhängen, ob die unmittelbar benachbarte, bereits verfestigte Spur noch heiß oder schon abgekühlt ist. Eine abgekühlte, ausgehärtete Spur hat mehr Masse und nimmt Energie schlechter auf, da eine "glatte" Fläche mehr Strahlung reflektiert. Wenn eine Spur abgekühlt ist, wird das Maximum der nachfolgend zu verfestigenden, benachbarten Spur also bevorzugt näher an dieser vorangehend verfestigten Spur liegen, als wenn sie noch heiß ist und bereits mehr Energie enthält, so dass weniger neue Energie eingebracht werden muss.

Um die Fertigungsvorrichtung bzw. die Bestrahlungsvorrichtung in der gewünschten Weise anzusteuern, um einen solchen Kombinations-Energiestrahl mit der gewünschten Gesamt-Intensitätsverteilung zu erhalten, können vorab entsprechende Steuerdaten generiert werden. Diese Steuerdaten können aber auch während des Prozesses noch dynamisch modifiziert werden.

Hierzu kann, vorzugsweise zunächst vorab, die optimale Intensitätsverteilung entsprechend der jeweiligen Position der Auftrefffläche im Bauteil und/oder weiteren aktuellen Prozessparametern berechnet werden. Beispielsweise können die Intensitätsverteilung sowie weitere Prozessparameter so optimiert und festgelegt werden, dass bei einer Steuerung der Vorrichtung unter Nutzung der besagten Steuerdaten ein Aufschmelzen des Aufbaumaterials innerhalb eines Zielbereichs in und um die Auftrefffläche als Wärmeleitungsschweißen bewirkt wird. Zu diesen weiteren Prozessparametern können z. B. die absolute Strahlintensität, die Bewegungsgeschwindigkeit der Auftrefffläche auf dem Baufeld, d. h. die Scangeschwindigkeit, aber auch die Schichtdicke und die exakte Bestrahlungsstrategie, d. h. beispielsweise in welchem Muster die Bestrahlung erfolgt, gehören. Ebenso können weitere diverse Parameter berücksichtigt werden, insbesondere Materialkennwerte des Aufbaumaterials, und es können bestimmte Optimierungskriterien und/oder Nebenbedingungen und/oder Randbedingungen festgelegt werden, um dann eine optimale lokale Zieltemperaturverteilung in dem Zielbereich, in dem das Aufbaumaterial aufgeschmolzen werden soll, und darüber wiederum die optimale Gesamt-Intensitätsverteilung zu berechnen, woraus dann wiederum die Steuerdaten zur Ansteuerung der Bestrahlungsvorrichtung und/oder weiterer Komponenten der Fertigungsvorrichtung zur additiven Fertigung generiert und im Fertigungsprozess genutzt werden. Unter einem "Zielbereich" ist hierbei zum einen die Auftrefffläche, d.

h. der Bereich, auf den der Energiestrahl auf der Oberfläche auftrifft, zu verstehen, aber auch der Bereich darunter, also in die Tiefe des Materials bzw. der Schicht hinein, ggf. aber auch eine Umgebung um diese Auftrefffläche herum, in welcher der Energiestrahl, z. B. durch Wärmeleitung im Aufbaumaterial, noch wirkt.

Vorzugsweise erfolgt eine Überwachung bzw. Kontrolle der Gesamt-Intensitätsverteilung des Kombinations-Energiestrahls. Besonders bevorzugt werden die bei der Überwachung bzw. Kontrolle erfassten Daten für eine Regelung der Gesamt-Intensitätsverteilung genutzt, zum Beispiel als Ist-Intensitätsverteilung, welche mit einer Soll-Intensitätsverteilung abgeglichen werden kann.

Die Bestrahlungsvorrichtung weist bevorzugt dementsprechend eine geeignete Überwachungsbzw. Kontrolleinrichtung (im Folgenden auch als "Monitoring-Einrichtung" bezeichnet) auf.

Eine solche Monitoring-Einrichtung kann zum Beispiel mit Hilfe eines im Strahlengang des Kombinations-Energiestrahls angeordneten Strahlteilers realisiert werden, der z. B. einen geringen Teil der Intensität des Kombinations-Energiestrahls in eine Überwachungseinheit zur Vermessung und Prüfung der Gesamt-Intensitätsverteilung des Kombinations-Energiestrahls abzweigt. Die Überwachungseinheit kann, zum Beispiel mittels eines Flächensensors oder dergleichen, ein integrales Bild/Signal der Gesamt-Intensitätsverteilung erfassen. Dabei wird bevorzugt die "Belichtungszeit" des Flächensensors an die oben definierte Integrationszeitspanne angepasst und/oder ein unvollständiges Belichten des Sensors (mindestens eine vollständige Rotation des zweiten Energiestrahls sowie ein Bruchteil eines oder mehrerer weiterer Umläufe) wird durch einen Filter, z. B. einen Auswertealgorithmus, kompensiert.

Im Rahmen einer Überwachung bzw. eines Monitorings der Gesamt-Intensitätsverteilung kann z. B. eine Ist-Rotation der Gesamt-Intensitätsverteilung gegen eine Soll-Rotation und/oder eine Ist-Verteilung gegen eine Soll-Verteilung der Gesamt-Intensitätsverteilung abgeglichen werden. Mittels eines zusätzlichen Regelkreises kann die jeweilige Ist-Einstellung gegebenenfalls nachjustiert werden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:

Figur 1 eine schematische, teilweise im Schnitt dargestellte Ansicht eines Ausführungsbeispiels einer Vorrichtung zur additiven Fertigung mit einer erfindungsgemäßen Energiestrahlmodifikationsvorrichtung,

Figur 2 eine perspektivische Ansicht auf ein Ausführungsbeispiel einer bevorzugten Gesamt-Intensitätsverteilung eines Kombinations-Energiestrahls,

Figur 3 einen Längsschnitt entlang der Schnittebene B durch die Gesamt-Intensitätsverteilung nach Figur 2,

Figur 4 eine schematische Darstellung der funktionellen Anordnung der Komponenten eines ersten Ausführungsbeispiels einer erfindungsgemäßen Bestrahlungsvorrichtung,

Figur 5 eine schematische Darstellung der funktionellen Anordnung der Komponenten eines zweiten Ausführungsbeispiels einer erfindungsgemäßen Bestrahlungsvorrichtung,

Figur 6 eine schematische Darstellung der funktionellen Anordnung der Komponenten eines dritten Ausführungsbeispiels einer erfindungsgemäßen Bestrahlungsvorrichtung,

Figur 6a eine vergrößerte schematische Darstellung der ersten Energiestrahl-Bewegungseinheit der Bestrahlungsvorrichtung gemäß Figur 6,

Figur 7 eine Darstellung eines möglichen Steuersignals zur Ansteuerung einer zweiten Energiestrahlquelle in einer Bestrahlungsvorrichtung,

Figur 8 eine Gesamt-Intensitätsverteilung eines Kombinations-Energiestrahls wie in Figur 2 in perspektivischer Draufsicht, jedoch zum Vergleich in drei unterschiedlichen Ausführungen, zur Darstellung der Abhängigkeit der Gesamt-Intensitätsverteilung von dem Steuersignal nach Figur 5,

Figur 9 ein Graustufenbild einer Gesamt-Intensitätsverteilung an der Auftrefffläche eines Kombinations-Energiestrahls, wie er in Figur 7 rechts dargestellt ist,

Figur 10 eine schematische Darstellung zur Modifikation der Gesamt-Intensitätsverteilung des Kombinations-Energiestrahls in Abhängigkeit von einem Auftrefflächen-Umgebungsparameter,

Figur 11 eine weitere schematische Darstellung zur Modifikation der Gesamt-Intensitätsverteilung des Kombinations-Energiestrahls in Abhängigkeit von einem Auftrefflächen-Umgebungsparameter,

Figuren 12a bis 12e jeweils perspektivische Ansichten von Gesamt-Intensitätsverteilungen gemäß alternativen Ausführungsbeispielen von Kombinations-Energiestrahlen.

Die nachfolgenden Ausführungsbeispiele werden in Bezug auf eine Vorrichtung 1 zur additiven Fertigung von Fertigungsprodukten in Form einer Lasersinter- oder Laserschmelzvorrichtung 1 beschrieben, wobei explizit noch einmal darauf hingewiesen ist, dass die Erfindung nicht auf Lasersinter- oder Laserschmelzvorrichtungen beschränkt ist. Die Vorrichtung wird im Folgenden - ohne eine Beschränkung der Allgemeinheit - daher kurz als "Lasersintervorrichtung" 1 bezeichnet.

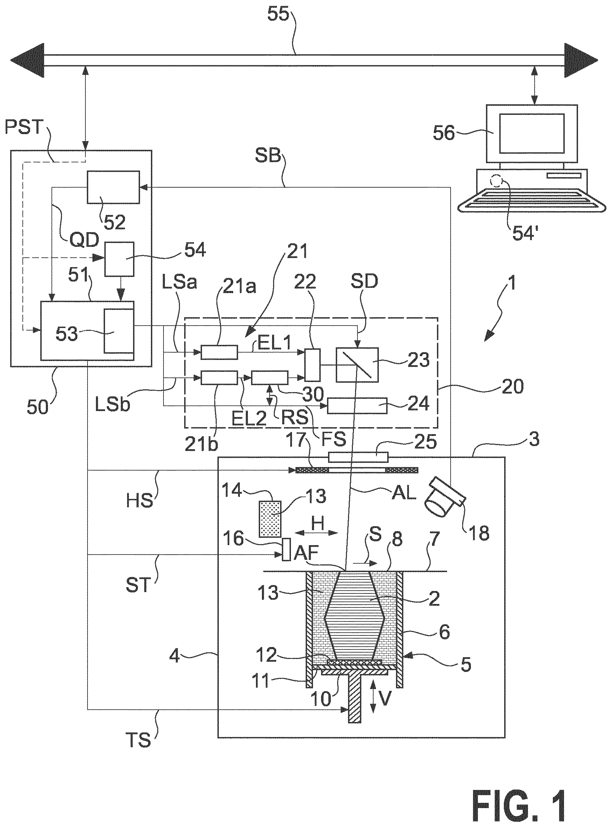

Eine solche Lasersintervorrichtung 1 ist schematisch in Figur 1 gezeigt. Die Vorrichtung weist eine Prozesskammer 3 bzw. einen Prozessraum 3 mit einer Kammerwandung 4 auf, in der im Wesentlichen der Fertigungsprozess abläuft. In der Prozesskammer 3 befindet sich ein nach oben offener Behälter 5 mit einer Behälterwandung 6. Die obere Öffnung des Behälters 5 bildet die jeweils aktuelle Arbeitsebene 7. Der innerhalb der Öffnung des Behälters 5 liegende Bereich dieser Arbeitsebene 7 kann zum Aufbau des Objekts 2 verwendet werden und wird daher als Baufeld 8 bezeichnet.

Der Behälter 5 weist eine in einer vertikalen Richtung V bewegliche Grundplatte 11 auf, die auf einem Träger 10 angeordnet ist. Diese Grundplatte 11 schließt den Behälter 5 nach unten ab und bildet damit dessen Boden. Die Grundplatte 11 kann integral mit dem Träger gebildet sein, sie kann aber auch eine getrennt von dem Träger 10 gebildete Platte sein und an dem Träger 10 befestigt oder auf diesem einfach gelagert sein. Je nach Art des konkreten Aufbaumaterials, also beispielsweise des verwendeten Pulvers, und des Fertigungsprozesses kann auf der Grundplatte 11 eine Bauplattform 12 als Bauunterlage angebracht sein, auf der das Objekt 2 aufgebaut wird. Grundsätzlich kann das Objekt 2 aber auch auf der Grundplatte 11 selber aufgebaut werden, die dann die Bauunterlage bildet.

Der grundsätzliche Aufbau des Objekts 2 erfolgt, indem eine Schicht Aufbaumaterial 13 zunächst auf die Bauplattform 12 aufgebracht wird, dann - wie später erläutert - durch Bestrahlung mit einem Laser an den Punkten, welche Teile des zu fertigenden Objekts 2 bilden sollen, das Aufbaumaterial 13 selektiv verfestigt wird, dann mit Hilfe des Trägers 10 die Grundplatte 11, somit die Bauplattform 12 abgesenkt wird und eine neue Schicht des Aufbaumaterials 13 aufgetragen und dann selektiv verfestigt wird. Dieser Vorgang wird so lange wiederholt, bis alle Schichten des mindestens einen Objekts verfestigt sind. In Figur 1 ist das in dem Behälter auf der Bauplattform 12 aufgebaute Objekt 2 unterhalb der Arbeitsebene 7 in einem Zwischenzustand dargestellt. Es weist bereits mehrere verfestigte Schichten auf, umgeben von unverfestigt gebliebenem Aufbaumaterial 13. Als Aufbaumaterial 13 können verschiedene Materialien verwendet werden, vorzugsweise Pulver, insbesondere Metallpulver, Kunststoffpulver, Keramikpulver, Sand, gefüllte oder gemischte Pulver oder auch pastöse Materialien.

Pulverförmiges Aufbaumaterial 13 befindet sich in einem Vorratsbehälter 14 der Lasersintervorrichtung 1. Mit Hilfe eines in einer horizontalen Richtung H bewegbaren Beschichters 16 kann das Aufbaumaterial in der Arbeitsebene 7 bzw. innerhalb des Baufelds 8 in Form einer dünnen Schicht aufgebracht werden.

Optional befindet sich in der Prozesskammer 3 eine zusätzliche Strahlungsheizung 17. Diese kann zum Beheizen des aufgebrachten Aufbaumaterials 13 dienen, so dass die für die selektive Verfestigung genutzte Bestrahlungseinrichtung nicht zu viel Energie einbringen muss. Das heißt, es kann beispielsweise mit Hilfe der Strahlungsheizung 17 schon eine Menge an Grundenergie in das Aufbaumaterial 13 eingebracht werden, welche natürlich noch unterhalb der notwendigen Energie ist, bei der das Aufbaumaterial 13 sintert oder sogar verschmilzt. Als Strahlungsheizung 17 kann beispielsweise ein Infrarotstrahler genutzt werden.

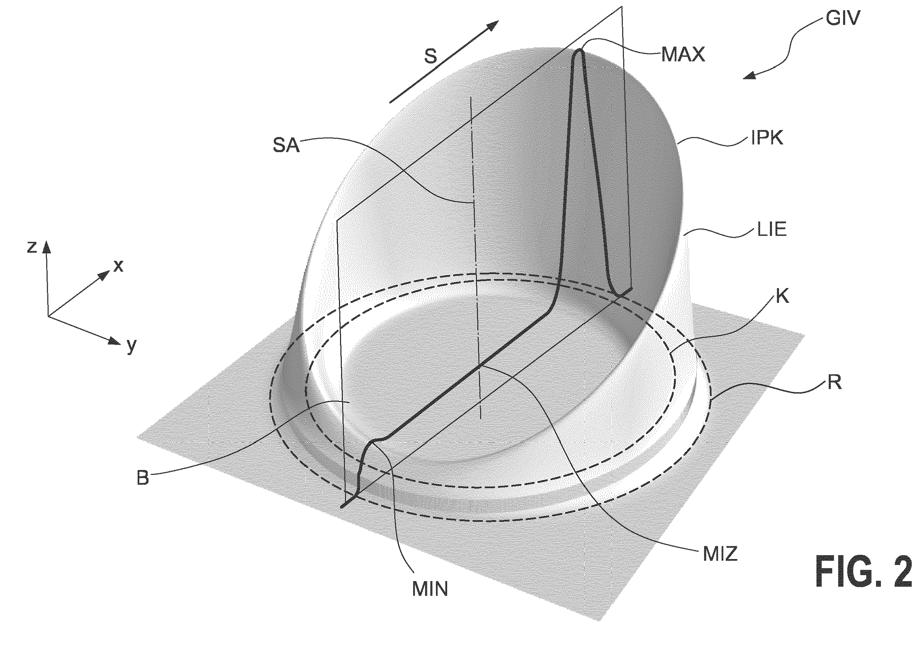

Zum selektiven Verfestigen weist die Lasersintervorrichtung 1 wie erwähnt eine Bestrahlungsvorrichtung 20 bzw. hier konkret eine Belichtungsvorrichtung 20 auf. Diese Bestrahlungsvorrichtung 20 erzeugt hier als Ausgangs-Laserstrahl AL einen Kombinations-Energiestrahl AL (bzw. im Folgenden auch Kombinations-Laserstrahl AL genannt) mit einer definierten modifizierbaren Gesamt-Intensitätsverteilung GIV (siehe z. B. Figur 2) durch Kombination zweier Energiestrahlen EL1, EL2 und relative Bewegung der Energiestrahlen EL1, EL2 zueinander mittels einer ersten Energiestrahl-Bewegungseinheit 30, wie später noch detaillierter erläutert wird.

Über eine nachfolgende zweite Energiestrahl-Bewegungseinheit 23 (auch Umlenkeinheit 23 oder Scanner 23 genannt) wird der Kombinations-Energiestrahl AL dann umgelenkt, um so die gemäß der Belichtungsstrategie vorgesehenen Belichtungspfade oder Spuren in der jeweils selektiv zu verfestigenden Schicht abzufahren und selektiv die Energie einzubringen. D. H. mittels des Scanners 23 wird die Auftrefffläche AF des Kombinations-Energiestrahls AL auf dem Baufeld 8 bewegt, wobei sich der aktuelle Bewegungsvektor bzw. die Bewegungsrichtung S (Scanrichtung) der Auftrefffläche AF auf dem Baufeld 8 häufig und schnell ändern kann. Dabei wird dieser Laserstrahl AL durch eine Fokussiereinrichtung 24 auf die Arbeitsebene 7 in geeigneter Weise fokussiert.

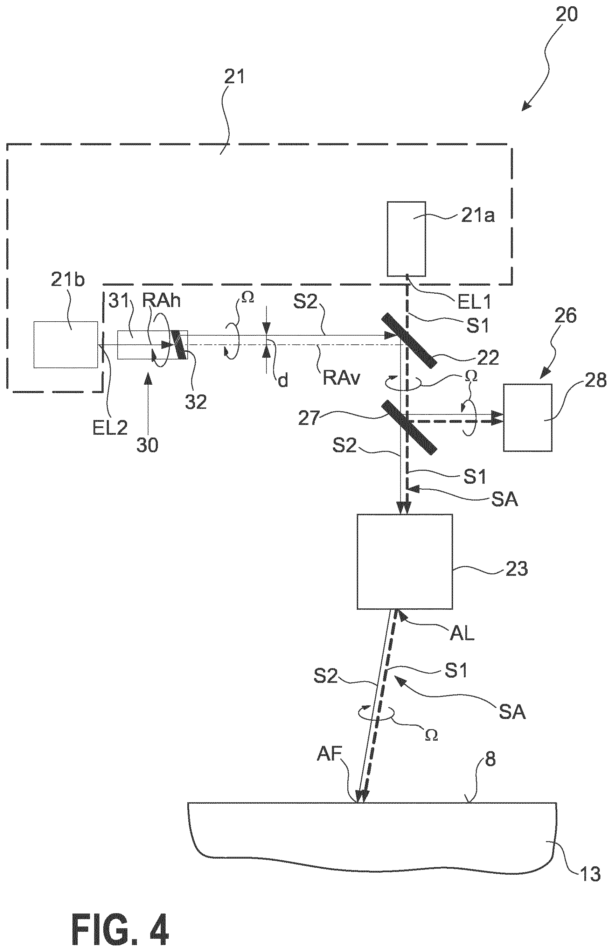

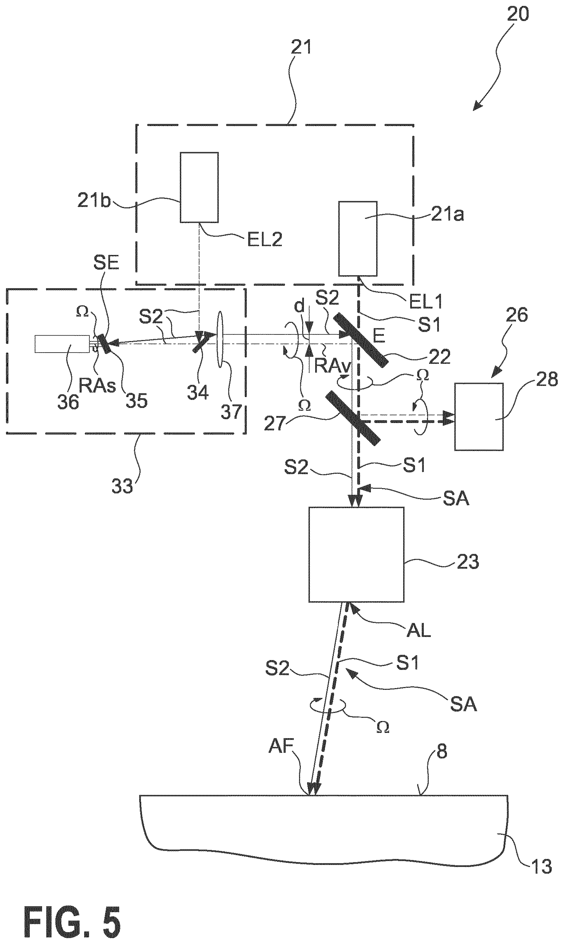

Konkret umfasst die Bestrahlungsvorrichtung 20 hier ein Energiestrahlquellen-System 21 bzw. Lasersystem 21 zur Erzeugung eines ersten Laserstrahls EL1 und eines zweiten Laserstrahls EL2 durch zwei separate Laser 21a, 21b. Dem Laser 21b für den zweiten Laserstrahls EL2 nachgeschaltet, weist die Bestrahlungsvorrichtung 20 eine erste Energiestrahl-Bewegungseinheit 30 auf, um den zweiten Laserstrahl EL2 relativ zum ersten Laserstrahl EL1 zu bewegen, und eine Energiestrahlkombinationsvorrichtung 22, welche so ausgebildet und zum Scanner 23 derart angeordnet ist, dass der erste Laserstrahl EL1 und der zweite Laserstrahl EL2 in einen gemeinsamen Strahlengang in den Scanner 23 so eingekoppelt werden, dass sie gemeinsam als Kombinations-Energiestrahl AL über das Material 13 bzw. das Baufeld 8 bewegt werden. Für Details des Aufbaus der Bestrahlungsvorrichtung 20 wird auf die Figuren 4 und 5 mit ihren jeweiligen Erläuterungen verwiesen.

Vorzugsweise kann es sich bei den Lasern 21a, 21b um Gas- oder Festkörperlaser oder jede andere Art von Laser wie z. B. Laserdioden handeln, insbesondere VCSEL (Vertical Cavity Surface Emitting Laser) oder VECSEL (Vertical External Cavity Surface Emitting Laser) oder eine Zeile dieser Laser. Ganz besonders bevorzugt können im Rahmen der Erfindung ein oder mehrere Single-Mode-Laser, z. B. ein Faserlaser mit einer Leistung von 3 kW und einer Wellenlänge von 1070 nm, eingesetzt werden. Die Laser 21a, 21b für den ersten und zweiten Laserstrahl EL1, EL2 können identisch, aber auch unterschiedlich aufgebaut sein.

Die Bestrahlungsvorrichtung 20 befindet sich hier vorzugsweise außerhalb der Prozesskammer 3, und der Kombinations-Laserstrahl AL wird über ein an der Oberseite der Prozesskammer 3 in der Kammerwandung 4 angebrachtes Einkoppelfenster 25 in die Prozesskammer 3 geleitet.

Die Lasersintervorrichtung 1 enthält weiterhin eine Sensoranordnung 18, welche dazu geeignet ist, eine während des Auftreffens des Laserstrahls 22 auf das Aufbaumaterial in der Arbeitsebene emittierte Prozessstrahlung zu erfassen. Diese Sensoranordnung 18 arbeitet dabei ortsaufgelöst, d. h. sie ist in der Lage, eine Art Emissionsbild der jeweiligen Schicht zu erfassen. Vorzugsweise wird als Sensoranordnung 18 ein Bildsensor bzw. eine Kamera 18 verwendet, welche im Bereich der emittierten Strahlung ausreichend sensitiv ist. Alternativ oder zusätzlich könnten auch ein oder mehrere Sensoren zur Erfassung einer elektromagnetischen, insbesondere optischen und/oder thermischen Prozessstrahlung genutzt werden, z. B. Photodioden, die die von einem Schmelzbad unter auftreffendem Laserstrahl AL emittierte elektromagnetische Strahlung erfassen, oder Temperaturfühler zum Erfassen einer emittierten thermischen Strahlung. Eine Zuordnung des Signals eines selbst nicht ortsauflösenden Sensors zu den Koordinaten wäre möglich, indem die Koordinaten, die für die Ansteuerung des Laserstrahls genutzt werden, dem Sensorsignal jeweils zeitlich zugeordnet werden. In Figur 1 ist die Sensoranordnung 18 innerhalb der Prozesskammer 3 angeordnet. Sie könnte sich aber auch außerhalb der Prozesskammer 3 befinden und die Prozessstrahlung dann durch ein weiteres Fenster in der Prozesskammer 3 erfassen.

Die von der Sensoranordnung 18 erfassten Signale werden als Prozessraum-Sensordatensatz bzw. Schichtbild SB hier an eine Steuereinrichtung 50 der Lasersintervorrichtung 1 übergeben, welche auch dazu dient, die verschiedenen Komponenten der Lasersintervorrichtung 1 zur gesamten Steuerung des additiven Fertigungsprozesses anzusteuern.

Hierzu weist die Steuereinrichtung 50 eine Steuereinheit 51 auf, welche über eine Bestrahlungssteuerschnittstelle 53 die Komponenten der Bestrahlungsvorrichtung 20 ansteuert, nämlich hier an die Laser 21a, 21b Lasersteuerdaten LSa, LSb übersendet, an die erste Energiestrahl-Bewegungseinheit 30 Relativbewegungssteuerdaten RS, an die zweite Energiestrahl-Bewegungseinheit 23 bzw. den Scanner 23 Scansteuerdaten SD und an die Fokussiervorrichtung 24 Fokussteuerdaten FS.

Die Steuereinheit 51 steuert auch mittels geeigneter Heizungssteuerdaten HS die Strahlungsheizung 17 an, mittels Beschichtungssteuerdaten ST den Beschichter 16 und mittels Trägersteuerdaten TS die Bewegung des Trägers 10.

Zusätzlich weist die Steuereinrichtung 50 hier eine Qualitätsdaten-Ermittlungseinrichtung 52 auf, die den Prozessraum-Sensordatensatz SB erhält und darauf basierend Qualitätsdaten QD ermittelt, die beispielsweise an die Steuereinheit 51 übergeben werden können, um regelnd in den additiven Fertigungsprozess eingreifen zu können.

Die Steuereinrichtung 50 ist, hier z. B. über einen Bus 55 oder eine andere Datenverbindung, mit einem Terminal 56 mit einem Display oder dergleichen gekoppelt. Über dieses Terminal 56 kann ein Bediener die Steuereinrichtung 50 und somit die gesamte Lasersintervorrichtung 1 steuern, z. B. durch Übermittlung von Prozesssteuerdaten PST.

Um den Produktionsprozess in einer gewünschten Weise einzustellen, können mittels einer Steuerdatenerzeugungsvorrichtung 54, 54' die Steuerdaten entsprechend generiert bzw. modifiziert werden.

Diese Steuerdatenerzeugungsvorrichtung 54 kann beispielsweise Teil der Steuereinrichtung 50 sein und dort beispielsweise in Form von Softwarekomponenten realisiert sein. Eine solche in die Steuereinrichtung 50 integrierte Steuerdatenerzeugungsvorrichtung 54 kann beispielsweise auch bereits vorhandenen Prozesssteuerdaten PSD übernehmen und modifizieren und die entsprechend modifizierten Steuerdaten PSD können dann an die Steuereinheit 51 weiter übermittelt werden. Die modifizierten Steuerdaten PSD können dabei insbesondere modifizierte Lasersteuerdaten LSa, LSb, aber ggf. auch noch andere modifizierte Steuerdaten umfassen, wie beispielsweise geänderte Beschichtungssteuerdaten ST oder Trägersteuerdaten TS, um eine passende Schichtdicke zu wählen. Alternativ könnten in der Steuerdatenerzeugungsvorrichtung 54 aber auch nur die Lasersteuerdaten LSa, LSb modifiziert werden und an die Steuereinheit 51 übergeben werden, so dass die Bestrahlungssteuerschnittstelle 53 mit den modifizierten Lasersteuerdaten LSa, LSb arbeitet.

Ebenso wäre es aber auch möglich, dass die Steuerdatenerzeugungsvorrichtung 54' auf einer externen Rechnereinheit, beispielsweise hier dem Terminal 56, realisiert ist und vorab bereits Prozesssteuerdaten PSD mit entsprechend passenden Belichtungssteuerdaten erstellt, mit denen die Vorrichtung 1 so angesteuert wird, dass z. B. die gewünschte Intensitätsverteilung erreicht wird. In diesem Fall könnte auf die in der Steuereinrichtung 50 hier vorhandene interne Steuerdatenerzeugungsvorrichtung 54 auch verzichtet werden.

Wie bereits erwähnt können die durch die Steuerdatenerzeugungsvorrichtung 54, 54' erzeugten bzw. modifizierten Prozesssteuerdaten PSD auch als Sollwerte angesehen werden, die dann in der Steuereinheit 51 für einen Regelprozess verwendet werden, wobei z. B. (als eine Möglichkeit) die Qualitätsdaten QD als Ist-Werte mit eingehen können.

Es wird an dieser Stelle noch einmal darauf hingewiesen, dass die vorliegende Erfindung nicht auf eine solche Lasersintervorrichtung 1 beschränkt ist. Sie kann insbesondere auf beliebige andere Verfahren zum generativen bzw. additiven Herstellen eines dreidimensionalen Objekts durch, insbesondere schichtweises, Aufbringen und selektives Verfestigen eines Aufbaumaterials angewendet werden, wobei ein Energiestrahl zum Verfestigen auf das zu verfestigende Aufbaumaterial abgegeben wird. Ebenso könnte sie zum Schweißen von Schweißnähten oder für andere Prozesse eingesetzt werden, in denen Material mit einem Energiestrahl, insbesondere zum lokalen Aufschmelzen des Materials, bestrahlt werden soll. Dementsprechend kann auch die Bestrahlungsvorrichtung nicht nur, wie hier beschrieben, ein Laser sein, sondern es könnte jede Einrichtung verwendet werden, mit der Energie als Wellen- oder Teilchenstrahlung selektiv auf bzw. in das Aufbaumaterial gebracht werden kann. Beispielsweise könnte anstelle eines Lasers eine andere Lichtquelle, ein Elektronenstrahl etc. verwendet werden. Ebenso können parallel mehrere erfindungsgemäße Kombinations-Energiestrahlen erzeugt und eingesetzt werden, um z. B. gleichzeitig an mehrere Positionen auf dem Baufeld Material selektiv verfestigen zu können.

Auch wenn in Figur 1 nur ein einzelnes Objekt 2 dargestellt wird, ist es möglich und in der Regel auch üblich, mehrere Objekte in der Prozesskammer 3 bzw. im Behälter 5 parallel herzustellen. Dazu wird das Aufbaumaterial schichtweise an Stellen, die den Querschnitten der Objekte in der jeweiligen Schicht entsprechen, durch den Energiestrahl abgetastet.

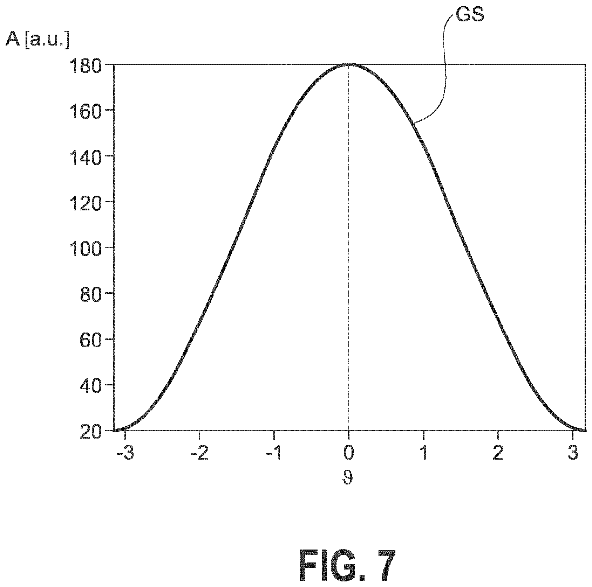

Figur 2 zeigt die typische Grundform einer Gesamt-Intensitätsverteilung GIV eines Kombinations-Energiestrahls AL, welche besonders gut geeignet wäre, um in dieser oder in etwas abgewandelter Form (siehe hierzu auch die späteren Erläuterungen zu Figur 2 und Figur 7) genutzt zu werden, um den Aufschmelzprozess des Baumaterials 13 im Bereich der Auftrefffläche AF des Kombinations-Energiestrahls AL auf dem Baufeld 8 im Prozessbereich des Wärmeleitungsschweißens zu halten, d. h. ohne dass beim Aufschmelzen des Aufbaumaterials eine Dampfkapillare entsteht.

Dabei zeigt Figur 2 die Gesamt-Intensitätsverteilung GIV (im Folgenden auch kurz Intensitätsverteilung GIV) in einer senkrecht zur Strahlachse SA des Kombinations-Energiestrahls AL (im Folgenden meist nur kurz Energiestrahl AL genannt) liegenden Ebene x, y, wobei die Intensität in z-Richtung ortsaufgelöst über dieser Ebene x, y aufgetragen ist. Je nach Auftreffwinkel des Energiestrahls AL auf dem Baufeld 8 kann es zu leichten Verzerrungen kommen, die aber auch prinzipiell bei der Erzeugung des Energiestrahls AL durch entsprechende Ansteuerung der einzelnen Komponenten kompensiert werden könnten, sofern dies erforderlich ist und/oder gewünscht wird.

In einem mittleren Bereich der Gesamt-Intensitätsverteilung GIV, d. h. hier in etwa innerhalb des halben Radius bis zum Rand R der Intensitätsverteilung GIV (welcher wie oben so definiert ist, dass 99 % der Strahlungsleistung innerhalb des Randes R liegen), befindet sich ein Intensitäts-Minimum MIZ (im Folgenden auch als "Minimum" abgekürzt). Dieses Minimum MIZ liegt hier ungefähr im Zentrum der Intensitätsverteilung GIV, d. h. annähernd auf der Strahlachse SA bzw. der Achse des Strahlengangs des Energiestrahls AL.

In einem um diesen mittleren Bereich umlaufenden Randbereich, also entlang einer innerhalb des Randes R, aber entlang des Randes umlaufenden Intensitätsprofilkurve IPK befindet sich an einer Seite ein bezüglich dieser Intensitätsprofilkurve IPK lokaler Intensitäts-Maximalwert MAX (im Folgenden auch als "Maximalwert" abgekürzt) und diagonal gegenüberliegend ein lokaler Intensitäts-Minimalwert MIN (im Folgenden auch als "Minimalwert" abgekürzt). "Lokal" ist hier jeweils in Bezug auf die Funktion der Intensitätswerte über den Orten entlang der Intensitätsprofilkurve IPK zu verstehen, die parallel zum Rand R bzw. konzentrisch auf einer umlaufenden Kreisbahn K verläuft.

Die Intensitätswerte auf der Intensitätsprofilkurve IPK entlang der Kreisbahn K verlaufen dabei vom Intensitäts-Maximum MAX aus kontinuierlich auf beiden Seiten, d. h. in beiden Rotationsrichtungen, auf das Intensitäts-Minimum MIN zu, d. h. sie sinken bis dorthin (hier kontinuierlich) ab. Je nach Art der Signalerzeugung könnte das Signal auch einem sogenannten "ringing" oder anderen Effekten, wie z. B. Digitalisierungsstufen, unterliegen, welche sich in der Intensitätsprofilkurve als Rauschen, Oberschwingungen oder in Form von anderen Artefakten äußern könnten. Die Intensitätsverteilung GIV ist hier so orientiert, dass der Maximalwert MAX auf der Intensitätsprofilkurve IPK in der Scanrichtung S (hier willkürlich parallel zur x-Richtung der Ebene) vorne liegt und der Minimalwert MIN hinten.

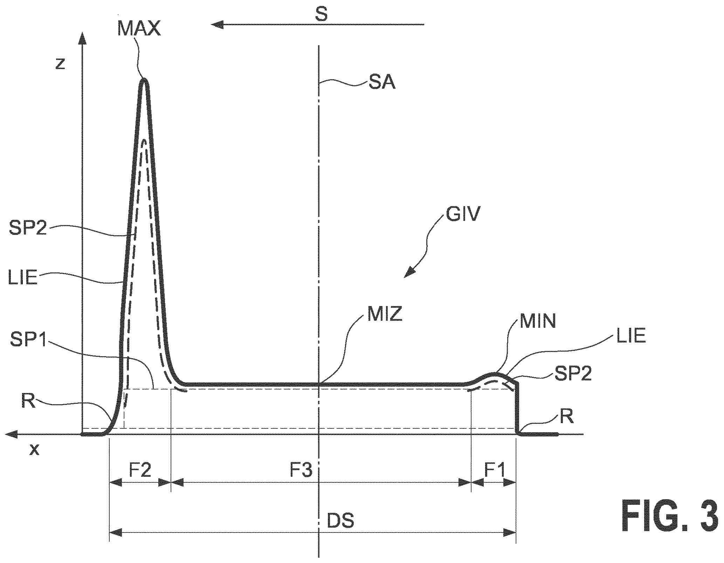

Figur 3 zeigt einen Längsschnitt durch diese Gesamt-Intensitätsverteilung GIV in einer sich in Scanrichtung S erstreckenden Schnittebene B (also in x-/z-Richtung), wie sie in Figur 2 eingezeichnet ist. In Figur 2 ist zur Veranschaulichung in der Schnittebene B in vereinfachter Form der gleiche Längsschnitt wie in Figur 3 dargestellt.

Auch hier ist deutlich in Scanrichtung S vorne das Maximum MAX zu sehen und beim hinteren Ende das Minimum MIN, welches aber in Bezug zu seiner Umgebung entlang des Längsschnittes in Figur 3 wiederum ein lokales Maximum bildet, da nach außen zum Rand R hin die Intensität der Intensitätsverteilung GIV stark abfällt und zur Mitte, d. h. zum Zentrum hin, sich das Minimum MIZ befindet.

Um die vorteilhafte Wirkung der Intensitätsverteilung GIV für die Einstellung einer bestimmten Zieltemperatur auf dem Baufeld 8 im Bereich der Auftrefffläche zu erläutern, bei der es gelingt, den Schmelzprozess im Prozessfenster des Wärmeleitungsschweißens zu halten, wird die Intensitätsverteilung GIV im Folgenden virtuell in drei Funktionsbereiche F1, F2, F3 (siehe hierzu Figur 3) unterteilt. Die gesamte Intensitätsverteilung GIV bestimmt im Wesentlichen einen "Wirkbereich", der z. B. durch den Rand R der Intensitätsverteilung GIV begrenzt sein kann, sich aber auch etwas darüber hinaus erstrecken kann. Diese Begriffe können wie folgt definiert werden:

Die Gesamt-Intensitätsverteilung GIV trifft auf eine Auftrefffläche AF auf, die auf einem Baufeld 8 bewegt wird, wie dies bereits oben mehrfach erläutert wurde. Zumindest in Teilbereichen der Auftrefffläche AF des Kombinations-Energiestrahls AL wird ein Aufschmelzen des Aufbaumaterials 13 bewirkt. Um im Schmelzbereich möglichst das Prozessfenster des Wärmeleitungsschweißens zu erreichen, muss die Gesamt-Intensitätsverteilung GIV so eingestellt sein, dass sie verschiedene Aufgaben erfüllt.

In der folgenden Beschreibung wird davon ausgegangen, dass sich der Beobachter mit der Auftrefffläche AF mitbewegt. Aus dessen Sichtweise wird zu jedem Zeitpunkt während der Bewegung der Auftrefffläche AF auf dem Baufeld 8 neues Material 13 in die Auftrefffläche AF transportiert. Dieses Baumaterial 13 ist in der Regel kälter als das Schmelzbad. Somit muss das Baumaterial 13 zunächst erwärmt werden. Diese Aufgabe übernimmt ein erster Funktionsbereich F2 "Heizen", welcher von allen differenzierten Funktionsbereichen F1, F2, F3 der Intensitätsverteilung GIV in der Regel die höchsten Intensitäten aufweist. Dies ist in Figur 3 dementsprechend der vordere Bereich der Intensitätsverteilung GIV mit dem absoluten Maximum MAX. Er ist hier überall dort ausgeprägt, wo die Intensitätsverteilung GIV in der Bewegung über das Aufbaumaterial erstmalig auf unverfestigtes oder im Rahmen eines früheren Bestrahlungs- bzw. Aufschmelzvorgangs verfestigtes Aufbaumaterial trifft.

Am Rand der Auftrefffläche AF wird vor allem durch Konduktion in das umliegende Baumaterial 13 Wärme abtransportiert. Diese Verluste sollten vorzugsweise kompensiert werden. Diese Kompensation kann bei der bevorzugten Intensitätsverteilung GIV durch den Funktionsbereich F1 "Halten" realisiert werden. Dieser Funktionsbereich F1 "Halten" bildet eine Art (in der Draufsicht seitliche) Umrandung der gesamten Intensitätsverteilung GIV und ist in den Figuren 2 und 3 durch einen Intensitätsanstieg gegenüber der unmittelbar benachbarten Auftrefffläche charakterisiert. Mit anderen Worten handelt es sich hierbei um den entlang des Randes R innerhalb des Randes auf der Intensitätsprofilkurve IPK umlaufenden kreisförmigen Bereich erhöhter Intensität.

In dem in Scanrichtung S vorne liegenden Bereich geht dieser Funktionsbereich F1 "Halten" in den Funktionsbereich F2 "Heizen" über. Da nach dem Passieren der Auftrefffläche AF auf dem Baufeld 8 das Aufbaumaterial 13 lokal ja wieder erhärten soll, ist es sinnvoll, dass im Funktionsbereich F1 "Halten" auf der Intensitätsprofilkurve IPK in dem in Scanrichtung S hinteren Bereich das Minimum MIN liegt.

Der Bereich der Gesamt-Intensitätsverteilung GIV, welcher von den Funktionsbereichen F1, F2 "Halten" und "Heizen" umrandet ist, hat die Aufgabe, das Temperaturprofil im Wirkbereich, d. h. in der Schmelze, einzustellen und so zu kontrollieren, dass beispielsweise der gewünschte Prozessbereich des Wärmeleitungsschweißens eingehalten werden kann. Dies wird vom Funktionsbereich F3 "Formen" übernommen.

Der Übergang zwischen den Funktionsbereichen F1, F2, F3 ist kontinuierlich, wobei sich die Funktionsbereiche F1, F2, F3 in einigen Bereichen überlappen bzw. superpositionieren können. Wie hier zu sehen ist, ist die Intensitätsverteilung GIV im Funktionsbereich F3 "Formen" im Wesentlichen eine (flache) konvexe Funktion, wogegen die anderen Funktionsbereiche F1, F2 im Querschnitt eine konkave Funktionskurve aufweisen.

Eine solche bevorzugte Gesamt-Intensitätsverteilung GIV lässt sich, wie bereits oben beschrieben, durch einen Kombinations-Energiestrahl AL erreichen, der aus zwei Energiestrahlen EL1, EL2 durch Überlagerung erzeugt wird, wobei der Energiestrahl EL2 gegenüber dem ersten Energiestrahl EL1, bezogen auf den Betrag der Scangeschwindigkeit, mit einer betragsmäßig hohen Geschwindigkeit bewegt wird.

Die in den Figuren 2 und 3 gezeigte (Gesamt-) Intensitätsverteilung lässt sich ganz konkret dadurch erreichen, dass ein erster Energiestrahl EL1 mit einer ersten Intensitätsverteilung SP1 erzeugt wird, welche einer sog. Top-Hat-förmige Intensitätsverteilung SP1 entspricht, und diesem eine auf der Kreisbahn K entlang des Randes R der Intensitätsverteilung SP1 des ersten Energiestrahls EL1 umlaufende gaußförmige, zweite Intensitätsverteilung SP2 des zweiten Energiestrahls EL2 im Wesentlichen überlagert wird. Dabei ist die Strahlausdehnung, hier der Durchmesser, der Intensitätsverteilung SP2 des zweiten Energiestrahls EL2 erheblich kleiner als die Strahlausdehnung DS, hier der Durchmesser DS, der Intensitätsverteilung SP1 des ersten Energiestrahls EL1. Beispielsweise kann der erste Energiestrahl EL1 einen Durchmesser von ca. 1000 $\mu$m und der zweite Energiestrahl EL2 einen Durchmesser von ca. 80 $\mu$m aufweisen. Der Top-Hat-Strahl EL1 liefert dabei eine "Grundintensität" auf der Auftrefffläche AF. Mit dem sich auf der Kreisbahn K um das Zentrum des Top-Hat-Strahls bewegenden Gauß-Strahl EL 2 wird die in den Figuren 2 und 3 gut zu sehende lokale (d. h. auf einen Bereich entlang der Kreisbahn K beschränkte) Intensitätserhöhung LIE entlang des Rands R der Gesamt-Intensitätsverteilung GIV erzielt.

Der zweite, kleinere Energiestrahl EL2 läuft dabei mit hoher Geschwindigkeit (bezogen auf die Scangeschwindigkeit) auf der Kreisbahn K um, so dass eine Auftrefffläche AF auf dem Baufeld 8 zeitlich integriert (wie erwähnt über einen Zeitabschnitt mit einer gewissen Dauer, z. B. über eine Periode) der Gesamt-Intensitätsverteilung GIV ausgesetzt wird, wie es in Figur 2 und Figur 3 dargestellt ist.

Um dafür zu sorgen, dass die Intensität auf der Intensitätsprofilkurve IPK in Scanrichtung S vorne das Maximum MAX und im hinteren Bereich das Minimum MIN aufweist und dazwischen kontinuierlich abfällt bzw. ansteigt, muss die Intensität des zweiten Energiestrahls EL2 synchronisiert zur Umlaufgeschwindigkeit moduliert werden.

Grundsätzlich könnten übrigens ein oder jeder der Funktionsbereiche F1, F2, F3 auch plateauartig ausgebildet sein, sodass die Intensitätsverteilung entlang der Grenzen zwischen den Funktionsbereichen F1, F2, F3 z. B. jeweils abgestuft ist. Eine Ausprägung von Funktionsbereichen mittels kurvenförmiger Intensitätsverläufe bzw. eine Gestaltung der kombinierten Intensitätsverteilung als Überlagerung verschiedener Intensitätsverläufe, wie er in den Figuren 2 und 3 dargestellt ist, ist allerdings in der Regel technisch einfacher und kostengünstiger umsetzbar.

Anhand der Figuren 4 bis 6 werden nun Beispiele erläutert, mit denen auf besonders einfache und kostengünstige Weise ein solcher Kombinations-Energiestrahl AL erzeugt werden kann.

Bei dem ersten Ausführungsbeispiel nach Figur 4 weist die Bestrahlungsvorrichtung 20 ein Energiestrahlquellen-System 21 mit zwei Einzellasern 21a, 21b auf. Der erste Laser 21a erzeugt als ersten Energiestrahl EL1 einen Laserstrahl EL1 und ist so ausgebildet bzw. mit einer Strahlformeinrichtung versehen, dass der erste Laserstrahl EL1 die gewünschte Top-Hat-Intensitätsverteilung aufweist. Der zweite Laser 21b ist so ausgebildet, dass er als zweiten Energiestrahl EL2 einen Laserstrahl EL2 mit einer gaußförmigen Intensitätsverteilung erzeugt. Im Folgenden werden die Begriffe "Laserstrahl" und "Energiestrahl" daher - ohne Beschränkung der Allgemeinheit - synonym verwendet.

Dieser zweite Laserstrahl EL2 wird zunächst durch eine erste Energiestrahl-Bewegungseinheit 30 hindurchgestrahlt, die für die Bewegung des zweiten Laserstrahls EL2 relativ zum ersten Laserstrahl EL1 sorgt. Die erste Energiestrahl-Bewegungseinheit 30 umfasst hier eine Hohlwelle 31, welche mit einer Rotationsgeschwindigkeit $\Omega$ um eine Rotationsachse RAh rotiert, die der Längsachse der Hohlwelle 31 entspricht. Um die Hohlwelle 31 anzutreiben, ist diese mit einem entsprechenden Motor ausgestattet (nicht dargestellt).

Der Strahlengang S2 bzw. die Strahlachse S2 des zweiten Laserstrahls EL2 verläuft so, dass der Laserstrahl EL2 direkt auf der Rotationsachse RAh in die Hohlwelle 31 eingestrahlt wird. In der Hohlwelle 31 oder an deren Ende ist ein optisches Element 32, genauer ein transmissives Strahlversatzelement 32, angeordnet, welches den gaußförmigen Laserstrahl 21B um eine Strecke bzw. einen Achsabstand d zur Rotationsachse RA seitlich versetzt. In dem dargestellten Ausführungsbeispiel handelt es sich bei dem transmissiven Strahlversatzelement 32 um eine Planplatte 32. Durch die Rotation dieser Planplatte 32 an der Hohlwelle 31 bewegt sich der gaußförmige zweite Laserstrahl EL2 bzw. dessen Strahlachse S2 immer parallel zur Rotationsachse RAh, aber auf einer Kreisbahn, welche im Achsabstand d um die Rotationsachse RAh verläuft. Über einen Umlauf auf der Kreisbahn integriert läge eine, wie bereits oben definiert, (virtuelle) "gemittelte Strahlachse" oder ein "gemittelter Strahlengang" des zweiten Laserstrahls EL2 genau auf der Rotationsachse RAh.

Dieser rotierende zweite Energiestrahl EL2 wird dann mit dem ersten Energiestrahl EL1 in einem Strahlkombinator 22, hier einem Polarisator 22 (beispielsweise einem Dünnschicht-Polarisator 22) der Energiestrahlkombinationsvorrichtung 22, kombiniert, wobei darauf geachtet wird, dass die virtuelle Rotationsachse RAv, um die der zweite Energiestrahl EL2 rotiert, also die "gemittelte Strahlachse" des zweiten Laserstrahls EL2, hinter dem Strahlkombinator 22 koaxial zur Strahlachse S1 des ersten Energiestrahls EL1 verläuft.

Der Achsabstand d, um den die Strahlachse S2 des zweiten Energiestrahls EL2 zur Rotationsachse RA versetzt wird, bestimmt letztlich den Radius der Intensitätsprofilkurve IPK in der Gesamt-Intensitätsverteilung GIV des Kombinations-Energiestrahls AL (siehe Figur 2) um die Strahlachse SA, also den Radius der Kreisbahn K. Der Achsabstand d ist dabei die Distanz zwischen der virtuellen Rotationsachse RAv des zweiten Energiestrahls EL2 und dem Zentrum der zweiten Intensitätsverteilung SP2, sodass hier ein Durchmesser der Gesamt-Intensitätsverteilung GIV etwas größer als der doppelte Achsabstand d ist.

Da hier der Strahlengang S1 des ersten Laserstrahls EL1 und der "gemittelte Strahlengang" des zweiten Energiestrahls EL2 koaxial verlaufen, werden beide Laserstrahlen EL1, EL2 also auf einem gemeinsamen Strahlengang in den Scanner 23, beispielsweise auf den ersten Scannerspiegel des Scanners, eingekoppelt. Somit werden die Laserstrahlen EL1, EL2 koordiniert einander überlagert als Kombinations-Energiestrahl AL an der Auftrefffläche AF auf dem Baufeld 8 über das Material 13 mit der vom Scanner 23 vorgegebenen Scangeschwindigkeit und Scanrichtung bewegt. Die Scanbewegung hat dabei an sich keinen Einfluss auf die Relativbewegung des zweiten Energiestrahls EL2 innerhalb des Kombinations-Energiestrahls AL. Jedoch kann es vorteilhaft sein, in Abhängigkeit von der Scanbewegung, d. h. der Scanrichtung und/oder Scangeschwindigkeit, die Bewegung, z. B. die Bewegungsgeschwindigkeit, des zweiten Laserstrahls EL2 relativ zum ersten Laserstrahl EL1 oder eine Intensitätsmodulation des zweiten Laserstrahls EL2 zu modifizieren.

In Figur 5 wird ein weiteres Ausführungsbeispiel der Bestrahlungsvorrichtung 20 gezeigt, mit dem alternativ zu der Ausführungsform in Figur 4 ein entsprechender Kombinations-Energiestrahl bzw. Kombinations-Laserstrahl AL erzeugt werden kann. Auch bei diesem Ausführungsbeispiel weist die Bestrahlungseinrichtung 20 ein Energiestrahlquellen-System 21 mit zwei separaten Lasern 21a, 21b für den ersten Energiestrahl bzw. Laserstrahl EL1 und den zweiten Energiestrahl bzw. Laserstrahl EL2 auf. Auch hier wird der erste Laserstrahl EL1 mit einer Top-Hat-Intensitätsverteilung erzeugt und direkt an einen Strahlkombinator 22 weitergeleitet.

Jedoch ist hier die erste Energiestrahl-Bewegungseinheit 33 anders aufgebaut als bei dem Ausführungsbeispiel gemäß Figur 4. Die Energiestrahl-Bewegungseinheit 33 umfasst hier einen ersten Spiegel 34, einen weiteren, im Betrieb rotierenden Spiegel 35 und eine Sammellinse 37 als optisches Element.

Der - wieder gaußförmige - zweite Laserstrahl EL2 wird zunächst auf den ersten Spiegel 34 abgestrahlt und von dort auf den rotierenden Spiegel 35 geleitet, welcher schräg zum (eingehenden) Strahlengang S2 des eingestrahlten zweiten Laserstrahls EL2 steht, wobei die Rotationsachse RAs des Spiegels 35 koaxial zum Strahlengang S2 des eingehenden Laserstrahls EL2 verläuft. Dieser rotierende Spiegel 35 wird von einem Elektromotor 36 angetrieben, der von der Steuereinrichtung 50 in geeigneter Weise angesteuert werden kann. Da eine Rotationsbewegung des Spiegels 35 infolge einer Schrägstellung einer Spiegelebene SE zu einer entsprechenden Bewegung der Spiegeloberfläche bzw. Spiegelebene SE führt, wird der Strahlengang S2 des zweiten Laserstrahls EL2 so abgelenkt, dass er sich vom Spiegel 35 ausgehend zunächst auf einem Kegelmantel bewegt, sodass der Radius der Kreisbahn mit zunehmendem Abstand zum rotierenden Spiegel 35 zunimmt. Mit anderen Worten ist der vom rotierenden Spiegel 35 ausgehende Strahlengang S2 des zweiten Laserstrahls EL2 unter einem Winkel zur Rotationsachse RAs des Spiegels 35 verkippt.

Wie in Figur 5 dargestellt ist, ist dem rotierenden Spiegel 35 im weiteren Strahlengang eine Sammellinse 37 als optisches Element nachgeschaltet. Diese befindet sich entlang der Rotationsachse RAs in der Strahlausbreitungsrichtung ausgehend von dem rotierenden Spiegel 35 hinter dem ersten Spiegel 34. Der Winkel, unter dem der vom Spiegel 35 ausgehende Strahlengang verläuft, sowie die Abstände zwischen den Komponenten 34, 35, 37 und deren Abmessungen, sind so gewählt, dass der Strahlengang S2 in jeder Rotationsposition an diesem ersten Spiegel 34 vorbeiläuft und auf die Sammellinse 37 trifft.

Die Sammellinse 37 ist hier so ausgerichtet, dass ihre optische Achse koaxial zur Rotationsachse RA des rotierenden Spiegels 35 liegt. Vorzugsweise ist die Sammellinse 37 so ausgebildet, dass die Ausgangsstrahlen eines Laserstrahls, der sie in einer bestimmten Richtung durchquert, parallel zur Rotationsachse RA verlaufen. Sie lenkt also den sich auf einer Bahn in Form eines Kegelmantels bewegenden, eingehenden zweite Laserstrahl EL2 wieder so ab bzw. richtet ihn aus, dass der Strahlengang S2 des zweiten Laserstrahls EL2 im weiteren Verlauf hinter der Sammellinse 37 parallel und zwar in einem festen Achsabstand d radial versetzt zur (gedachten verlängerten) Rotationsachse RAs (also einer virtuellen Rotationsachse RAv) verläuft.

Bei dieser Konstruktion kann der Achsabstand d - und somit der Radius d der rotierenden Kreisbahn des zweiten Laserstrahls EL2 um die Rotationsachse RA - eingestellt werden, indem der Abstand zwischen der Sammellinse 37 und dem rotierenden Spiegel 35 und/oder die Schrägstellung des rotierenden Spiegels 35 geändert wird. Im Falle einer Abstandsänderung im Betrieb der Bestrahlungsvorrichtung 20 muss die Sammellinse 37 um eine optische Einheit zur Verstellung ihres Fokus ergänzt werden. Dabei handelt es sich um denjenigen Brennpunkt der Sammellinse 37, welcher auf der dem rotierbaren Spiegel 35 zugewandten Seite der Sammellinse 37 (also eingangsseitig) liegt. Dieser Brennpunkt der Sammellinse 37 liegt (im Rahmen üblicher Toleranzen) während des Einsatzes der Bestrahlungsvorrichtung 20 zur Verfestigung von Aufbaumaterial vorzugsweise stets in der Spiegelebene des rotierenden Spiegels 35 und dort in dessen Rotationszentrum.

Auch bei diesem Ausführungsbeispiel läge also eine über einen Umlauf auf der Kreisbahn (virtuelle) "gemittelte Strahlachse" oder ein "gemittelter Strahlengang" des zweiten Laserstrahls EL2 genau auf der Rotationsachse RAs des Spiegels, da dieser der virtuellen Rotationsachse RAv entspricht, um die der zweite Laserstrahl EL2 rotiert. Die virtuelle Rotationsachse RAv und somit die "gemittelte Strahlachse" des zweiten Laserstrahls EL2 sowie der Strahlengang S1 des ersten Energiestrahls EL1 sind auch hier wieder derart ausgerichtet, dass sie so auf einen Strahlkombinator 22 der Energiestrahlkombinationsvorrichtung 22 treffen, dass der gemäß oben gegebener Definition periodisch gemittelte virtuelle Strahlengang des zweiten Energiestrahls EL2 koaxial zum Strahlengang S1 des ersten Energiestrahls EL1 liegt und somit der Strahlengang S2 des zweiten Energiestrahls EL2 mit dem Achsabstand d jeweils parallel um den Strahlengang S1 des ersten Energiestrahls EL1 rotiert. Wie bei dem Ausführungsbeispiel gemäß Figur 4 kann der so erzeugte Kombinations-Energiestrahl AL dann in den Scanner 23 eingekoppelt werden.

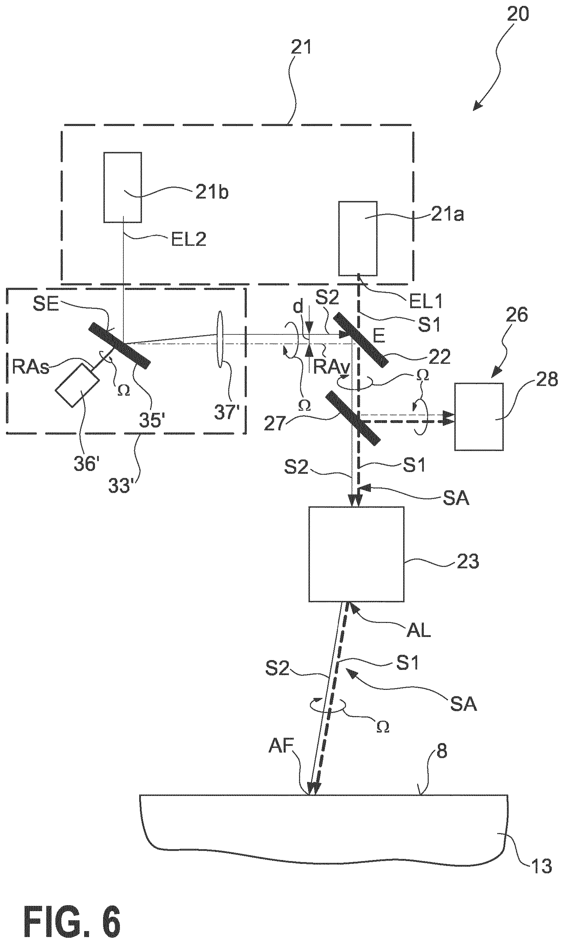

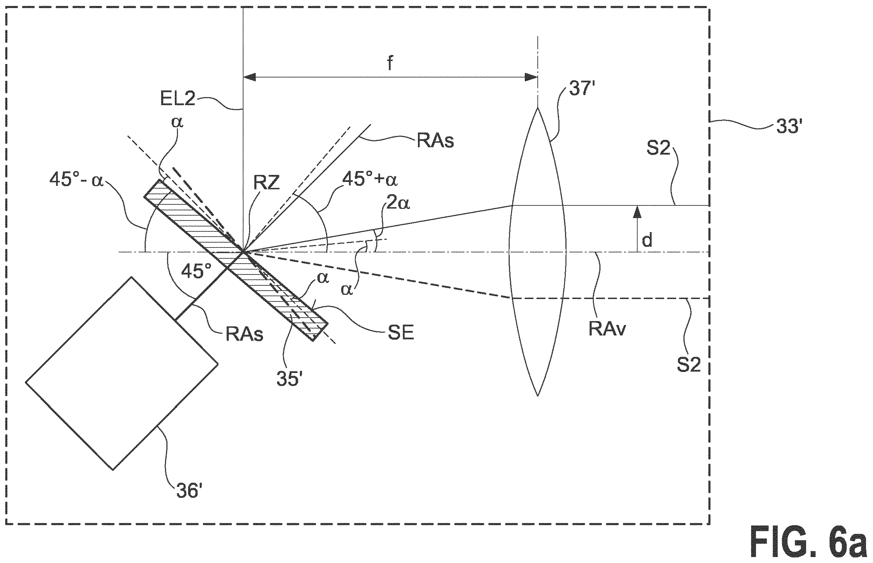

Eine weitere Abwandlung zeigen die Figuren 6 und 6a, wobei Figur 6a die erste Energiestrahl-Bewegungseinheit 33' aus Figur 6 vergrößert zeigt, um die Winkelstellungen genauer zu erläutern. Die hier genutzte Konstruktion ist der Konstruktion aus Figur 5 sehr ähnlich. Die erste Energiestrahl-Bewegungseinheit 33' ist hier jedoch so aufgebaut, dass auf den ersten Spiegel 34 verzichtet werden kann. Stattdessen ist die Rotationsachse RAr des rotierenden Spiegels 35' (und des Elektromotors 36') nun nicht wie bei dem Ausführungsbeispiel gemäß Figur 5 koaxial zu der optischen Achse der Sammellinse 37' angeordnet, sondern steht unter einem Winkel von 45° zu ihr.

Eine Spiegelebene SE des rotierenden Spiegels 35' ist zusätzlich noch unter einem Winkel α zu einer Senkrechten zur Rotationsachse RAs des Spiegels 35' verkippt. Anders formuliert, ist eine gemäß oben gegebener Definition periodisch gemittelte (virtuelle) Spiegelebene um das Rotationszentrum RZ des Spiegels 35' als Drehpunkt im Winkel α verdreht. Diese Verdrehung oder Schrägstellung kann fest sein, indem der Spiegel 35' an seiner Rotationsachse RAs fixiert ist. Alternativ kann sie variabel sein, indem der Spiegel 35 und seine Rotationsachse RAs z. B. durch ein Gelenk mechanisch miteinander verbunden sind, wobei das Gelenk durch einen Elektromotor verstellt werden kann.

Wird dann, wie dargestellt, der zweite Laserstrahl EL2 vom zweiten Laser 21b unter 90° zur optischen Achse der Sammellinse 37, also auch unter 45° zur Rotationsachse RA des rotierenden Spiegels 35, auf das Rotationszentrum RZ des rotierenden Spiegels 35' gestrahlt, so wird er von dort unter einem entsprechenden Winkel 2·α zur optischen Achse der Sammellinse 37' verkippt auf die Sammellinse 37' weitergeleitet. Da eine Rotationsbewegung des Spiegels 35' infolge einer Schrägstellung der Spiegelebene SE um den Winkel α zu einer entsprechenden Bewegung der Spiegeloberfläche bzw. Spiegelebene SE führt, bewegt sich also der zweite Laserstrahl EL2 hier vom Spiegel 35' ausgehend zunächst auf einem Kegelmantel und wird durch die Sammellinse 37' wieder so abgelenkt bzw. ausgerichtet, dass der Strahlengang S2 des zweiten Laserstrahls EL2 im weiteren Verlauf hinter der Sammellinse 37' parallel zur optischen Achse der Sammellinse 37' verläuft. Dazu muss der eingangsseitige Brennpunkt bzw. Fokus der Sammellinse 37' auf der Spiegelebene SE und im Rotationszentrum RZ des Spiegels 35' liegen.

Bei dieser Ausführungsform kann der Achsabstand d - und somit der Radius d der infolge der Rotationsbewegung des zweiten Laserstrahls EL2 entstehenden Kreisbahn um die optische Achse der Sammellinse 37 (also die "virtuelle Rotationsachse" RAv, um die der zweite Laserstrahl EL2 rotiert) - eingestellt werden, indem die Schrägstellung des rotierenden Spiegels 35' geändert wird (also um einen Winkel α ± x). Die oben beschriebenen Anforderungen an den Strahlengang des zweiten Laserstrahls EL2 sind erfüllt, sofern die Sammellinse 37' so ausgebildet bzw. ihre Brennweite f so gewählt ist, dass ihr eingangsseitiger Brennpunkt auch bei einer größeren oder geringeren Auslenkung des vom Spiegel 35' reflektierten zweiten Energiestrahls auf der Spiegelebene SE und in seinem Rotationszentrum RZ liegt, und ihr ausgangsseitiger Brennpunkt im Unendlichen, sodass die potenziellen Strahlengänge eines ausgehenden zweiten Laserstrahls EL2 parallel zueinander verlaufen.

Alle weiteren Komponenten können bei den Ausführungsbeispielen gemäß den Figuren 5 und 6 (mit 6a) identisch ausgebildet und angeordnet sein.

Die in allen drei Figuren 4 bis 6 gezeigten Bestrahlungsvorrichtungen 20 umfassen hier jeweils eine Monitoring-Einrichtung 26. Im Strahlengang ist hierzu jeweils ein Strahlteiler 27 eingebracht, der einen geringen Teil der Intensität des Kombinations-Energiestrahls AL in ein Überwachungssystem 28 zur Vermessung und Prüfung der Gesamt-Intensitätsverteilung GIV des Kombinations-Energiestrahls AL abzweigt. Das Überwachungssystem 28 kann einen Flächensensor umfassen, der ein integrales Bild/Signal der Gesamt-Intensitätsverteilung GIV aufzeichnet. Dadurch kann, beispielsweise im Überwachungssystem 28 oder in der Steuereinrichtung 50, z. B. eine Ist-Rotation der Gesamt-Intensitätsverteilung GIV gegen eine Soll-Rotation und/oder eine Ist-Verteilung gegen eine Soll-Verteilung der Intensitätsverteilung abgeglichen werden und mittels eines zusätzlichen Regelkreises (nicht dargestellt) kann die jeweilige Ist-Einstellung gegebenenfalls nachjustiert werden.

In allen zuvor im Detail erläuterten Ausführungsbeispielen ist die Rotationsgeschwindigkeit $\Omega$ so gewählt, dass der Betrag der Bahngeschwindigkeit, mit der sich der zweite Energiestrahl EL2 auf der Kreisbahn K in der Gesamt-Intensitätsverteilung GIV des Kombinations-Energiestrahls AL bewegt, hoch im Verhältnis zur jeweiligen Scangeschwindigkeit S ist.

Um den Intensitäts-Maximalwert MAX und den Intensitäts-Minimalwert MIN auf der Intensitätsprofilkurve IPK entlang der Kreisbahn K am Rand R der Top-Hat-Intensitätsverteilung zu erreichen, kann jeweils die Intensität des zweiten Energiestrahls EL2 während seiner Bewegung über den Umfang der Kreisbahn moduliert werden. Dazu kann - insbesondere auch bei den beiden Konstruktionen gemäß den Figuren 4 bis 6 -die Leistung L des zweiten Lasers 21b im einfachsten Fall mit einem Generatorsignal GS moduliert werden, wie es in Figur 7 dargestellt ist.

Zur Vereinfachung erfolgt hierbei die Beschreibung der Modulation in Abhängigkeit vom Polarwinkel $\varphi$ auf der Kreisbahn, wobei in Figur 7 die Amplitude A des Generatorsignals GS, welche mit der vom zweiten Laser 21b abzugebenden Leistung und folglich der absoluten Intensität des zweiten Laserstrahls korreliert ist, in willkürlichen Einheiten [a. u.] über dem Winkel $\varphi$ (welcher in Figur 6 von $-\pi$ bis $+\pi$ läuft) aufgezeichnet ist. Am Winkel $\varphi$ = 0 liegt hier die maximale Amplitude des Generatorsignals GS vor und fällt jeweils zum Winkel $\varphi$ = +/- $\pi$ auf einen Minimalwert ab, so dass die absolute Intensität des zweiten, gaußförmigen Laserstrahls EL2 während eines Umlaufs auf der Kreisbahn K periodisch zwischen einem Minimalwert und einem Maximalwert sinusförmig hin- und herläuft. Ohne Beschränkung der Allgemeinheit wird hier davon ausgegangen, dass der Winkel $\varphi$ = 0 in Scanrichtung S vorne liegt. Dementsprechend befindet sich hier der Intensitäts-Maximalwert MAX der Gesamt-Intensitätsverteilung GIV in Scanrichtung S vorne und ein Intensitäts-Minimalwert MIN hinten, wie dies in den Figuren 2 und 3 dargestellt ist.

Durch eine einfache Phasenverschiebung dieses Generatorsignals GS lassen sich der Maximalwert MAX und der Minimalwert MIN auf der Kreisbahn K verschieben, also um das Rotationszentrum bzw. die Strahlachse S1 der Top-Hat-Intensitätsverteilung drehen. Dies ist zum einen bei einer Änderung der Scanrichtung auf dem Baufeld 8 wichtig, aber gegebenenfalls auch für eine Anpassung der Gesamt-Intensitätsverteilung GIV bzw. der Lage des Maximalwerts MAX an einen Umgebungsparameter am aktuellen Auftreffort AF.

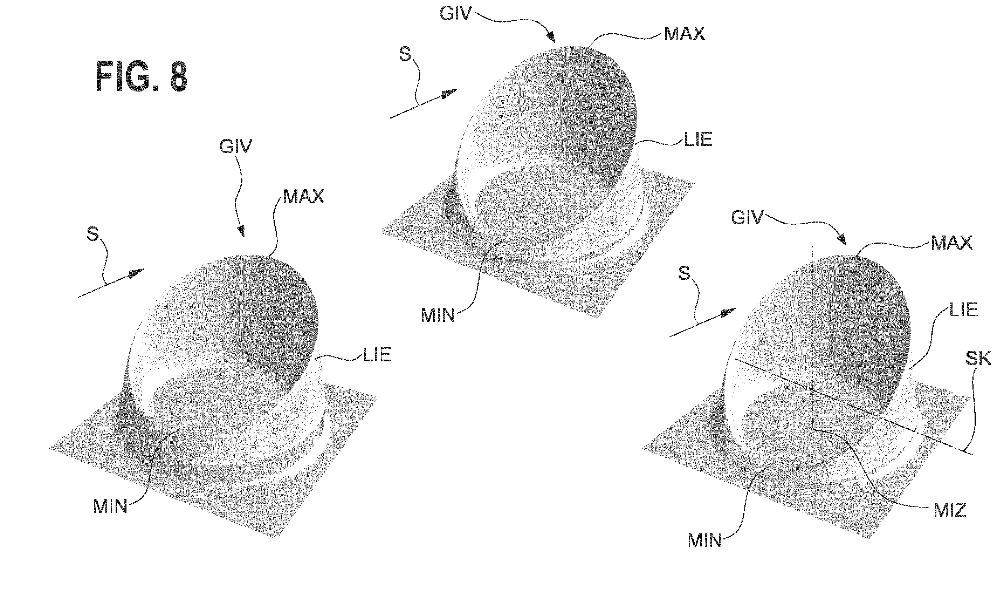

Durch die Amplitude A des beispielsweise in Figur 7 gezeigten Generatorsignals GS für den zweiten Laserstrahl EL2 lassen sich die relativen Intensitätsunterschiede zwischen dem Maximalwert MAX und dem Minimalwert MIN auf der Intensitätsprofilkurve IPK einstellen. Dies ist beispielhaft in Figur 8 anhand von drei nebeneinander gezeigten Gesamt-Intensitätsverteilungen GIV gezeigt, wobei alle Gesamt-Intensitätsverteilungen GIV die gleiche Grundform aufweisen und sich nur in den Höhen des Maximums und des Minimums bzw. in der Form des Intensitätsverlaufs auf der Intensitätsprofilkurve IPK entlang der Kreisbahn K entlang des Rands R der Gesamt-Intensitätsverteilung GIV unterscheiden. Es wird also die Grundform der Gesamt-Intensitätsverteilung GIV verzerrt, wobei das Minimum MIZ hier in eine Richtung entgegen der Scanrichtung bzw. bezogen auf die Scanrichtung innerhalb der Gesamt-Intensitätsverteilung GIV nach hinten verschoben wird.

Welche genaue Form der Gesamt-Intensitätsverteilung GIV jeweils für den aktuellen Fertigungsprozess optimal ist, kann von verschiedenen weiteren Prozessparametern abhängen, u. a. von der aktuellen Scangeschwindigkeit.

Figur 8 zeigt auf der linken Seite beispielsweise eine Simulation für eine Gesamt-Intensitätsverteilung GIV bei einer Scangeschwindigkeit von 0,1 m/s. In der Mitte ist eine Gesamt-Intensitätsverteilung GIV für eine Scangeschwindigkeit von 1,6 m/s gezeigt. Auf der rechten Seite ist eine Gesamt-Intensitätsverteilung GIV für eine Scangeschwindigkeit von 3,1 m/s dargestellt.

Am Vergleich der drei Gesamt-Intensitätsverteilungen GIV ist zu erkennen, dass mit steigender Scangeschwindigkeit der Maximalwert MAX im Verhältnis zum Minimalwert MIN auf der Intensitätsprofilkurve IPK ansteigt. Mit anderen Worten ist der Funktionsbereich F2 "Heizen" (siehe Figur 2 mit den Erläuterungen hierzu) im Verhältnis zum Funktionsbereich "Halten" F1 besonders stark erhöht. Dies lässt sich einfach dadurch erklären, dass der Funktionsbereich F1 "Halten" ja lediglich als ein "Wärmeverlustkompensationsbereich" benötigt wird, um die Verluste durch Wärmeströme innerhalb von Temperaturunterschieden zwischen dem Schmelzbad und dem umgebenden Material auszugleichen. Eine Ausdehnung des Funktionsbereichs F1 "Halten" kann also mit den Stoffwerten, insbesondere der Wärmeleitfähigkeit, der thermokapillaren Konvektion und der Temperaturverteilung in der Nähe der Umgebung des Schmelzbads skalieren. Insbesondere mit zunehmender Geschwindigkeit verliert er aber an Bedeutung im Vergleich zu den übrigen definierten Funktionsbereichen.

Der Funktionsbereich F2 "Heizen" wird dagegen benötigt, um noch nicht verfestigtes kaltes Aufbaumaterial 13 bzw. zum Teil auch bereits verfestigtes Material einer Nachbarspur (z. B. einem Nachbar-Hatch) auf die Schmelztemperatur vor- bzw. aufzuheizen. Besonders dieser Bereich skaliert mit der Geschwindigkeit der Auftrefffläche. Mit zunehmender Scangeschwindigkeit muss entsprechend das Aufheizen schneller erfolgen, d. h. es wird mehr Intensität benötigt und das Maximum wird höher und dementsprechend auch der Funktionsbereich F2 breiter, d. h. der Funktionsbereich F2 erstreckt sich weit bis über das Zentrum der Gesamt-Intensitätsverteilung GIV nach hinten heraus. Im Extremfall (siehe rechte Gesamt-Intensitätsverteilung GIV in Figur 8) entspricht der Minimalwert MIN der Profilkurve IPK auch dem absoluten Minimum MIZ der Gesamt-Intensitätsverteilung GIV. Dennoch weist, wie in der Figur 8 zu erkennen ist, auch hier die Gesamt-Intensitätsverteilung GIV im mittleren Bereich noch bezüglich einer Sekante SK ein lokales Minimum auf, da ja der zweite Laserstrahl EL2 auf der Intensitätsprofilkurve IPK für eine lokale Erhöhung der Gesamt-Intensitätsverteilung GIV sorgt. Die Sekante SK verläuft hier senkrecht zur Scanrichtung S durch den Schwerpunkt (der geometrischen Figur) der Gesamt-Intensitätsverteilung GIV, der hier etwas in Scanrichtung S nach vorne verschoben zwischen dem Zentrum, durch das die Rotationsachse bzw. Strahlachse SA des Gesamt-Intensitätsprofils GIV verläuft, und dem Maximalwert MAX liegt.

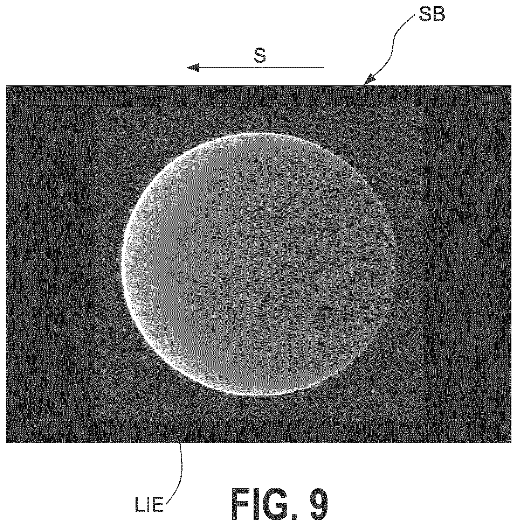

Figur 9 zeigt hierzu ein Graustufenbild SB der Intensitätsverteilung des Kombinations-Energiestrahls, wie er sich beispielsweise bei einem Strahl, wie er in Figur 8 auf der rechten Seite dargestellt ist, ergeben würde. Die hellen Flächen sind hier die Bereiche mit besonders hoher Energiestrahl-Intensität. Diese zeigen deutlich eine Sichelform bzw. die Form eines Halbmondes mit dem Bauch in Richtung der Scanrichtung S. Das heißt, dass an der "Vorderkante" der Gesamt-Intensitätsverteilung GIV, die im Zuge der Vorschubbewegung bzw. Scanbewegung zuerst auf den Werkstoff trifft, eine starke Intensitätsüberhöhung gemessen an der mittleren Intensität auftritt, die dann in den hinteren Bereichen relativ steil abfällt, um dann sanft und flach zum hinteren Rand hin auszulaufen.

Wie oben erwähnt, lässt sich beispielsweise bei den dargestellten Ausführungsbeispielen durch eine einfache Phasenverschiebung des z. B. in Figur 7 dargestellten Generatorsignals GS der zweite Laser 21b so ansteuern, dass der Maximalwert MAX und der Minimalwert MIN auf der Intensitätsprofilkurve IPK verschoben werden, d. h. dass die Gesamt-Intensitätsverteilung GIV um das Rotationszentrum bzw. die Strahlachse SA der Gesamt-Intensitätsverteilung GIV verdreht wird.

Dies kann wie gesagt bei einer Richtungsänderung der Scanbewegung erforderlich sein, beispielsweise bei einer Hatch-Umkehr, wenn bei einem Abfahren der Schraffur jeweils zum Ende einer Schraffurlinie (Hatch) in einem Strahlungsstreifen der Nachbar-Hatch in umgekehrter Richtung abgefahren werden soll. Zum anderen ist es aber auch vorteilhaft, wenn die genaue Ausgestaltung der Gesamt-Intensitätsverteilung GIV an Auftreffflächen-Umgebungsparameter angepasst werden kann, nämlich insbesondere daran, ob die aktuelle Verfestigung auf einer Spur bzw. einem Hatch erfolgt, der parallel zu einem bereits verfestigten Bereich verläuft.

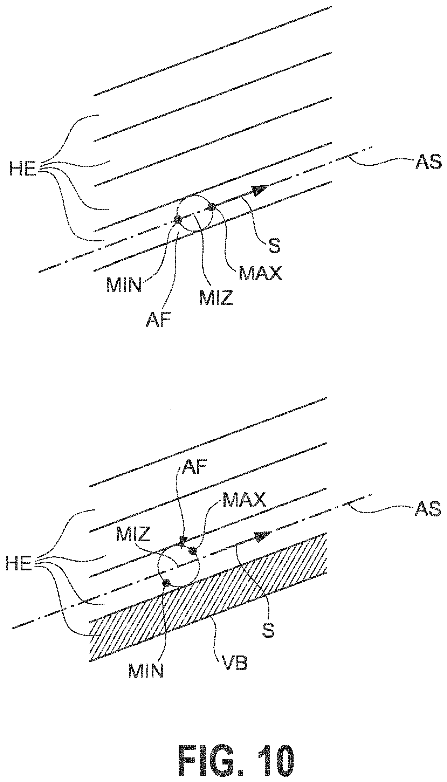

Hierzu wird beispielhaft auf Figur 10 verwiesen. Im oberen Bild sind hier exemplarisch vier Hatch-Spuren HE dargestellt, wobei der Auftreffbereich AF aktuell in einer Scanrichtung S entlang einer ersten Spur HE verläuft, neben der sich noch keine verfestigte Nachbarspur befindet. Dementsprechend ist die Gesamt-Intensitätsverteilung GIV bevorzugt so ausgerichtet, dass das Maximum in Scanrichtung S exakt vorne liegt und das Minimum MIN hinten. Mit anderen Worten ist die Gesamt-Intensitätsverteilung GIV achsensymmetrisch bezüglich einer parallel zur Scanrichtung S bzw. koaxial zur Scanrichtung S verlaufenden Symmetrieachse AS.

Im unteren Bereich der Figur 10 ist die Situation beim Verfestigen in einer nachfolgenden Spur HE gezeigt, wobei die vorherige, unmittelbar benachbarte, Spur noch warm, aber bereits erstarrt ist. Hier ist es von Vorteil, wenn die Intensitätsprofilkurve IPK leicht gegenüber der Scanrichtung S verdreht ist, so dass der Maximalwert MAX etwas weiter von dem bereits verfestigten Bereich VB der ersten Spur HE entfernt ist und das Minimum MIN etwas näher an den verfestigten Bereich VB heranrückt. Mit anderen Worten ist hier die Gesamt-Intensitätsverteilung GIV bewusst nicht achsensymmetrisch zu der oben definierten, koaxial zur Scanrichtung S liegenden Symmetrieachse AS. Dies hat den Grund, dass in den Nachbar-Hatch bereits bei dessen Verfestigung Energie eingebracht wurde. Denn die Verfestigung der einzelnen, nebeneinander liegenden Hatches erfolgt in der Regel in kurzen Zeitabständen, innerhalb welcher typischerweise kein vollständiges Erkalten des aufgeschmolzenen Aufbaumaterials, z. B. auf eine Umgebungstemperatur in der Prozesskammer bzw. im Bauvolumen, stattfindet. Es muss also zum Anbinden einer aktuellen Spur HE an die unmittelbar zuvor verfestigte, jeweils benachbarte Spur HE nur noch die Energie bereitgestellt werden, welche nicht durch Wärmeleitung in das untenliegende Material abgeleitet ist. Hier sind die Abtastpfade streng getrennt dargestellt bzw. die Gesamt-Intensitätsverteilung ist nicht größer als ein einzelner Abtastpfad. Grundsätzlich wäre aber auch ein Überlapp denkbar.

Sollte die benachbarte Spur HE bereits abgekühlt sein, da sie in relativ großem zeitlichem Abstand vor einer aktuellen Spur HE verfestigt wurde, kann es sinnvoll sein, den Maximalwert MAX der Gesamt-Intensitätsverteilung für die Bestrahlung der aktuellen Spur HE in Richtung der bereits erstarrten und erkalteten Spur zu orientieren bzw. aus einer Ausgangsposition gemäß der oberen Darstellung der Figur 10 hinzudrehen. Denn in dem Bereich der aktuell zu verfestigenden Spur HE nahe der verfestigten Spur HE ist in diesem Fall die Wärmeleitung erhöht, sodass zum Erreichen einer gewünschten Verfestigung dort mehr Energie eingebracht werden muss. Diese Variante ist jedoch nicht in einer eigenen Figur dargestellt.

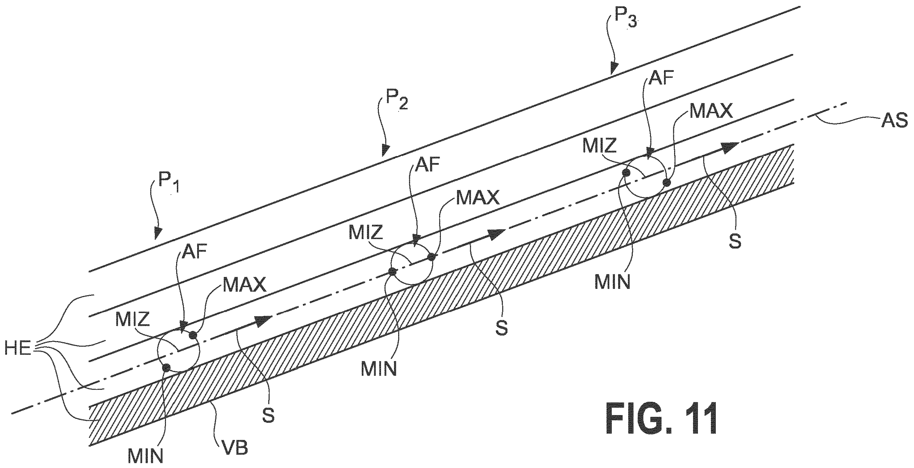

Auch ein Strategiewechsel während des Verfestigens einer einzigen Spur ist möglich, wie dies in Figur 11 schematisch dargestellt ist.

Wenn beispielsweise eine aktuelle Spur HE gegenläufig zu einer relativ langen, vorhergehend verfestigten, unmittelbar benachbarten Spur HE verfestigt wird, so ist zu Anfang der aktuellen Spur HE ein vorhergehend verfestigter, benachbarter Bereich VB relativ heiß, da ja erst relativ wenig Zeit seit seinem Verfestigen vergangen ist. Zum Ende der Spur HE hin wird der benachbarte verfestigte Bereich VB dagegen immer kälter. Dementsprechend kann der Maximalwert MAX am Anfang (Position $P_1$) der aktuellen Spur HE vom benachbarten verfestigten Bereich VB weggedreht sein, d. h. näher an einer neben der aktuellen Spur unmittelbar benachbart liegenden, ggf. nachfolgend zu verfestigenden Spur HE angeordnet sein, als an dem verfestigten Bereich VB. Im weiteren Verlauf der Bestrahlung in der Scanrichtung S wird der Maximalwert MAX der Gesamt-Intensitätsverteilung dann so verdreht, dass er auf der Symmetrieachse AS liegt (Position $P_2$) und dann sukzessive, vorzugsweise kontinuierlich, weiter so verdreht, dass er am Ende der aktuellen Spur HE zum benachbarten verfestigten Bereich VB hingedreht ist (Position $P_3$), d. h. näher an dem verfestigten Bereich VB liegt als an einer neben der aktuellen Spur unmittelbar benachbart liegenden, ggf. nachfolgend zu verfestigenden Spur HE.

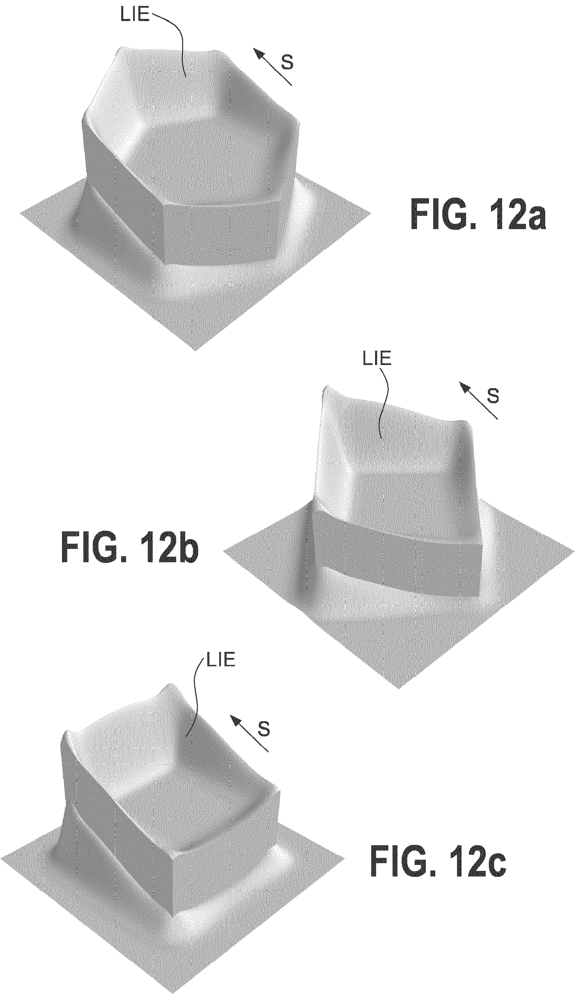

In den Figuren 12a bis 12e sind weitere mögliche Gesamt-Intensitätsverteilungen dargestellt, die erzeugt werden, indem der ("kleinere") zweite Energiestrahl zyklische Bahnen abfährt, wobei hier in allen Fällen die Bahn des zweiten Energiestrahls wieder in etwa parallel innerhalb eines Randes der Energieverteilung des ("größeren") ersten Energiestrahls verläuft. Der erste Energiestrahl weist in allen Fällen jeweils wieder ein Plateau ("Flat-Top" oder "Top-Hat-Intensitätsverteilung") auf, hat aber eine unterschiedliche geometrische Grundfläche. D. h., die Intensitätsverteilung ist jeweils räumlich relativ homogen über den Strahlquerschnitt mit einer relativ scharfen Randkante. Auch solche ersten Energiestrahlen mit derartigen Energieverteilungen können mit geeigneten Strahlformeinheiten, wie beispielsweise diffraktiven optischen Elementen (DOEs), erzeugt werden.

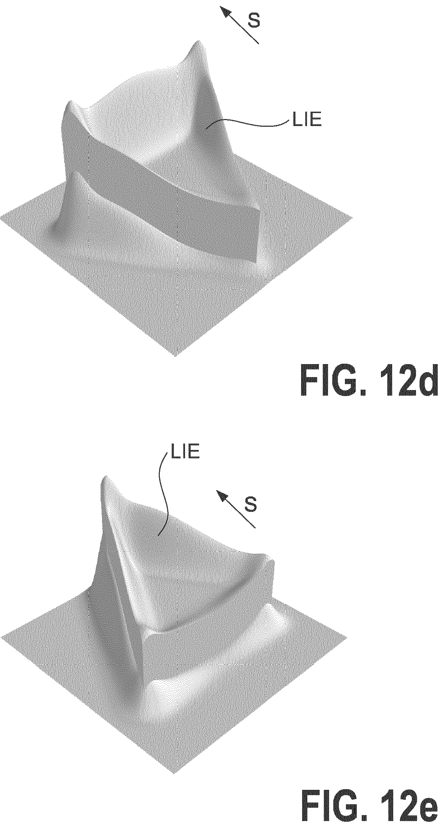

Konkret zeigt Figur 12a eine Gesamt-Intensitätsverteilung mit einer sechseckigen bzw. wabenförmigen Grundfläche, wobei eine Ecke in Scanrichtung S vorne liegt. Figur 12b zeigt eine Gesamt-Intensitätsverteilung mit einer viereckigen Grundfläche, wobei auch hier eine Ecke in Scanrichtung S vorne liegt. In Figur 12c ist dagegen die viereckige Grundfläche der Gesamt-Intensitätsverteilung so ausgerichtet, dass eine Kante des Vierecks (hier Quadrats) in Scanrichtung S vorne liegt. Die Figuren 12d und 12e zeigen zwei dreieckige Varianten, einmal mit einer Vorderkante senkrecht Scanrichtung S (Figur 12d) und einmal mit einer Spitze bzw. Ecke vorne in Scanrichtung S (Figur 12e).

In allen Fällen wird hier der zweite Energiestrahl auch in seiner Intensität im Verlauf seiner Bahn so modifiziert, dass jeweils ein Intensitätsmaximum oder ein maximaler Bereich (bei den Verteilungen mit den vorne liegenden Kanten) der Gesamt-Intensitätsverteilungen in Scanrichtung S vorne liegt.

In der Praxis können die in den Figuren scharfkantig dargestellten Ränder bzw. Ecken der geometrischen Figuren der Gesamt-Intensitätsverteilungen auch abgerundet erzeugt werden (z. B. aufgrund der Trägheit bewegter Komponenten der Strahlerzeugung bzw. Strahlablenkung).

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Insbesondere wird noch einmal darauf hingewiesen, dass sich ein Kombinations-Energiestrahl mit einer geeigneten Gesamt-Intensitätsverteilung auch dadurch erzeugen lässt, dass mit zwei entsprechend koordiniert bzw. synchronisiert gesteuerten Scannern zu jedem Zeitpunkt dafür gesorgt wird, dass sich der erste und der zweite Energiestrahl in der passenden Position zueinander überlagert in der Auftrefffläche befinden, wobei dann der Scanner für den zweiten Energiestrahl entsprechend schneller bewegt werden kann als der Scanner für den ersten Energiestrahl. Auch könnte beispielsweise zur Bewegung der Auftrefffläche des Kombinations-Energiestrahls eine Bestrahlungsvorrichtung mit zumindest zwei Strahlquellen gemeinsam bewegt werden, wobei eine der Strahlquellen zusätzlich bzw. überlagert eine (bevorzugt schnelle) Relativbewegung zur anderen Strahlquelle ausführt, oder es kann zumindest der Energiestrahl einer der gemeinsam bewegten Strahlquellen mit einer hierfür vorgesehenen Bewegungseinheit, z.B. mit einem Spiegel etc., relativ zum Energiestrahl der anderen Strahlquelle bewegt werden. Weiterhin wäre es möglich, zusätzlich zu der relativen Bewegung der beiden Energiestrahlen zueinander auch eine (unterschiedliche) Fokusveränderung bzw. Fokusaufweitung/Defokussierung der Energiestrahlen zu nutzen. Ebenso wird noch einmal darauf hingewiesen, dass das Verfahren außer für die additive Fertigung auch für andere Prozesse, beispielsweise für ein Schweißen von Nähten oder dergleichen, eingesetzt werden könnte. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren zusammenwirkenden Teil-Komponenten besteht, die gegebenenfalls auch räumlich verteilt sein können.

Bezugszeichenliste

1 Vorrichtung zur additiven Fertigung / Lasersintervorrichtung

2 Fertigungsprodukt / Objekt / Bauteil
3 Prozessraum / Prozesskammer
4 Kammerwandung
5 Behälter
6 Behälterwandung
7 Arbeitsebene
8 Baufeld
10 Träger
11 Grundplatte
12 Bauplattform
13 Aufbaumaterial
14 Vorratsbehälter
16 Beschichter
17 Strahlungsheizung
18 Sensoranordnung / Kamera
20 Bestrahlungsvorrichtung / Belichtungsvorrichtung
21 Energiestrahlquellen-System / Lasersystem
21a Laser
21b Laser
22 Energiestrahlkombinationsvorrichtung / Strahlkombinator
23 zweite Energiestrahl-Bewegungseinheit / Scanner / Umlenkeinheit
24 Fokussiereinrichtung
25 Einkoppelfenster
26 Monitoring-Einrichtung
27 Strahlteiler
28 Überwachungssystem
30 erste Energiestrahl-Bewegungseinheit
31 Hohlwelle
32 optisches Element / transmissives Strahlversatzelement / Planplatte
33 erste Energiestrahl-Bewegungseinheit
33' erste Energiestrahl-Bewegungseinheit
34 erster Spiegel
35 rotierender Spiegel
35' rotierender Spiegel
36 Rotationseinheit / Elektromotor
36' Rotationseinheit / Elektromotor
37 Sammellinse
37' Sammellinse
50 Steuereinrichtung
51 Steuereinheit
52 Qualitätsdaten-Ermittlungseinrichtung
53 Bestrahlungs-Steuerschnittstelle
54 Steuerdatenerzeugungsvorrichtung
54' Steuerdatenerzeugungsvorrichtung
55 Bus
56 Terminal
A Amplitude des Generatorsignals
AF Auftrefffläche
AL (Ausgangs-) Kombinations-Energiestrahl / Laserstrahl
AS Symmetrieachse
B Schnittebene
d Achsabstand
DS Strahlausdehnung / Durchmesser

EL1 erster Energiestrahl / Laserstrahl
EL2 zweiter Energiestrahl / Laserstrahl
f Brennweite
FS Fokussteuerdaten
F1 Funktionsbereich "Halten"
F2 Funktionsbereich "Heizen"
F3 Funktionsbereich "Formen"
GS Generatorsignal
H horizontale Richtung
HE Hatch-Spuren
HS Heizungssteuerdaten
GIV Gesamt-Intensitätsverteilung
IPK Intensitätsprofilkurve
K Kreisbahn
LIE lokale Intensitätserhöhung
LSa, LSb Lasersteuerdaten
MAX lokaler Maximalwert
MIN lokaler Minimalwert
MIZ Minimum
PST Prozesssteuerdaten
$P_1$, $P_2$, $P_3$ Positionen
QD Qualitätsdaten
R Rand
RAh Rotationsachse Hohlwelle
RAs Rotationsachse Spiegel
RAv virtuelle Rotationsachse
RS Relativbewegungssteuerdaten
RZ Rotationszentrum
S Bewegungsrichtung der Auftrefffläche / Scanrichtung
SA Strahlengang / Strahlachse des Kombinations-Energiestrahls
SB Graustufenbild
SD Scansteuerdaten
SE Spiegelebene
SK Sekante
SP1 erste Intensitätsverteilung / Top-Hat-Intensitätsverteilung
SP2 zweite Intensitätsverteilung / Gauß-Intensitätsverteilung
ST Beschichtungssteuerdaten
S1 Strahlengang / Strahlachse des ersten Energiestrahls
S2 Strahlengang / Strahlachse des zweiten Energiestrahls
TS Trägersteuerdaten
V vertikale Richtung
VB verfestigter Bereich
x, y Ebene
z Richtung
Ω Rotationsgeschwindigkeit
α Winkel
φ Polarwinkel

**Patentansprüche**

1. Verfahren zum Bestrahlen eines Materials (13) mit zumindest einem Energiestrahl (AL), insbesondere zum lokalen Aufschmelzen des Materials (13), wobei eine Auftrefffläche (AF) des Energiestrahls (AL) auf dem Material (13) bewegt wird, wobei

- zumindest ein erster Energiestrahl (EL1) und ein zweiter Energiestrahl (EL2) erzeugt werden,
- der zweite Energiestrahl (EL2) relativ zum ersten Energiestrahl (EL1) bewegt wird, **dadurch gekennzeichnet, dass**
- der erste Energiestrahl (EL1) und der zweite Energiestrahl (EL2) so in einem gemeinsamen Strahlengang (SA) in eine Energiestrahl-Bewegungseinheit (23) eingekoppelt werden, dass sie gemeinsam als Kombinations-Energiestrahl (AL) über das Material (13) bewegt werden, wobei hierzu die Energiestrahlen (EL1, EL2) ausgehend von einem Ort der Zusammenführung entlang desselben Strahlengangs verlaufen, wobei sich eine jeweils aktuelle relative Position der Intensitätsverteilungen des ersten Energiestrahls (EL1) und des zweiten Energiestrahls (EL2) in einer senkrecht zu einer Strahlachse des Kombinations-Energiestrahls (AL) verlaufenden Schnittebene auf dem Weg durch die Energiestrahl-Bewegungseinheit (23) von einer Einkoppelstelle in die Energiestrahl-Bewegungseinheit (23) bis zu einer Auftrefffläche (AF) nicht wesentlich ändert.

2. Verfahren zum Bestrahlen eines Materials (13) mit zumindest einem Energiestrahl (AL), wobei zumindest ein erster Energiestrahl (EL1) und ein zweiter Energiestrahl (EL2) erzeugt werden, **dadurch gekennzeichnet, dass** der erste Energiestrahl (EL1) und der zweite Energiestrahl (EL2) zumindest teilweise überlagert als Kombinations-Energiestrahl (AL) koordiniert mit einer vorgegebenen Scangeschwindigkeit über das Material (13) bewegt werden, insbesondere zum lokalen Aufschmelzen des Materials (13), wobei der zweite Energiestrahl (EL2) relativ zum ersten Energiestrahl (EL1) mit einer vorgegebenen Relativgeschwindigkeit bewegt wird, deren Betrag zumindest 2-mal größer als die Scangeschwindigkeit ist.

3. Verfahren nach Anspruch 1 oder 2, wobei der zweite Energiestrahl (EL2) in Abhängigkeit von seiner relativen Position zum ersten Energiestrahl (EL1) und/oder in Abhängigkeit von einer aktuellen Bewegungsrichtung (S) der Auftrefffläche (AF) des Kombinations-Energiestrahls (AL) intensitätsmoduliert wird.

4. Verfahren nach einem der vorstehenden Ansprüche, wobei der erste Energiestrahl (EL1) und der zweite Energiestrahl (EL2) unterschiedliche Intensitätsverteilungen (SP1, SP2) aufweisen,

wobei vorzugsweise der erste Energiestrahl (EL1) eine bezüglich einer Strahlachse (S1) im Wesentlichen rotationssymmetrische Intensitätsverteilung (SP1), besonders bevorzugt eine Top-Hat-Intensitätsverteilung, aufweist und/oder wobei vorzugsweise der zweite Energiestrahl (EL2) eine bezüglich einer Strahlachse (S2) im Wesentlichen rotationssymmetrische Intensitätsverteilung (SP2), besonders bevorzugt eine Gauß-Intensitätsverteilung, aufweist.

5. Verfahren nach einem der vorstehenden Ansprüche, wobei der zweite Energiestrahl (EL2) bei der Einkopplung in den gemeinsamen Strahlengang (SA) in die Energiestrahl-Bewegungseinheit (23) eine geringere maximale Strahlausdehnung als der erste Energiestrahl (EL1) aufweist.

6. Verfahren nach einem der vorstehenden Ansprüche, wobei die Relativbewegung des zweiten Energiestrahls (EL2) relativ zum ersten Energiestrahl (EL1) und/oder die Intensitätsmodulation des zweiten Energiestrahls (EL2) zyklisch, vorzugsweise gleichmäßig, erfolgen.

7. Verfahren nach einem der vorstehenden Ansprüche, wobei der zweite Energiestrahl (EL2), vorzugsweise entlang einer Kreisbahn (K), entlang eines Rands (R) einer Intensitätsverteilung (SP1) des ersten Energiestrahls (EL1) bewegt wird.

8. Verfahren nach einem der vorstehenden Ansprüche, wobei die Relativbewegung des zweiten Energiestrahls (EL2) relativ zum ersten Energiestrahl (EL1) und/oder die Intensitätsmodulation des zweiten Energiestrahls (EL2) so erfolgt, dass der über das Material (13) bewegte Kombinations-Energiestrahl (AL) in einer senkrecht zur Strahlachse (SA) des Kombinations-Energiestrahls (AL) verlaufenden Schnittebene (x, y) an einer Auftrefffläche (AF) auf dem Material (13) eine Gesamt-Intensitätsverteilung (GIV) aufweist, welches über eine Zeitspanne integriert

- zumindest ein lokales Minimum (MIZ) in einem mittleren Bereich entlang zumindest einer Sekante (SK) in der Schnittebene (x, y) aufweist und
- eine entlang eines Rands (R) der Gesamt-Intensitätsverteilung (GIV) umlaufende Intensitätsprofilkurve (IPK) aufweist, welche an zumindest einer Stelle einen Maximalwert (MAX) und in einem dem Maximalwert (MAX) auf dieser Intensitätsprofilkurve (IPK) gegenüberliegenden Bereich einen lokalen Minimalwert (MIN) aufweist.

9. Verfahren zur additiven Fertigung eines Fertigungsprodukts (2), wobei Aufbaumaterial (13) selektiv verfestigt wird und hierzu auf einem Baufeld (8) eine Bestrahlung des Aufbaumaterials (13) mit zumindest einem Kombinations-Energiestrahl (AL) unter Nutzung eines Verfahrens gemäß einem der Ansprüche 1 bis 8 erfolgt.

10. Bestrahlungsvorrichtung (20) zum Bestrahlen eines Materials (13) mit zumindest einem Energiestrahl (AL), wobei eine Auftrefffläche (AF) des Energiestrahls (AL) auf dem Material (13) bewegt wird, umfassend zumindest

   - ein Energiestrahlquellen-System (21) zur Erzeugung zumindest eines ersten Energiestrahls (EL1) und eines zweiten Energiestrahls (EL2),
   - eine erste Energiestrahl-Bewegungseinheit (30, 33, 33') zum Bewegen des zweiten Energiestrahls (EL2) relativ zum ersten Energiestrahl (EL1), **gekennzeichnet durch**
   - eine Energiestrahlkombinationsvorrichtung (22) und eine zweite Energiestrahl-Bewegungseinheit (23), welche so ausgebildet und zueinander angeordnet sind, dass der erste Energiestrahl (EL1) und der zweite Energiestrahl (EL2) in einen gemeinsamen Strahlengang (SA) in die zweite Energiestrahl-Bewegungseinheit (23) so eingekoppelt werden, dass sie gemeinsam als Kombinations-Energiestrahl (AL) über das Material (13) bewegt werden, wobei hierzu die Energiestrahlen (EL1, EL2) ausgehend von einem Ort der Zusammenführung entlang desselben Strahlengangs verlaufen, wobei sich eine jeweils aktuelle relative Position der Intensitätsverteilungen des ersten Energiestrahls (EL1) und des zweiten Energiestrahls (EL2) in einer senkrecht zu einer Strahlachse des Kombinations-Energiestrahls (AL) verlaufenden Schnittebene auf dem Weg durch die zweite Energiestrahl-Bewegungseinheit (23) von einer Einkoppelstelle in die zweite Energiestrahl-Bewegungseinheit (23) bis zu einer Auftrefffläche (AF) nicht wesentlich ändert.

11. Bestrahlungsvorrichtung (20) nach Anspruch 10, wobei die Energiestrahlkombinationsvorrichtung (22) einen Strahlkombinator (22) umfasst, welcher der zweiten Energiestrahl-Bewegungseinheit (23) vorgeschaltet ist und den ersten Energiestrahl (EL1) und den zweiten Energiestrahl (EL2) parallel zueinander in die Energiestrahl-Bewegungseinheit (23) einkoppelt, wobei der Strahlkombinator (23) vorzugsweise einen Polarisator (23), besonders bevorzugt einen Dünnschicht-Polarisator (23), umfasst.

12. Bestrahlungsvorrichtung (20) nach Anspruch 10 oder 11, wobei die erste Energiestrahl-Bewegungseinheit (30, 33, 33') eine Rotationseinheit (31, 36, 36') mit einem rotierbaren optischen Element (32, 35, 35') umfasst.

13. Bestrahlungsvorrichtung (20) nach Anspruch 12, wobei die erste Energiestrahl-Bewegungseinheit (30, 33, 33')

   als rotierbares optisches Element (32) ein transmissives Strahlversatzelement (32), vorzugsweise eine Planpatte (32) aufweist, welche schräg im Strahlengang (S2) des zweiten Energiestrahls (EL2) um eine Rotationsachse (RAh) rotierbar angeordnet ist, wobei die Rotationsachse (RAh) koaxial zum Strahlengang (S2) des eingehenden zweiten Energiestrahls (EL2) verläuft,
   und/oder

   als rotierbares optisches Element (35, 35') einen Reflektor, insbesondere einen Spiegel, (35, 35') aufweist, welcher schräg im Strahlengang (S2) des zweiten Energiestrahls (EL2) und um eine Rotationsachse (RAs) rotierbar angeordnet ist, so dass im Betrieb der ausgehende Strahlengang (S2) unter einem Winkel zur Rotationsachse (RAs) verläuft und wobei dem Reflektor (35, 35') im weiteren Strahlengang (S2) des zweiten Energiestrahls (EL2) ein weiteres optisches Element, insbesondere eine Sammellinse, (37, 37') nachgeschaltet ist, welches im Betrieb den vom Reflektor (35, 35') ausgehenden Strahlengang (S2) so umlenkt, dass der Strahlengang (S2) mit einer Rotation des Spiegels (35, 35') auf einer virtuellen Zylindermantelfläche um eine virtuelle Rotationsachse (RAv) rotiert und dabei immer parallel zu der virtuellen Rotationsachse (RAv) verläuft.

14. Bestrahlungsvorrichtung (20) zum Bestrahlen eines Materials (13) mit zumindest einem Energiestrahl (AL), umfassend zumindest

   - ein Energiestrahlquellen-System (21) zur Erzeugung zumindest eines ersten Energiestrahls (EL1) und eines zweiten Energiestrahls (EL2),
   - eine erste Energiestrahl-Bewegungseinheit (30, 33, 33') und eine zweite Energiestrahl-Bewegungseinheit (23), **gekennzeichnet durch**
   - eine Steuereinrichtung (50), welche die Bestrahlungsvorrichtung (20) so ansteuert, dass der erste Energiestrahl (EL1) und der zweite Energiestrahl (EL2) zumindest teilweise überlagert als Kombinations-Energiestrahl (AL) koordiniert mit einer vorgegebenen Scangeschwindigkeit über das Material (13) bewegt werden, insbesondere zum lokalen Aufschmelzen des Materials (13), wobei der zweite Energiestrahl (EL2) relativ zum ersten Energiestrahl (EL1) mit einer vorgegebenen Relativgeschwindigkeit bewegt wird, deren Betrag zumindest 2-mal größer als die Scangeschwindigkeit ist.

15. Vorrichtung (1) zur additiven Fertigung von Fertigungsprodukten (2) in einem Fertigungsprozess, bei dem Aufbaumaterial (13) aufgebaut und selektiv verfestigt wird, wobei zum Verfestigen auf einem Baufeld (8) eine Bestrahlung des Aufbaumaterials (13) mit zumindest einem Energiestrahl (AL) erfolgt, wobei eine Auftrefffläche (AF) des Energiestrahls (AL) auf dem Baufeld (8) bewegt wird, wobei die Vorrichtung (1) zumindest eine Bestrahlungsvorrichtung (20) nach einem der Ansprüche 10 bis 14 aufweist.

**Claims**

1. A method for irradiating a material (13) with at least one energy beam (AL), in particular for locally melting the material (13), wherein an area of incidence (AF) of the energy beam (AL) on the material (13) is moved, wherein

   - at least one first energy beam (EL1) and one second energy beam (EL2) are produced,
   - the second energy beam (EL2) is moved relative to the first energy beam (EL1), **characterised in that**
   - the first energy beam (EL1) and the second energy beam (EL2) are coupled into an energy beam movement unit (23) in a common beam path (SA) such that they are moved together as a combination energy beam (AL) over the material (13), wherein to this end the energy beams (EL1, EL2) run along the same beam path starting from a location at which they are combined, wherein a respective current relative position of the intensity distributions of the first energy beam (EL1) and the second energy beam (EL2) in a section plane running perpendicularly to a beam axis of the combination energy beam (AL) does not change significantly on the path through the energy beam movement unit (23) from a coupling point into the energy beam movement unit (23) to an area of incidence (AF).

2. A method for irradiating a material (13) with at least one energy beam (AL), wherein at least one first energy beam (EL1) and one second energy beam (EL2) are produced, **characterised in that** the first energy beam (EL1) and the second energy beam (EL2) are moved, at least partially superimposed as a combination energy beam (AL) and in a manner coordinated with a predetermined scanning speed, over the material (13), in particular to locally melt the material (13), wherein the second energy beam (EL2) is moved relative to the first energy beam (EL1) at a predetermined relative speed, the magnitude of which is at least 2 times greater than the scanning speed.

3. The method according to claim 1 or 2, wherein the second energy beam (EL2) is intensity modulated depending on its relative position to the first energy beam (EL1) and/or depending on a current direction of movement (S) of the area of incidence (AF) of the combination energy beam (AL).

4. The method according to one of the preceding claims, wherein the first energy beam (EL1) and the second energy beam (EL2) have different intensity distributions (SP1, SP2),

   wherein the first energy beam (EL1) preferably has a substantially rotationally symmetrical intensity distribution (SP1), particularly preferably a top-hat intensity distribution, with respect to a beam axis (S1),
   and/or
   wherein the second energy beam (EL2) preferably has a substantially rotationally symmetrical intensity distribution (SP2), particularly preferably a Gaussian intensity distribution, with respect to a beam axis (S2).

5. The method according to one of the preceding claims, wherein the second energy beam (EL2), when coupled into the energy beam movement unit (23) in the common beam path (SA), has a smaller maximum beam extent than the first energy beam (EL1).

6. The method according to one of the preceding claims, wherein the relative movement of the second energy beam (EL2) relative to the first energy beam (EL1) and/or the intensity modulation of the second energy beam (EL2) are performed cyclically, preferably uniformly.

7. The method according to one of the preceding claims, wherein the second energy beam (EL2) is moved preferably along a circular path (K), along an edge (R) of an intensity distribution (SP1) of the first energy beam (EL1).

8. The method according to one of the preceding claims, wherein the relative movement of the second energy beam (EL2) with respect to the first energy beam (EL1) and/or the intensity modulation of the second energy beam (EL2) occurs such that the combination energy beam (AL) moved over the material (13) has an overall intensity distribution (GIV) at an area of incidence (AF) on the material (13) in a section plane (x, y) running perpendicularly to the beam axis (SA) of the combination energy beam (AL), which overall intensity distribution (GIV) has, integrated over a time period,

    - at least one local minimum (MIZ) in a middle region along at least one secant (SK) in the section plane (x, y) and
    - an intensity profile curve (IPK), running along an edge (R) of the overall intensity distribution (GIV), which intensity profile curve (IPK) has, at least at one point, a maximum value (MAX), and, in a region opposite the maximum value (MAX) on the intensity profile curve (IPK), a local minimum value (MIN).

9. A method for the additive manufacture of a manufacturing product (2), wherein build-up material (13) is solidified selectively, and to this end, in a build field (8), the build-up material (13) is irradiated with at least one combination energy beam (AL) using a method according to one of claims 1 to 8.

10. An irradiation device (20) for irradiating a material (13) with at least one energy beam (AL), wherein an area of incidence (AF) of the energy beam (AL) on the material (13) is moved, comprising at least

    - one energy beam source system (21) for generating at least one first energy beam (EL1) and one second energy beam (EL2),
    - one first energy beam movement unit (30, 33, 33') for moving the second energy beam (EL2) relative to the first energy beam (EL1), **characterised in that**
    - an energy beam combination device (22) and a second energy beam movement unit (23), which are formed and arranged relative to one another such that the first energy beam (EL1) and the second energy beam (EL2) are coupled into the second energy beam movement unit (23) in a common beam path (SA) such that they are moved together as a combination energy beam (AL) over the material (13), wherein to this end the energy beams (EL1, EL2) run along the same beam path starting from a location at which they are combined, wherein a respective current relative position of the intensity distributions of the first energy beam (EL1) and the second energy beam (EL2) in a section plane running perpendicularly to a beam axis of the combination energy beam (AL) does not change significantly on the path through the second energy beam movement unit (23) from a coupling point into the second energy beam movement unit (23) to an area of incidence (AF).

11. The irradiation device (20) according to claim 10, wherein the energy beam combination device (22) comprises a beam combiner (22), which is arranged upstream of the second energy beam movement unit (23) and couples the first energy beam (EL1) and the second energy beam (EL2) parallel to one another into the energy beam movement unit (23), wherein the beam combiner (23) preferably comprises a polariser (23), particularly preferably a thin-film polariser (23).

12. The irradiation device (20) according to claim 10 or 11, wherein the first energy beam movement unit (30, 33, 33') comprises a rotation unit (31, 36, 36') with a rotatable optical element (32, 35, 35').

13. The irradiation device (20) according to claim 12, wherein the first energy beam movement unit (30, 33, 33'),

    as rotatable optical element (32), has a transmissive beam shift element (32), preferably a flat plate (32), which is arranged at an incline in the beam path (S2) of the second energy beam (EL2) and rotatably about a rotation axis (RAh), wherein the rotation axis (RAh) runs coaxially to the beam path (S2) of the incoming second energy beam (EL2),
    and/or
    as rotatable optical element (35, 35'), has a reflector, in particular a mirror (35, 35'), which is arranged at an incline in the beam path (S2) of the second energy beam (EL2) and rotatably about a rotation axis (RAs), such that, during operation, the outgoing beam path (S2) runs at an angle to the rotation axis (RAs), and wherein a further optical element, in particular a converging lens (37, 37'), is arranged downstream of the reflector (35, 35') in the further beam path (S2) of the second energy beam (EL2) and, during operation, deflects the beam path (S2) outgoing from the reflector (35, 35') such that the beam path (S2) rotates over a virtual cylinder surface about a virtual rotation axis (RAv) when the mirror (35, 35') is rotated, and thus always runs parallel to the virtual rotation axis (RAv).

14. An irradiation device (20) for irradiating a material (13) with at least one energy beam (AL), comprising at least

    - one energy beam source system (21) for generating at least one first energy beam (EL1) and one second energy beam (EL2),
    - one first energy beam movement unit (30, 33, 33') and one second energy beam movement unit (23), **characterised in that**
    - a control device (50), which controls the irradiation device (20) such that the first energy beam (EL1) and the second energy beam (EL2) are moved, at least partially superimposed as a combination energy beam (AL) and in a manner coordinated with a predetermined scanning speed, over the material (13), in particular to locally melt the material (13), wherein the second energy beam (EL2) is moved relative to the first energy beam (EL1) at a predetermined relative speed, the magnitude of which is at least 2 times greater than the scanning speed.

15. A device (1) for the additive manufacture of manufacturing products (2) in a manufacturing process, in which build-up material (13) is built up and selectively solidified, wherein, for the solidification process, the build-up material (13) is irradiated with at least one energy beam (AL) on a build field (8), wherein an area of incidence (AF) of the energy beam (AL) is moved over the build field (8), wherein the device (1) has at least one irradiation device (20) according to one of claims 10 to 14.

**Revendications**

1. Procédé, destiné à irradier une matière (13) avec au moins un faisceau énergétique (AL), notamment pour une fusion locale du matériau (13), une surface d'impact (AF) du faisceau énergétique (AL) sur le matériau (13) étant déplacé,

   - au moins un premier faisceau énergétique (EL1) et un deuxième faisceau énergétique (EL2) étant générés,
   - le deuxième faisceau énergétique (EL2) étant déplacé par rapport au premier faisceau énergétique (EL1), **caractérisé en ce que**
   - le premier faisceau énergétique (EL1) et le deuxième faisceau énergétique (EL2) sont couplés dans une trajectoire de faisceau commune (SA) dans une unité de déplacement de faisceau énergétique (23), de sorte à être déplacés conjointement en tant que faisceau énergétique (AL) combiné au-dessus du matériau (13), à cet effet, en partant d'un endroit de leur réunion, les faisceaux énergétiques (EL1, EL2) s'écoulant le long de la même trajectoire de faisceau, une position relative respectivement actuelle des distributions d'intensité du premier faisceau énergétique (EL1) et du deuxième faisceau énergétique (EL2) dans un plan de coupe s'étendant à la perpendiculaire d'un axe de faisceau du faisceau énergétique (AL) combiné ne changeant pas sensiblement sur le chemin à travers l'unité de déplacement de faisceau énergétique (23), d'un endroit de couplage dans l'unité de déplacement de faisceau énergétique (23) jusqu'à une surface d'impact (AF).

2. Procédé, destiné à irradier une matière (13) avec au moins un faisceau énergétique (AL), au moins un premier faisceau énergétique (EL1) et un deuxième faisceau énergétique (EL2) étant générés, **caractérisé en ce que** le premier faisceau énergétique (EL1) et le deuxième faisceau énergétique (EL2) sont déplacés en étant superposés au moins partiellement en tant que faisceau énergétique combiné (AL), en coordination avec une vitesse de balayage prédéfinie au-dessus du matériau (13), notamment pour une fusion locale du matériau (13), le deuxième faisceau énergétique (EL2) étant déplacé par rapport au premier faisceau énergétique (EL1) à une vitesse relative prédéfinie, dont le montant est au moins le double de la vitesse de balayage.

3. Procédé selon la revendication 1 ou 2, le deuxième faisceau énergétique (EL2) étant modulé en intensité en fonction de sa position relative par rapport au premier faisceau énergétique (EL1) et / ou en fonction d'une direction de déplacement actuelle (S) de la surface d'imapct (AF) du faisceau énergétique combiné (AL).

4. Procédé selon l'une quelconque des revendications précédentes, le premier faisceau énergétique (EL1) et le deuxième faisceau énergétique (EL2) présentant des distributions d'intensité différentes (SP1, SP2),

   de préférence le premier faisceau énergétique (EL1) présentant une distribution d'intensité (SP1) sensiblement symétrique en rotation en rapport à un axe de faisceau (S1), de manière particulièrement préférée, une distribution d'intensité top-hat et / ou
   de préférence, le deuxième faisceau énergétique (EL2) présentant une distribution d'intensité (SP2) sensiblement symétrique en rotation en rapport à un axe de faisceau (S2), de manière particulièrement préférée, une distribution d'intensité de Gauss.

5. Procédé selon l'une quelconque des revendications précédentes, lors du couplage dans la trajectoire de faisceau commune (SA) dans l'unité de déplacement de faisceau énergétique (23), le deuxième faisceau énergétique (EL2) présentant une expansion maximale du faisceau moindre que celle du premier faisceau énergétique (EL1).

6. Procédé selon l'une quelconque des revendications précédentes, un déplacement relatif du deuxième faisceau énergétique (EL2) par rapport au premierfaisceau énergétique (EL1) et / ou la modulation d'intensité du deuxième faisceau énergétique (EL2) s'effectuant de manière cyclique, de préférence régulière.

7. Procédé selon l'une quelconque des revendications précédentes, le deuxième faisceau énergétique (EL2) étant déplacé de préférence le long d'une trajectoire circulaire (K), le long d'un bord (R) d'une distribution d'intensité (SP1) du premier faisceau énergétique (EL1).

8. Procédé selon l'une quelconque des revendications précédentes, le déplacement relatif du deuxième faisceau énergétique (EL2) par rapport au premier faisceau énergétique (EL1) et / ou la modulation d'intensité du deuxième faisceau énergétique (EL2) s'effectuant de telle sorte que, dans un plan de coupe (x, y) s'écoulant à la perpendiculaire de l'axe de faisceau (SA) du faisceau énergétique combiné (AL), sur une surface d'impact (AF) sur le matériau (13), le faisceau énergétique combiné (AL) déplacé au-dessus du matériau (13) présente une distribution d'intensité totale (GIV), laquelle intégrée sur une période

- présente au moins un minimum local (MIZ) dans une zone centrale le long d'au moins une sécante (SK) dans la plan de coupe (x, y) et
- présente une courbe de profil d'intensité (IPK) circulant le long d'un bord (R) de la distribution d'intensité totale (GIV), qui au moins à un endroit, présente une valeur maximale (MAX) et dans une zone placée au vis-à-vis de la valeur maximale (MAX) sur ladite courbe de profil d'intensité (IPK), présente une valeur minimale (MIN) locale.

9. Procédé, destiné à la fabrication additive d'un produit fini (2), lors duquel l'on solidifie sélectivement un matériau de construction (13) et l'on procède à cet effet sur une zone de construction (8) à une irradiation du matériau de construction (13) avec au moins un faisceau énergétique combiné (AL), en ayant recours à un procédé selon l'une quelconque des revendications 1 à 8.

10. Dispositif d'irradiation (20), destiné à irradier un matériau (13) avec au moins un faisceau énergétique (AL), une surface d'impact (AF) du faisceau énergétique (AL) étant déplacée sur le matériau (13), comprenant au moins

- un système de source de faisceau énergétique (21), destiné à générer au moins un premier faisceau énergétique (EL1) et un deuxième faisceau énergétique (EL2),
- une première unité de déplacement de faisceau énergétique (30, 33, 33'), destinée à déplacer le deuxième faisceau énergétique (EL2) par rapport au premier faisceau énergétique (EL1), **caractérisé par**
- un dispositif de combinaison de faisceaux énergétiques (22) et une deuxième unité de déplacement de faisceau énergétique (23), lesquels sont conçus et placés l'un par rapport à l'autre de telle sorte que le premier faisceau énergétique (EL1) et le deuxième faisceau énergétique (EL2) soient couplés dans une trajectoire de faisceau commune (SA) dans la deuxième unité de déplacement de faisceau énergétique (23), de manière à être déplacés conjointement au-dessus du matériau (13), en tant que faisceau énergétique combiné (AL), à cet effet, en partant d'un endroit de leur réunion, les faisceaux énergétiques (EL1, EL2) s'écoulant le long de la même trajectoire de faisceau, une position actuelle respective des distributions d'intensité du premier faisceau énergétique (EL1) et du deuxième faisceau énergétique (EL2) dans un plan de coupe s'étendant à la perpendiculaire d'un axe de faisceau du faisceau énergétique combiné (AL) ne changeant pas sensiblement sur le chemin à travers l'unité de déplacement (23) de faisceau énergétique, d'un endroit de couplage dans l'unité de déplacement de faisceau énergétique (23) jusqu'à une surface d'impact (AF).

11. Dispositif d'irradiation (20) selon la revendication 10, le dispositif de combinaison de faisceaux énergétiques (22) comprenant un combinateur de faisceaux (22), lequel est monté en amont de la deuxième unité de déplacement du faisceau énergétique (23) et couple le premier faisceau énergétique (EL1) et le deuxième faisceau énergétique (EL2) à la parallèle l'un de l'autre dans l'unité de déplacement de faisceau énergétique (23), le combinateur de faisceaux (23) comprenant de préférence un polariseur (23), de manière particulièrement préférée, un polariseur (23) en couche mince.

12. Dispositif d'irradiation (20) selon la revendication 10 ou 11, la première unité de déplacement de faisceau énergétique (30, 33, 33') comprenant une unité de rotation (31, 36, 36'), dotée d'un élément optique rotatif (32, 35, 35').

13. Dispositif d'irradiation (20) selon la revendication 12, la première unité de déplacement de faisceau énergétique (30, 33, 33')

comportant en tant qu'élément optique rotatif (32) un élément de décalage de faisceau transmissif (32), de préférence une plaque plane (32), laquelle est placée en inclinaison dans la trajectoire de faisceau (S2) du deuxième faisceau énergétique (EL2), en étant rotative autour d'un axe de rotation (RAh), l'axe de rotation (RAh) s'écoulant de manière coaxiale par rapport à la trajectoire de faisceau (S2) du deuxième faisceau énergétique entrant (EL2), et / ou

comportant en tant qu'élément optique rotatif (35, 35') un réflecteur, notamment un miroir (35, 35'), lequel est placé en inclinaison dans la trajectoire de faisceau (S2) du deuxième faisceau énergétique (EL2) et en étant rotatif autour d'un axe de rotation (RAs), de sorte qu'en fonctionnement, la trajectoire de faisceau (S2) sortant s'écoule sous un angle par rapport à l'axe de rotation (RAs) et en aval du réflecteur (35, 35'), dans la suite de la trajectoire de faisceau (S2) du deuxième faisceau énergétique (EL2) étant monté un élément optique supplémentaire, notamment une lentille convergente, (37, 37'), laquelle en fonctionnement, dévie la trajectoire de faisceau (S2) sortant du réflecteur (35, 35') de telle sorte qu'avec une rotation du miroir (35, 35'), la trajectoire de faisceau (S2) tourne sur une surface enveloppante cylindrique autour d'un axe de rotation virtuel (RAv) et à cet effet, s'écoule toujours à la parallèle de l'axe de rotation virtuel (RAv).

14. Dispositif d'irradiation (20), destiné à irradier un matériau (13) avec au moins un faisceau énergétique (AL),
    comprenant au moins

    - un système de source de faisceau énergétique (21), destiné à générer au moins un premier faisceau énergétique (EL1) et un deuxième faisceau énergétique (EL2),
    - une première unité de déplacement de faisceau énergétique (30, 33, 33') et une deuxième unité de déplacement de faisceau énergétique (23), **caractérisé par**
    - un système de commande (50), lequel active le dispositif d'irradiation (20) de telle sorte qu'au moins partiellement superposés, le premier faisceau énergétique (EL1) et le deuxième faisceau énergétique (EL2) soient déplacés au-dessus du matériau (13) en tant que faisceau énergétique combiné (AL), en coordination avec une vitesse de balayage prédéfinie, notamment pour une fusion locale du matériau (13), le deuxième faisceau énergétique (EL2) étant déplacé par rapport au premier faisceau énergétique (EL1) à une vitesse relative prédéfinie, dont le montant est au moins le double de la vitesse de balayage.

15. Dispositif (1), destiné à la fabrication additive de produits finis (2), au cours d'un processus de fabrication, lors duquel l'on construit et l'on solidifie sélectivement un matériau de construction (13), pour la solidification étant procédé sur une zone de construction (8) à une irradiation du matériau de construction (13) avec au moins un faisceau énergétique (AL), une surface d'impact (AF) du faisceau énergétique (AL) sur la zone de construction (8) étant déplacée, le dispositif (1) comportant au moins un dispositif d'irradiation (20) selon l'une quelconque des revendications 10 à 14.

**FIG. 1**

FIG. 2

FIG. 3

# FIG. 4

**FIG. 5**

**FIG. 6**

FIG. 6a

EP 3 880 397 B1

**FIG. 7**

FIG. 8

EP 3 880 397 B1

FIG. 9

FIG. 10

FIG. 11

FIG. 12a

FIG. 12b

FIG. 12c

FIG. 12d

FIG. 12e

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040129685 A1

- US 20180154482 A1

**In der Beschreibung aufgeführte Nicht-Patentliteratur**

- **TIEN T. RÖHLING et al.** Modulating laser intensity profile ellipticity for microstructural control during metal additive manufacturing. *Acta Materialia*, 2017, vol. 128, 197-206